(19) Europäisches Patentamt
European Patent Office
Office européen des brevets

(11) EP 3 465 340 B1

(12) **EUROPÄISCHE PATENTSCHRIFT**

(45) Veröffentlichungstag und Bekanntmachung des Hinweises auf die Patenterteilung:
**02.09.2020 Patentblatt 2020/36**

(21) Anmeldenummer: **17729832.0**

(22) Anmeldetag: **02.06.2017**

(51) Int Cl.:
*G02F 1/23* (2006.01)   *G02B 27/01* (2006.01)
*G02B 5/18* (2006.01)   *G02B 5/04* (2006.01)

(86) Internationale Anmeldenummer:
**PCT/EP2017/063566**

(87) Internationale Veröffentlichungsnummer:
**WO 2017/207804 (07.12.2017 Gazette 2017/49)**

(54) **VERFAHREN UND VORRICHTUNG ZUR ERZEUGUNG UND DEKODIERUNG SPEKTRAL ENKODIERTER BILDER**

METHOD AND DEVICE FOR GENERATING AND DECODING SPECTRALLY ENCODED IMAGES

PROCÉDÉ ET DISPOSITIF POUR GÉNÉRER ET DÉCODER DES IMAGES ENCODÉES DE MANIÈRE SPECTRALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.06.2016 DE 102016110197**

(43) Veröffentlichungstag der Anmeldung:
**10.04.2019 Patentblatt 2019/15**

(73) Patentinhaber: **Sascha Grusche Und Christoph Knappe**
**Research And Develpment GBR**
**80636 München (DE)**

(72) Erfinder: **GRUSCHE, Sascha**
**85748 Garching (DE)**

(74) Vertreter: **Daub, Thomas**
**Patent- und Rechtsanwaltskanzlei Daub**
**Bahnhofstrasse 5**
**88662 Überlingen (DE)**

(56) Entgegenhaltungen:
**DE-A1-102013 022 156     US-A- 3 924 925**

• **SASCHA GRUSCHE: "Spectral synthesis provides two-dimensional videos on a one-dimensional screen with 360°-visibility and mirror-immunity", APPLIED OPTICS, Bd. 53, Nr. 4, 1. Februar 2014 (2014-02-01), Seite 674, XP055394533, WASHINGTON, DC; US ISSN: 0003-6935, DOI: 10.1364/AO.53.000674**

**Beschreibung**

**Stand der Technik**

Die Erfindung betrifft ein Verfahren zur Erzeugung eines spektral enkodierten Bildes aus einem Urbild, nach dem Oberbegriff des Anspruchs 1 sowie ein Verfahren zur Dekodierung eines spektral enkodierten Bildes zur Erzeugung eines Abbildes eines Urbildes nach dem Oberbegriff des Anspruchs 2. Die Erfindung betrifft ferner eine Enkodierungsvorrichtung nach dem Oberbegriff des Anspruchs 14 und eine Dekodierungsvorrichtung nach dem Oberbegriff des Anspruchs 15.

Herkömmliche Projektionssysteme sind auf einen zweidimensionalen Projektionsschirm angewiesen. Aus der DE 10 2013 022 156 A1 ist bekannt, dass es mit spektral kodierter Projektion möglich ist, eine räumliche Dimension des zweidimensionalen Bildes in eine spektrale Dimension zu übersetzen. Dadurch kann das Bild in Form einer Lichtlinie auf einen eindimensionalen Schirm projiziert werden. Hierfür wird ein Graustufenbild durch ein Dispersionselement quer über den eindimensionalen Schirm projiziert. Wird die auf dem Projektionsschirm erzeugte Lichtlinie wiederum durch ein Dispersionselement betrachtet, erscheint eine regenbogenfarbige Version des schwarzweißen Urbildes. Dieses regenbogenfarbige Spektralbild ist rund um die Lichtlinie herum sichtbar und bleibt selbst dann richtig herum orientiert, wenn das Lichtbündel vom Projektor oder dem Projektionsschirm gespiegelt wird. In dem wissenschaftlichen Artikel "Spectral synthesis provides two-dimensional videos on a one-dimensional screen with 360°-visibility and mirror-immunity" des Autors S. Grusche (Appl. Opt., 2014, 53(4):674-84. doi: 10.1364/AO.53.000674) ist zwar eine generelle Möglichkeit zur Enkodierung und Dekodierung von vollfarbigen Bildern angedeutet, jedoch fehlt in dem Artikel eine Beschreibung eines konkreten Ansatzes zu deren Umsetzung.

Die Aufgabe der Erfindung besteht insbesondere darin, gattungsgemäße Verfahren mit vorteilhaften Eigenschaften hinsichtlich einer Bilderzeugung bereitzustellen. Die Aufgabe wird erfindungsgemäß durch die Merkmale der Patentansprüche 1, 2, 3, 10, 11 und 12 gelöst, während vorteilhafte Ausgestaltungen und Weiterbildungen der Erfindung den Unteransprüchen entnommen werden können.

**Vorteile der Erfindung**

Die Erfindung geht aus von einem Verfahren zur Erzeugung eines spektral enkodierten Bildes aus einem Urbild, mit zumindest einem ersten Transformationsschritt, insbesondere einem ersten Enkodierungsschritt, in welchem zumindest ein, insbesondere von zumindest einer Ortskoordinate, vorteilhaft einer x-Koordinate, des Urbildes abhängiger, erster Urbildparameter in zumindest einen von zumindest einer Spektralkoordinate des spektral enkodierten Bildes abhängigen ersten Bildparameter enkodiert wird.

Es wird vorgeschlagen, dass das Verfahren zumindest einen zweiten Transformationsschritt, insbesondere einen zweiten Enkodierungsschritt, umfasst, in welchem zumindest ein, insbesondere von der Ortskoordinate des Urbildes abhängiger, zweiter Urbildparameter in zumindest einen von der Spektralkoordinate des spektral enkodierten Bildes abhängigen zweiten Bildparameter enkodiert wird.

Durch ein erfindungsgemäßes Verfahren können vorteilhafte Eigenschaften hinsichtlich einer Bilderzeugung, insbesondere einer Erzeugung eines spektral enkodierten Bildes, erzielt werden. Ferner können vorteilhaft Bildinformationen effizient enkodiert werden. Außerdem kann vorteilhaft eine Echtfarbigkeit eines Bildes zumindest teilweise, insbesondere zumindest nahezu vollständig erhalten bleiben. Vorteilhaft kann ein aus verschiedenen Winkeln, insbesondere rundherum, betrachtbares, insbesondere echtfarbiges, Bild erzeugt werden. Ferner wird vorteilhaft eine Projektorunabhängigkeit ermöglicht. Außerdem wird eine Spiegelimmunität erzielt.

Ferner geht die Erfindung aus von einem Verfahren zur Dekodierung eines spektral enkodierten Bildes zur Erzeugung eines Abbildes eines Urbildes, mit zumindest einem ersten Transformationsschritt, insbesondere einem ersten Dekodierungsschritt, in welchem zumindest ein, insbesondere von zumindest einer Ortskoordinate, vorteilhaft einer x-Koordinate, des Abbildes abhängiger, erster Abbildparameter aus zumindest einem von zumindest einer Spektralkoordinate des spektral enkodierten Bildes abhängigen ersten Bildparameter dekodiert wird.

Es wird vorgeschlagen, dass das Verfahren zumindest einen zweiten Transformationsschritt, insbesondere einen zweiten Dekodierungsschritt, umfasst, in welchem zumindest ein, insbesondere von der Ortskoordinate des Abbildes abhängiger, zweiter Abbildparameter aus zumindest einem von der Spektralkoordinate des spektral enkodierten Bildes abhängigen zweiten Bildparameter dekodiert wird.

Durch ein erfindungsgemäßes Verfahren können vorteilhafte Eigenschaften hinsichtlich einer Bilderzeugung, insbesondere einer Erzeugung eines spektral dekodierten Bildes erzielt werden. Ferner können vorteilhaft Bildinformationen effizient dekodiert werden. Außerdem kann vorteilhaft eine Echtfarbigkeit eines Bildes zumindest teilweise, insbesondere zumindest nahezu vollständig erhalten bleiben. Vorteilhaft kann ein aus verschiedenen Winkeln, insbesondere rundherum, betrachtbares, insbesondere echtfarbiges, Bild dekodiert und/oder betrachtet werden. Ferner wird vorteilhaft eine Projektorunabhängigkeit ermöglicht. Außerdem wird eine Spiegelimmunität erzielt. Weiterhin kann vorteilhaft ein scheinbar schwebendes und/oder teilweise transparentes virtuelles Bild erzeugt werden.

Im Folgenden wird wiederholt auf "das Verfahren" Bezug genommen. Es kann sich dabei jeweils um das Verfahren zur Erzeugung eines spektral enkodierten Bildes aus einem Urbild und/oder um das Verfahren zur Dekodierung eines spektral enkodierten Bildes zur Erzeugung eines Abbildes eines Urbildes handeln. Ferner werden in den Verfahren verwendete Komponenten und/oder Verfahrensschritte eingeführt und/oder näher beschrieben. Sich entsprechende Komponenten und/oder Verfahrensschritte der beiden Verfahren können dabei jeweils verschieden sein und insbesondere lediglich zu einer analogen Funktionalität vorgesehen sein. Diese Komponenten und/oder Verfahrensschritte weisen dabei jeweils die beschriebenen identischen Merkmale auf, können aber weitere, teilweise unterschiedliche und/oder teilweise identische Merkmale aufweisen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Darunter, dass ein Verfahren zu einem Zweck vorgesehen ist, soll insbesondere verstanden werden, dass das Verfahren zumindest einen Verfahrensschritt beinhaltet, der speziell auf den Zweck abzielt, und/oder dass das Verfahren gezielt auf den Zweck gerichtet ist und/oder dass das Verfahren einer Erfüllung des Zwecks dient und auf diese Erfüllung hin zumindest teilweise optimiert ist.

Vorteilhaft ist das Urbild ein räumlich zweidimensionales Bild, insbesondere ein räumlich zweidimensionales Farbbild. Es ist aber auch denkbar, dass das Urbild ein räumlich dreidimensionales Bild, insbesondere ein räumlich dreidimensionales Farbbild, ist. Insbesondere kann das Urbild ein bewegtes Bild sein, beispielsweise ein insbesondere zweidimensionaler und/oder farbiger Videofilm.

Unter einem "spektral enkodierten Bild" soll insbesondere ein Bild verstanden werden, welches zumindest einen von zumindest einer Spektralkoordinate des Bildes abhängigen Bildparameter aufweist, dessen spektrale Abhängigkeit eine von einer spektralen Abhängigkeit verschiedene Information, insbesondere zumindest den ersten Urbildparameter des Urbildes, kodiert und/oder repräsentiert und/oder transportiert. Vorzugsweise weist das spektral enkodierte Bild zumindest eine, insbesondere räumlich punktweise unterschiedliche, spektrale Lichtintensitätsverteilung auf, die zumindest eine von einer spektralen Lichtintensitätsverteilung verschiedene Information, insbesondere eine Information des Urbildes, vorzugsweise den ersten Urbildparameter, kodiert und/oder repräsentiert und/oder transportiert. Insbesondere ist die Information, vorzugsweise der erste Urbildparameter, zumindest eine Ortskoordinate und/oder eine von einer Ortskoordinate abhängige Lichtintensitätsverteilung. Beispielsweise entspricht eine bestimmte Wellenlänge einem bestimmten Punkt auf einer Ortsachse. Vorteilhaft weist das spektral enkodierte Bild zumindest eine, vorzugsweise genau eine, räumliche Dimension weniger auf als das Urbild. Vorzugsweise wird das spektral enkodierte Bild auf einem Schirm erzeugt, beispielsweise durch Projektion auf den Schirm und/oder durch direkte Erzeugung mittels geeigneter, insbesondere auf dem Schirm angeordneter, Lichtquellen. Vorzugsweise sind die Lichtquellen dabei zumindest annähernd Punktlichtquellen, welche insbesondere unmittelbar nebeneinander und/oder übereinander angeordnet sind. Besonders bevorzugt weisen die Lichtquellen dabei ein willkürlich einstellbares Spektrum auf, das insbesondere mittels zumindest einer digitalen Ansteuerung eingestellt und/oder zeitlich veränderlich angepasst werden kann. Insbesondere ist der Schirm dazu vorgesehen, das spektral enkodierte Bild über einen Betrachtungswinkel von wenigstens 90°, vorteilhaft von wenigstens 180°, besonders vorteilhaft von wenigstens 270°, bevorzugt von wenigstens 330° und besonders bevorzugt von genau 360° darzustellen. Vorteilhaft ist der Schirm aus einem transluzenten Material und/oder aus einem opaken Material und/oder aus einem tranparenten Material ausgebildet. Es ist denkbar, das spektral enkodierte Bild beispielsweise seitlich und/oder von unten in den Schirm einzukoppeln, wobei vorteilhaft das spektral enkodierte Bild in zumindest eine von der Einkoppelrichtung verschiedene Richtung ausgekoppelt wird, vorzugweise zumindest im Wesentlichen senkrecht dazu. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Darunter, dass ein Verfahren zu einem Zweck vorgesehen ist, soll insbesondere verstanden werden, dass das Verfahren zumindest einen Verfahrensschritt beinhaltet, der speziell auf den Zweck abzielt und/oder dass das Verfahren gezielt auf den Zweck gerichtet ist und/oder dass das Verfahren einer Erfüllung des Zwecks dient und auf diese Erfüllung hin zumindest teilweise optimiert ist. Unter "zumindest im Wesentlichen senkrecht" soll hier insbesondere eine Ausrichtung einer Richtung relativ zu einer Bezugsrichtung, insbesondere in einer Bezugsebene, verstanden werden, wobei die Richtung und die Bezugsrichtung einen Winkel einschließen, der insbesondere weniger als 8°, vorteilhaft weniger als 5° und besonders vorteilhaft weniger als 2° von einem rechten Winkel abweicht.

Vorteilhaft ist das Abbild ein räumlich zweidimensionales Bild, insbesondere ein räumlich zweidimensionales Farbbild. Es ist aber auch denkbar, dass das Abbild ein räumlich dreidimensionales Bild, insbesondere ein räumlich dreidimensionales Farbbild, ist. Insbesondere kann das Abbild ein bewegtes Bild sein, beispielsweise ein insbesondere zweidimensionaler und/oder farbiger Videofilm. Vorteilhaft ist das Abbild dem Urbild zumindest ähnlich. Insbesondere weisen das Urbild und das Abbild eine identische Dimensionalität auf. Das Abbild kann aber eine andere Größe und/oder ein anderes Seitenverhältnis und/oder andere innere Proportionen aufweisen als das Urbild.

Darunter, dass ein erster Parameter in einen zweiten Parameter "enkodiert" wird, soll insbesondere verstanden werden, dass ein Informationsgehalt des ersten Parameters zumindest teilweise in den zweiten Parameter übertragen und/oder übersetzt wird. Insbesondere kann aus dem zweiten Parameter bei einer Dekodierung auf den Informationsgehalt des ersten Parameters zumindest teilweise geschlossen werden.

Darunter, dass ein erster Parameter aus einem zweiten Parameter dekodiert wird, soll insbesondere verstanden werden, dass ein Informationsgehalt des zweiten Parameters zumindest teilweise aus dem ersten Parameter bezogen wird. Insbesondere kann der zweite Parameter aus dem ersten Parameter bei einer Enkodierung zumindest teilweise erstellt werden.

In einer vorteilhaften Ausgestaltung der Erfindung wird vorgeschlagen, dass der erste Transformationsschritt und/oder der zweite Transformationsschritt mit zumindest einem dispersiven Element durchgeführt wird. Insbesondere wird in dem Verfahren zur Erzeugung eines spektral enkodierten Bildes, vorzugsweise in zumindest einem der Enkodierungsschritte, mittels Dispersion eine Ortskoordinate des Urbildes in eine Spektralkoordinate des Bildes übersetzt. Insbesondere wird in dem Verfahren zur Dekodierung eines spektral enkodierten Bildes, vorzugsweise in zumindest einem der Dekodierungsschritte, mittels Dispersion eine Spektralkoordinate des Bildes in eine Ortskoordinate des Abbildes übersetzt. Insbesondere bei dem Verfahren zur Erzeugung eines spektral enkodierten Bildes ist das dispersive Element zwischen einer Projektionseinheit, wie beispielsweise einem Projektor, und dem Schirm angeordnet, wobei vorteilhaft das Urbild durch das dispersive Element projiziert wird, wodurch vorzugsweise das spektral enkodierte Bild, insbesondere auf dem Schirm, entsteht. Insbesondere bei dem Verfahren zur Dekodierung eines spektral enkodierten Bildes ist das dispersive Element zwischen dem spektral enkodierten Bild, insbesondere dem Schirm, und einem Betrachter, insbesondere zumindest eines Auges eines Betrachters, angeordnet, wobei vorteilhaft das spektral enkodierte Bild durch das dispersive Element hindurch betrachtbar ist, wodurch insbesondere das Abbild hinter dem dispersiven Element, insbesondere auf einer Netzhaut des Auges, erzeugt wird. Der Betrachter kann auch ein technisches Auge wie beispielsweise einen Sensor oder eine Kamera aufweisen und insbesondere von einem Menschen verschieden sein. Es ist denkbar, ein spektral enkodiertes Bild mittels Projektion durch einen Spalt auf einem Schirm zu erzeugen, wobei der Spalt mit zumindest einem dispersiven Element versehen ist, durch welches das Bild projiziert wird und somit durch Dekodierung auf einen insbesondere zweidimensionalen Schirm als reelles Abbild des Urbildes betrachtbar wird. Dabei ist denkbar, dass eine Betrachtung ebenfalls durch das dispersive Element hindurch erfolgen kann. Hierdurch kann vorteilhaft eine Enkodierung und/oder Dekodierung schnell und zuverlässig erfolgen.

In einer besonders vorteilhaften Ausgestaltung der Erfindung wird vorgeschlagen, dass das dispersive Element zumindest ein optisches Gitter und/oder zumindest ein Prisma umfasst. Vorzugsweise wird zur Erzeugung des spektral enkodierten Bildes und/oder des Abbildes eine von 0 verschiedene Beugungsordnung des dispersiven Elements verwendet. Hierbei ist insbesondere denkbar, dass höhere Beugungsordnungen, insbesondere von 1 verschiedene Beugungsordnungen, insbesondere ausschließlich oder zusätzlich zu einer 1. Beugungsordnung, verwendet werden. Insbesondere wird für das Verfahren zur Erzeugung eines spektral enkodierten Bildes zumindest ein anderes dispersives Element verwendet als für das Verfahren zur Dekodierung eines spektral enkodierten Bildes, wobei insbesondere für beide Verfahren dispersive Elemente mit identischen oder zumindest im Wesentlichen identischen optischen Eigenschaften verwendet werden. Grundsätzlich ist es aber auch denkbar, für das Verfahren zur Erzeugung eines spektral enkodierten Bildes zumindest ein dispersives Element zu verwenden, das auch für das Verfahren zur Dekodierung eines spektral enkodierten Bildes verwendet wird. Vorteilhaft finden in diesem Fall eine Projektion und eine Betrachtung durch das dispersive Element statt. Hierdurch können vorteilhaft optische Eigenschaften verwendeter Komponenten präzise angepasst werden. Ferner kann hierdurch eine hohe Komplexität vorteilhaft vermieden werden.

Insbesondere zur Erzielung einer hohen Lichteffizienz und/oder einer starken Dispersion ist denkbar, dass zumindest ein dispersives Element zumindest teilweise aus Zinkoxid ausgebildet ist. Insbesondere ist denkbar, dass zumindest ein dispersives Element als ein Zinkoxid-Prisma ausgebildet ist. Vorzugsweise liegt das verwendete Zinkoxid dabei in kristalliner Form, besonders bevorzugt als Einkristall, vor.

Grundsätzlich ist zudem denkbar, dass zumindest ein dispersives Element als ein Wasserprisma, beispielsweise in Form eines mit Wasser gefüllten transparenten Gehäuses, insbesondere aus Glas, ausgebildet ist. Ebenso ist ein Kronglasprima, insbesondere ein BK7-Kronglasprisma, ein Flintglasprisma, insbesondere ein F2-Flintglasprisma, ein Schwerflintglasprisma, insbesondere ein SF10-Schwerflintglasprisma, und/oder ein Quarzprisma denkbar. Zudem kann ein dispersives Element grundsätzlich zumindest ein Geradsichtprisma aufweisen und/oder als ein solches ausgebildet sein. Ferner ist denkbar, zumindest eine Prismenfolie als ein dispersives Element zu verwenden. Außerdem ist denkbar, dass zumindest ein dispersives Element als ein holografisches Transmissionsgitter ausgebildet ist, wobei selbstverständlich auch anders hergestellte Gitter denkbar sind. Ist zumindest ein dispersives Element als ein optisches Gitter, insbesondere ein Reflexionsgitter, ausgebildet, so ist vorteilhaft denkbar, dass ein Blaze dieses optischen Gitters auf etwa 60 % oder auf etwa 80 % und vorteilhaft auf etwa 70 % Beugungseffizienz optimiert gewählt ist. Selbstverständlich kann ein dispersives Element eine beliebige Kombination unterschiedlicher einzelner dispersiver Teilelemente umfassen, beispielsweise eine Kombination zumindest eines Prismas mit zumindest einem optischen Gitter, beispielsweise nach Art eines Grisms.

In einer weiteren Ausgestaltung der Erfindung wird vorgeschlagen, dass der erste Transformationsschritt und der zweite Transformationsschritt mit unterschiedlichen dispersiven Elementen durchgeführt werden, insbesondere mit einem ersten dispersiven Element und einem davon verschiedenen zweiten dispersiven Element. Beispielsweise können die dispersiven Elemente verschiedene räumliche Orientierungen relativ zu dem Urbild und/oder dem spektral enkodierten Bild und/oder dem Abbild aufweisen. Sie können beispielsweise auch aus verschiedenen Materialien gefertigt sein und/oder verschiedene Geometrien aufweisen. Vorteilhaft weisen die dispersiven Elemente jeweils zumindest ein optisches Gitter auf, wobei sich Gitterkonstanten der Gitter vorzugsweise unterscheiden. Besonders vorteilhaft weisen die unterschiedlichen dispersiven Elemente zueinander parallel angeordnete Dispersionsrichtungen auf. Insbesondere können für den ersten Transformationsschritt und den zweiten Transformationsschritt verschiedene Beugungsordnungen, insbesondere der optischen Gitter mit unterschiedlichen Gitterkonstanten, verwendet werden. Es ist auch denkbar, jeweils dieselbe Beugungsordnung zu verwenden. Ferner ist denkbar, dass die dispersiven Elemente jeweils zumindest ein optisches Gitter und zumindest ein Prisma umfassen, wobei die dispersiven Elemente insbesondere jeweils von dem Prisma und dem vorzugsweise unmittelbar davor angeordneten optischen Gitter gebildet werden. Es ist auch denkbar, dass die verschiedenen dispersiven Elemente auf zumindest einem gemeinsamen Prisma angeordnet sind. Beispielsweise können verschiedene optische Gitter auf einem gemeinsamen Prisma und/oder einer gemeinsamen Prismen-Anordnung angeordnet sein. Vorzugsweise werden aufgrund unterschiedlicher dispersiver Eigenschaften der dispersiven Elemente verschiedene Transformationen von Ortskoordinaten und Spektralkoordinaten ermöglicht. Insbesondere wird das spektral enkodierte Bild als Überlagerung unterschiedlicher Grundbilder erzeugt, die durch eine Projektion des Urbildes durch die unterschiedlichen dispersiven Elemente entstehen. Hierdurch kann vorteilhaft ein spektral enkodiertes Bild mit mehreren Bildkomponenten erzeugt und/oder dekodiert werden, welche insbesondere jeweils unterschiedliche Informationen enthalten.

In einer bevorzugten Ausgestaltung der Erfindung wird vorgeschlagen, dass die dispersiven Elemente zumindest teilweise und vorzugsweise vollständig unmittelbar hintereinander, insbesondere in einem Abstand von weniger als 10 mm, vorteilhaft von weniger als 5 mm und besonders vorteilhaft von weniger als 2 mm angeordnet sind. Die dispersiven Elemente können dabei zumindest annähernd deckungsgleich aber auch seitlich versetzt hintereinander angeordnet sein. Vorzugsweise beugt ein bestimmtes dispersives Element jeweils Licht einer nullten Beugungsordnung eines vorzugsweise unmittelbar davor angeordneten dispersiven Elements. Hierdurch kann vorteilhaft eine hohe Abbildungsqualität und/oder eine geringe Verschmierung ermöglicht werden.

Alternativ oder zusätzlich ist denkbar, dass die dispersiven Elemente zumindest teilweise und vorzugsweise vollständig nebeneinander angeordnet sind, insbesondere unmittelbar nebeneinander, vorteilhaft mit einem Abstand zwischen den dispersiven Elementen von höchstens 2 mm, besonders vorteilhaft von höchstens 1 mm, vorzugsweise von höchstens 0,5 mm und besonders bevorzugt von höchstens 0,1 mm oder noch weniger. Insbesondere weisen die dispersiven Elemente dabei, insbesondere senkrecht zu einer Richtung eines Lichtdurchtritts, eine Erstreckung von höchstens 10 mm, vorteilhaft von höchstens 5 mm, besonders vorteilhaft von höchstens 2 mm und vorzugsweise von höchstens 1 mm oder auch von höchstens 0,5 mm auf, wobei sich eine Erstreckung verschiedener dispersiver Elemente unterscheiden kann. In diesem Fall wird vorteilhaft der erste Transformationsschritt und/oder der zweite Transformationsschritt mit einer Vielzahl erster und/oder einer Vielzahl zweiter dispersiver Elemente durchgeführt. Vorzugsweise weisen die dispersiven Elemente eine Erstreckung und/oder einen Abstand zueinander auf, die/der einem menschlichen Auge ein Unterscheiden der dispersiven Elemente bei einer Anordnung der dispersiven Elemente vor dem Auge, insbesondere in einem Abstand von weniger als 5 cm, vorteilhaft in einem Abstand von weniger als 3 cm, beispielsweise bei einer Anordnung der dispersiven Elemente auf einer Brille, verunmöglicht/verunmöglichen. Hierdurch können eine bauliche Einfachheit und/oder reduzierte Herstellungskosten erzielt werden.

Insbesondere im Fall einer Nebeneinanderanordnung dispersiver Elemente ist denkbar, dass diese als streifenförmige, gefärbte Prismenfolien ausgebildet sind. Insbesondere können diese gefärbt sein, beispielsweise gemäß verwendeter Grundfarben. Vorzugsweise sind diese abwechselnd nebeneinander angeordnet und bilden vorteilhaft ein entsprechendes Streifenmuster.

Grundsätzlich ist ferner denkbar, dass die dispersiven Elemente zumindest teilweise einteilig ausgebildet sind. Insbesondere ist denkbar, dass ein Mehrfachstrichgitter verwendet wird, welches die dispersiven Elemente ausbildet. Beispielsweise kann ein Mehrfachstrichgitter, insbesondere ein Dreifachstrichgitter, verwendet werden, welches mehrere, insbesondere drei, unterschiedliche Gitter, die relativ zueinander verdreht oder auch parallel angeordnet sind, ausbildet. Die unterschiedlichen Gitter weisen vorteilhaft unterschiedliche Gitterkonstanten auf. Es ist ebenso denkbar, dass zumindest einige der Gitter identische Gitterkonstanten aufweisen. Selbstverständlich ist hierbei auch eine größere Anzahl unterschiedlicher Gitter denkbar. Zudem ist eine Nebeneinanderanordnung und/oder eine Hintereinanderanordnung unterschiedlicher, insbesondere streifenförmiger, Mehrfachstrichgitter denkbar. Hierbei kann insbesondere durch eine Wahl geeigneter Rotationswinkel ein Auftreten von unerwünschten Nebenbildern an unerwünschten Positionen vermieden werden.

In einer vorteilhaften Ausgestaltung der Erfindung wird vorgeschlagen, dass der erste Bildparameter und/oder der zweite Bildparameter eine Lichtintensitätsverteilung ist. Vorzugweise ist der erste Urbildparameter und/oder der zweite Bildparameter eine, insbesondere von der Ortskoordinate des Urbildes abhängige Lichtintensitätsverteilung.

Ferner ist vorzugweise der erste Abbildparameter und/oder der zweite Abbildparameter eine, insbesondere von der Ortskoordinate des Abbildes abhängige Lichtintensitätsverteilung. Vorteilhaft ist der erste Urbildparameter und/oder der zweite Urbildparameter eine Bildzeile, zumindest eines ersten Teilbildes des Urbildes und/oder zumindest eines zweiten Teilbildes des Urbildes. Besonders vorteilhaft ist der erste Abbildparameter und/oder der zweite eine Bildzeile zumindest eines ersten Elementarbildes des Abbildes und/oder zumindest eines zweiten Elementarbildes des Abbildes. Vorzugsweise entsprechen die Bildparameter den entsprechenden Urbildparametern bzw. den entsprechenden Abbildparametern dahingehend, dass eine bestimmte Wellenlänge einer bestimmten Koordinate entspricht. Beispielsweise sind der erste Urbildparameter und der erste Bildparameter zumindest im Wesentlichen eine identische Intensitätsverteilung, welche aber im Fall des Urbildparameters von der Ortskoordinate des Urbildes und im Fall des Bildparameters von der Spektralkoordinate des Bildes, insbesondere von einer Wellenlänge, abhängt. Analoges gilt für das Abbild des Urbildes sowie für andere Urbildparameter, Bildparameter und/oder Abbildparameter. Eine bestimmte Koordinate, beispielsweise ein bestimmter x-Wert, entspricht somit einer bestimmten Wellenlänge. Ortsabhängigkeiten bestimmter Bildzeilen bestimmter Teilbilder des Urbildes und/oder bestimmter Elementarbilder des Abbildes des Urbildes entsprechen somit einem bestimmten Bildparameter. Vorzugsweise ist der erste Bildparameter und/oder der zweite Bildparameter räumlich zumindest im Wesentlichen punktförmig, insbesondere ein Lichtpunkt, welcher eine bestimmte von der Spektralkoordinate des spektral enkodierten Bildes abhängige Lichtintensitätsverteilung aufweist. Insbesondere entspricht das Abbild dem Urbild zumindest weitgehend, insbesondere im Hinblick auf Ortskoordinaten des Abbildes bzw. des Urbildes. Hierdurch kann vorteilhaft eine Bildinformation effizient enkodiert und/oder komprimiert werden. Ferner kann hierdurch mittels optischer Komponenten eine zuverlässige und schnelle Enkodierung und/oder Dekodierung ermöglicht werden.

In einer besonders vorteilhaften Ausgestaltung der Erfindung wird vorgeschlagen, dass der erste Transformationsschritt in einem anderen Spektralbereich, insbesondere der Spektralkoordinate, durchgeführt wird als der zweite Transformationsschritt. Vorzugsweise sind die Spektralbereiche dabei disjunkt. Es ist aber auch denkbar, dass die Spektralbereiche zumindest teilweise überlappen. Insbesondere weisen die Spektralbereiche eine Breite von wenigstens 10 nm, vorteilhaft von wenigstens 50 nm und besonders vorteilhaft von wenigstens 100 nm auf. Die Spektralbereiche können aber auch eine größere Breite aufweisen, beispielsweise eine Breite von 150 nm oder von 200 nm oder von 300 nm. Insbesondere weisen die Spektralbereiche eine Breite von höchstens 300 nm, vorteilhaft von höchstens 200 nm und besonders vorteilhaft von höchstens 100 nm auf. Vorteilhaft weist ein Bereich einer Überlappung der Spektralbereiche eine Breite von höchstens 50 nm, besonders vorteilhaft von höchstens 10 nm, vorzugsweise von höchstens 5 nm und besonders bevorzugt von höchstens 1 nm auf. Vorteilhaft weist das Urbild und/oder das enkodierte Bild und/oder das Abbild des Urbildes dabei Teilbilder und/oder Grundbilder und/oder Elementarbilder der entsprechenden Spektralbereiche auf. Hierdurch können vorteilhaft verschiedene Informationen eines Bildes in analoger Weise enkodiert und/oder dekodiert werden.

In einer bevorzugten Ausgestaltung der Erfindung wird vorgeschlagen, dass das Verfahren zumindest einen dritten Transformationsschritt umfasst, welcher in einem anderen Spektralbereich, insbesondere der Spektralkoordinate, durchgeführt wird als der erste und der zweite Transformationsschritt. Insbesondere wird der dritte Transformationsschritt analog zu dem ersten Transformationsschritt und dem zweiten Transformationsschritt durchgeführt, wobei vorteilhaft in analoger Weise ein dritter Urbildparameter in einen dritten Bildparameter enkodiert bzw. ein dritter Abbildparameter aus dem dritten Bildparameter dekodiert wird. Ferner sind weitere Transformationsschritte in analoger Weise denkbar. Hierdurch kann vorteilhaft ein hoher Informationsgehalt effizient transportiert werden.

In einer besonders bevorzugten Ausgestaltung der Erfindung wird vorgeschlagen, dass die verschiedenen Spektralbereiche jeweils einer Grundfarbe entsprechen. Vorteilhaft wird das Verfahren in genau drei unterschiedlichen Spektralbereichen durchgeführt, die jeweils einer Grundfarbe entsprechen, beispielsweise nach Art einer RGB-Farbmischung. Es ist aber auch denkbar, dass das Verfahren in mehr als drei, beispielsweise in vier oder fünf oder noch mehr unterschiedlichen Spektralbereichen durchgeführt wird, die jeweils einer Grundfarbe entsprechen, beispielsweise nach Art einer RGBY-Farbmischung. Insbesondere entspricht der erste Spektralbereich einer blauen Grundfarbe, beispielsweise einem Bereich zwischen etwa 400 nm und etwa 500 nm, und/oder der zweite Spektralbereich einer grünen Grundfarbe, beispielsweise einem Bereich zwischen etwa 500 nm und etwa 600 nm, und/oder der dritte Spektralbereich einer roten Grundfarbe, beispielsweise einem Bereich zwischen etwa 600 nm und etwa 700 nm. Hierdurch kann vorteilhaft eine zumindest annähernd echtfarbige spektrale Enkodierung und/oder Dekodierung bereitgestellt werden.

Ferner wird vorgeschlagen, dass das spektral enkodierte Bild mehrere, insbesondere drei, Grundbilder verschiedener, insbesondere dreier unterschiedlicher, Grundfarben aufweist, die gemeinsam das Urbild zumindest annähernd echtfarbig enkodieren. Insbesondere weist das Urbild zumindest ein erstes Teilbild, insbesondere einer ersten Grundfarbe, vorzugsweise Blau, auf, welches in ein erstes Grundbild, insbesondere der ersten Grundfarbe, enkodiert wird. Insbesondere weist das Urbild zumindest ein zweites Teilbild, insbesondere einer zweiten Grundfarbe, vorzugsweise Grün, auf, welches in ein zweites Grundbild, insbesondere der zweiten Grundfarbe, enkodiert wird. Insbesondere weist das Urbild zumindest ein drittes Teilbild, insbesondere einer dritten Grundfarbe, vorzugsweise Rot, auf, welches in ein drittes Grundbild, insbesondere der dritten Grundfarbe, enkodiert wird. In analoger Weise weist das Abbild des Urbildes vorteilhaft Elementarbilder entsprechender Grundfarben auf, die aus den Grundbildern des spektral enkodierten Bildes dekodiert werden. Die Grundfarben der Elementarbilder können dabei von den Grundfarben der Teilbilder des Urbildes verschieden sein. Ein Spektrum eines bestimmten Urbildpunkts des Urbildes ist dabei insbesondere verschieden von einem Spektrum eines dem Urbildpunkt entsprechenden Abbildpunkts des Abbildes des Urbildes. Insbesondere weist das Spektrum des Urbildpunkts ein kontinuierliches Spektrum auf. Ferner weist insbesondere das Spektrum des Abbildpunkts zumindest näherungsweise ein diskretes Spektrum und/oder ein Linienspektrum auf, vorteilhaft mit jeweils zumindest einem Intensitätspeak in einem blauen, grünen und roten Spektralbereich, vorzugsweise in dem ersten Spektralbereich, dem zweiten Spektralbereich und dem dritten Spektralbereich. Hierdurch kann vorteilhaft ein Bild mit mehreren Grundfarben spektral enkodiert und/oder dekodiert werden.

Weiterhin wird vorgeschlagen, dass das spektral enkodierte Bild räumlich zumindest im Wesentlichen eindimensional ist. Vorzugsweise ist das spektral enkodierte Bild streifenförmig. Insbesondere weist das spektral enkodierte Bild eine y-Koordinate auf, die einer y-Koordinate oder einer zentrischen Streckung einer y-Koordinate des Urbildes und/oder des Abbildes des Urbildes entspricht. Hierdurch kann vorteilhaft ein über einen großen Winkelbereich betrachtbares Bild erzeugt werden. Ferner können hierdurch vorteilhafte Eigenschaften hinsichtlich einer Platzeffizienz erzielt werden.

Ferner geht die Erfindung aus von einer Enkodierungsvorrichtung zur Erzeugung eines spektral enkodierten Bildes aus einem Urbild, insbesondere mittels des Verfahrens zur Erzeugung eines spektral enkodierten Bildes, mit zumindest einer Enkodierungseinheit, welche zu einer Enkodierung zumindest eines, insbesondere von zumindest einer Ortskoordinate des Urbildes abhängigen, ersten Urbildparameters in zumindest einen von zumindest einer Spektralkoordinate des spektral enkodierten Bildes abhängigen ersten Bildparameter vorgesehen ist.

Es wird vorgeschlagen, dass die Enkodierungseinheit zu einer Enkodierung eines, insbesondere von der Ortskoordinate des Urbildes abhängigen, zweiten Urbildparameters in zumindest einen von der Spektralkoordinate des spektral enkodierten Bildes abhängigen zweiten Bildparameter vorgesehen ist.

Durch eine erfindungsgemäße Enkodierungsvorrichtung können vorteilhafte Eigenschaften hinsichtlich einer Bilderzeugung, insbesondere einer Erzeugung eines spektral enkodierten Bildes, erzielt werden. Ferner können vorteilhaft Bildinformationen effizient enkodiert werden. Außerdem kann vorteilhaft eine Echtfarbigkeit eines Bildes zumindest teilweise, insbesondere zumindest nahezu vollständig, erhalten bleiben. Vorteilhaft kann ein aus verschiedenen Winkeln, insbesondere rundherum, betrachtbares, insbesondere echtfarbiges, Bild erzeugt werden. Ferner wird vorteilhaft eine Projektorunabhängigkeit ermöglicht. Außerdem wird eine Spiegelimmunität erzielt.

Außerdem geht die Erfindung aus von einer Dekodierungsvorrichtung zur Erzeugung eines Abbildes eines Urbildes aus einem spektral enkodierten Bild, insbesondere mittels des Verfahrens zur Dekodierung eines spektral enkodierten Bildes, mit zumindest einer Dekodierungseinheit, welche zu einer Dekodierung zumindest eines, insbesondere von zumindest einer Ortskoordinate des Abbildes abhängigen, ersten Abbildparameters aus zumindest einem von zumindest einer Spektralkoordinate des spektral enkodierten Bildes abhängigen ersten Bildparameter vorgesehen ist.

Es wird vorgeschlagen, dass die Dekodierungseinheit zu einer Dekodierung zumindest eines zweiten Abbildparameters aus zumindest einem von der Spektralkoordinate des spektral enkodierten Bildes abhängigen zweiten Bildparameter vorgesehen ist.

Durch eine erfindungsgemäße Dekodierungsvorrichtung können vorteilhafte Eigenschaften hinsichtlich einer Bilderzeugung, insbesondere einer Erzeugung eines spektral dekodierten, Bildes erzielt werden. Ferner können vorteilhaft Bildinformationen effizient dekodiert werden. Außerdem kann vorteilhaft eine Echtfarbigkeit eines Bildes zumindest teilweise, insbesondere zumindest nahezu vollständig, erhalten bleiben. Vorteilhaft kann ein aus verschiedenen Winkeln, insbesondere rundherum, betrachtbares, insbesondere echtfarbiges, Bild dekodiert und/oder betrachtet werden. Ferner wird vorteilhaft eine Projektorunabhängigkeit ermöglicht. Außerdem wird eine Spiegelimmunität erzielt. Weiterhin kann vorteilhaft ein scheinbar schwebendes und/oder teilweise transparentes virtuelles Bild erzeugt werden.

Vorteilhafte Eigenschaften hinsichtlich einer Bilderzeugung können insbesondere mit einem Bilderzeugungssystem, insbesondere mit einem Display, Head-up-Display oder Projektorsystem, mit zumindest einer Vorrichtung zur Erzeugung eines spektral enkodierten Bildes und mit zumindest einer Vorrichtung zur Erzeugung eines Abbildes eines Urbildes erzielt werden.

Es ist auch denkbar, dass zumindest einer der Transformationsschritte, insbesondere ein erster und/oder ein zweiter und/oder ein dritter und/oder einer der Enkodierungsschritte auf eine andere Weise, insbesondere ohne eine Verwendung dispersiver Elemente, durchgeführt wird. Zur Erzeugung eines spektral enkodierten Bildes bieten sich neben einer Projektion durch unterschiedliche Dispersionselemente auf einen opaken beziehungsweise transluzenten Schirm auch andere Verfahren an. Beispielsweise können, in Anlehnung an das Lippmann-Verfahren (auch bekannt als interferenzielle Fotografie), ein schmaler Streifen beziehungsweise ein schmaler Zylinder mit einer Nanostruktur hergestellt werden, die bei diffuser Beleuchtung mit weißem Licht gewünschte Spektralfarben auf Grund von Interferenz reflektiert. Ebenso können einzelne Lichtpunkte des spektral enkodierten Bildes mithilfe eines spektral durchstimmbaren Lasers und/oder mithilfe eines farblich gefilterten Supercontinuumlasers erzeugt werden. Denkbar sind zudem spektral durchstimmbare LEDs beziehungsweise spektral durchstimmbare LCD-Pixel oder dergleichen. Insbesondere können diese auf einem Bilderzeugungsschirm angeordnet sein und das spektral enkodierte Bild direkt erzeugen. Vorzugsweise werden entsprechende Enkodierungsschritte in diesem Fall rechnerbasiert durchgeführt. Insbesondere wird das Urbild digitalisiert und enkodiert. Anschließend wird der Bilderzeugungsschirm entsprechend angesteuert, um das spektral enkodierte Bild widerzugeben. Darüber hinaus kann erzeugtes Licht durch optische Fasern an benötigte Punkte des spektral enkodierten Bildes gebracht werden. Durch derartige Verfahren und Vorrichtungen wird die Erzeugung des spektral enkodierten Bildes projektorunabhängig, d.h. ein Projektor wird unnötig und/oder kann an einem beliebigen Ort platziert werden.

Es ist auch denkbar, für die Enkodierung eine Anordnung analog zu einem Offner-Spektrometer zu verwenden, wobei anstelle des sonst üblichen Sensorenarrays eine Projektionseinheit, insbesondere ein Spatial Light Modulator, zur Erzeugung von Teilbildern des Urbilds an entsprechender Stelle angeordnet ist. Hierdurch kann insbesondere eine hohe Lichtausbeute erzielt werden. Analog ist denkbar, einen Aufbau ähnlich dem eines Offner-Spektrometers für die Dekodierung zu verwenden.

Zudem ist denkbar, dass das Urbild beziehungsweise dessen Teilbilder und/oder Elementarbilder, insbesondere digital, vorverzerrt und/oder, insbesondere räumlich, helligkeitsmoduliert werden. Insbesondere ist eine Anpassung denkbar, die zu einem Ausgleich von Abweichungen zwischen Urbild und Abbild des Urbilds, die auf verwendete optische Elemente, dispersive Elemente und/oder eine Beschaffenheit des Schirms zurückzuführen sind, vorgesehen ist. Zudem kann ein unregelmäßiges Spektralprofil einer Lichtquelle ausgeglichen werden. Ferner kann eine Optimierung einer farblichen Überlagerung von Teilbildern und/oder Grundbildern vorgenommen werden. Vorzugsweise weist die Enkodierungsvorrichtung eine Recheneinheit auf, die zu einer Ausführung einer entsprechenden Routine für eine Vorverzerrung und/oder Helligkeitsmodulation des Urbilds beziehungsweise dessen Teilbildern und/oder Elementarbildern vorgesehen ist. Zu einer Vorverzerrung und/oder Helligkeitsmodulation wird vorzugsweise das Urbild in eine bestimmte Anzahl von Bildstreifen zerlegt, beispielsweise in Querrichtung des Urbilds. Hierbei kann beispielweise eine Anzahl von Bildstreifen einer Anzahl von Pixeln in die entsprechende Richtung entsprechen, wobei es sich vorteilhaft um Pixel des Urbilds bei dessen Darstellung beziehungsweise Projektion mittels der Projektionseinheit handelt. Anschließend werden vorteilhaft die Bildstreifen entsprechend verzerrt und/oder in ihrer Helligkeit moduliert und/oder angepasst. Grundsätzlich ist hierbei denkbar, dass die Recheneinheit zu einer Bestimmung von Modulationsparametern in Abhängigkeit von Beschaffenheitsparametern und/oder geometrischen Parametern der dispersiven Elemente, des Schirms, der Projektionseinheit, eines Projektors, beispielsweise eines Beamers, und/oder von Umgebungsparametern und dergleichen vorgesehen ist und eine Anpassung des Urbilds entsprechend abhängig von diesen Parametern erfolgt. Vorzugsweise weist eine verwendete Verzerrungsfunktion einen Mittelwert von 1 auf, sodass vorteilhaft ein Seitenverhältnis des Urbildes erhalten bleibt. Hierdurch kann insbesondere eine Echtfarbigkeit eines Abbildes des Urbildes erzielt werden, wobei Abweichungen zwischen Farben des Abbildes des Urbildes und des Urbildes weitestgehend vermieden werden können.

Insbesondere im Fall eines aktiven Schirms, der zu einer direkten Erzeugung des enkodierten Bildes vorgesehen ist, ist auch denkbar, dass das enkodierte Bild von einer Recheneinheit derart moduliert wird, dass Abbildungsfehler und/oder unerwünschte nichtlineare Effekte oder dergleichen der Dekodierungsvorrichtung, insbesondere deren dispersiver Elemente, ausgeglichen werden. Insbesondere im Fall eines aktiven Schirms kann zu demselben Zweck das Urbild entsprechend moduliert und/oder angepasst werden.

Um einen Abstand zwischen dem spektral enkodierten Bild beziehungsweise dem Schirm und verwendeten Dispersionselementen zu minimieren, können diese in einen optischen Wellenleiter integriert werden.

Die beschriebenen Verfahren und Vorrichtungen können ebenfalls für eine Bilderfassung und/oder eine Bildtransmission angewendet beziehungsweise entsprechend übertragen werden. Bilderfassung und Bildtransmission sind somit ebenfalls Gegenstände der Erfindung. Beispielsweise kann je nach Anwendung ein räumlich zumindest im Wesentlichen punktförmiges spektral enkodiertes Bild ausreichend sein, welches insbesondere mittels einer optischen Faser von einem Anfangs- zu einem Endpunkt übertragbar ist, beispielsweise für Anwendungen im Bereich einer Endoskopie.

Insbesondere bei spektral enkodierten Displays können mehrere spektral enkodierte Lichtlinien benachbart angeordnet und vorteilhaft durch Sichtbarrieren separiert werden. Dadurch können je nach Betrachterposition verschiedene Motive sichtbar werden. Durch Veränderung der Blickrichtung können beispielsweise unterschiedliche perspektivische Ansichten erzeugt werden.

Für die Enkodierung und Dekodierung können verschiedene Verfahren und Vorrichtungen genutzt werden. Wird eine Vorrichtung genutzt, die auf je drei parallelen Dispersionselementen für die Enkodierung und Dekodierung basiert, besteht ein wesentlicher Vorteil darin, dass das projizierte Urbild weder vor einer Dispersion, beispielsweise softwarebasiert, in seine RGB-Komponenten aufgetrennt, noch vorverzerrt oder irgendeiner anderen Bildbearbeitung unterzogen werden muss, damit das RGB-Abbild dem Urbild ähnelt. Dies ist nicht nur für eine Bilderzeugung, sondern auch für eine Bilderfassung beziehungsweise Bildgebung und Bildtransmission vorteilhaft. Ein weiterer Vorteil der Erfindung besteht in einer Option einer Projektorunabhängigkeit und einer Multiperspektivität.

Grundsätzlich ist, insbesondere zur Vermeidung von Störungen aufgrund von Streulicht und/oder Umgebungslicht, denkbar, dass zumindest eine Blende, insbesondere in einem Bereich eines Lichtwegs von der Projektionseinheit zu dem Schirm, angeordnet ist. Insbesondere können keilförmige Blenden verwendet werden, die insbesondere in Richtung des Schirms konvergieren. Alternativ oder zusätzlich ist denkbar, eine Kombination aus mehreren Spaltblenden zu verwenden, die vorzugsweise hintereinander angeordnet sind, wobei besonders bevorzugt die Spaltblenden auf den Schirm zu immer schmaler werden.

Ferner ist denkbar, dass die Projektionseinheit zumindest eine Abbildungsoptik aufweist, die das durch das zwischen Projektionseinheit und spektral enkodiertem Bild angeordnete dispersive Element projizierte Urbild verkleinert, um insbesondere die Lichtausbeute zu optimieren. Alternativ oder zusätzlich kann eine solche Abbildungsoptik auch zwischen Projektionseinheit und Schirm angeordnet sein. Die Abbildungsoptik kann dabei geeignete, insbesondere gekrümmte, Spiegel und/oder Linsen aufweisen. Insbesondere ist die Abbildungsoptik derart ausgebildet, dass eine Breite des Urbilds, insbesondere eine Breite senkrecht zu einer Längsrichtung des Schirms, an dem Ort des Schirms einer Breite eines Spektrums einer, insbesondere parallel zu der Längsrichtung des Schirms orientierten, weißen Linie am Ort des Schirms entspricht. Hierbei wird insbesondere davon ausgegangen, dass die weiße Linie und das Urbild mittels derselben Lichtquelle erzeugt sind und/oder denselben Spektralbereich umspannen. Vorteilhaft werden, insbesondere monochromatische, Einzelbilder des Urbilds dabei derart in eine, insbesondere senkrecht zu einer Projektionsrichtung angeordneten, Schirmebene projiziert, dass eine dem Schirm zugewandte Kante eines kurzwelligsten Einzelbildes mit einer dem Schirm zugewandten Kante eines langwelligsten Einzelbilds zusammenfällt. Monochromatische Einzelbilder dazwischenliegender Spektralfarbe treten dann vorteilhaft zwischen dem kurzwelligsten und dem langwelligsten Einzelbild auf. Ist das Urbild am Ort des Schirms schmaler als das Spektrum, wird ein bestimmter Bereich kurzwelligster und/oder langwelligster Einzelbilder nicht auf dem Schirm abgebildet, dass zur spektralen Enkodierung lediglich ein Teilbereich des Spektrums herangezogen werden kann. Umgekehrt werden im Fall, dass das Urbild breiter ist als das Spektrum, bestimmte Bildbereiche, insbesondere Randbereiche, nicht auf dem Schirm abgebildet, wodurch das spektral enkodierte Bild insbesondere lediglich einem Ausschnitt des Urbilds entspricht. Analoge Überlegungen gelten jeweils für einzelne Spektralbereiche einzelner verwendeter Grundfarben, also beispielsweise für einen Spektralbereich roten Lichts, einen Spektralbereich grünen Lichts und einen Spektralbereich blauen Lichts (andere Farbmischungen sind selbstverständlich uneingeschränkt ebenso denkbar), sowie für entsprechende Teilbilder des Urbilds.

Die erfindungsgemäßen Verfahren und Vorrichtungen sollen hierbei nicht auf die oben beschriebene Anwendung und Ausführungsform beschränkt sein. Insbesondere können die erfindungsgemäßen Verfahren und Vorrichtungen zu einer Erfüllung einer hierin beschriebenen Funktionsweise eine von einer hierin genannten Anzahl von einzelnen Elementen, Bauteilen, Einheiten und Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

**Zeichnungen**

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1     ein Bilderzeugungssystem mit einer Enkodierungsvorrichtung und einer Dekodierungsvorrichtung in einer schematischen Darstellung,

Fig. 2     ein Urbild sowie Teilbilder des Urbildes in einer schematischen Darstellung,

Fig. 3     ein spektral enkodiertes Bild sowie Grundbilder des spektral enkodierten Bildes in einer schematischen Darstellung,

Fig. 4     ein Abbild des Urbildes sowie Elementarbilder des Abbildes in einer schematischen Darstellung,

Fig. 5     ein Dispersionsdiagramm für eine Erzeugung eines ersten beispielhaften spektral enkodierten Bildes aus einem ersten beispielhaften Urbild,

Fig. 6     ein Dispersionsdiagramm für eine Erzeugung eines zweiten beispielhaften spektral enkodierten Bildes aus einem zweiten beispielhaften Urbild,

Fig. 7     ein Dispersionsdiagramm für eine Erzeugung eines dritten beispielhaften spektral enkodierten Bildes aus einem dritten beispielhaften Urbild mittels dreier dispersiver Elemente,

Fig. 8     eine bildbasierte Konstruktionsmethode für eine Erzeugung eines beispielhaften vierten spektral enkodierten Bildes und dessen Dekodierung,

Fig. 9     eine schematische Darstellung einer Erzeugung des spektral enkodierten Bildes und dessen Dekodierung mittels der Enkodierungsvorrichtung und der Dekodierungsvorrichtung analog zu Figur 8,

Fig. 10     eine Frontalansicht dreier überlagerter Grundbilder des spektral enkodierten Bildes sowie Elementarbilder eines Abbildes des Urbildes jeweils zusammen mit einer Draufsicht auf den zugehörigen Strahlengang,

Fig. 11     eine Anordnung der dispersiven Elemente der Vorrichtung in einer schematischen Draufsicht,

Fig. 12    alternative Anordnungen dispersiver Elemente,

Fig. 13    ein weiteres Bilderzeugungssystem mit einer Enkodierungsvorrichtung und einer Dekodierungsvorrichtung in einer schematischen Frontalansicht,

Fig. 14    eine erste alternative Enkodierungsvorrichtung in einer schematischen Darstellung,

Fig. 15    eine zweite alternative Enkodierungsvorrichtung in einer schematischen Darstellung,

Fig. 16    eine dritte alternative Enkodierungsvorrichtung in einer schematischen Darstellung und

Fig. 17    ein alternatives dispersives Element in einer schematischen Darstellung.

**Beschreibung der Ausführungsbeispiele**

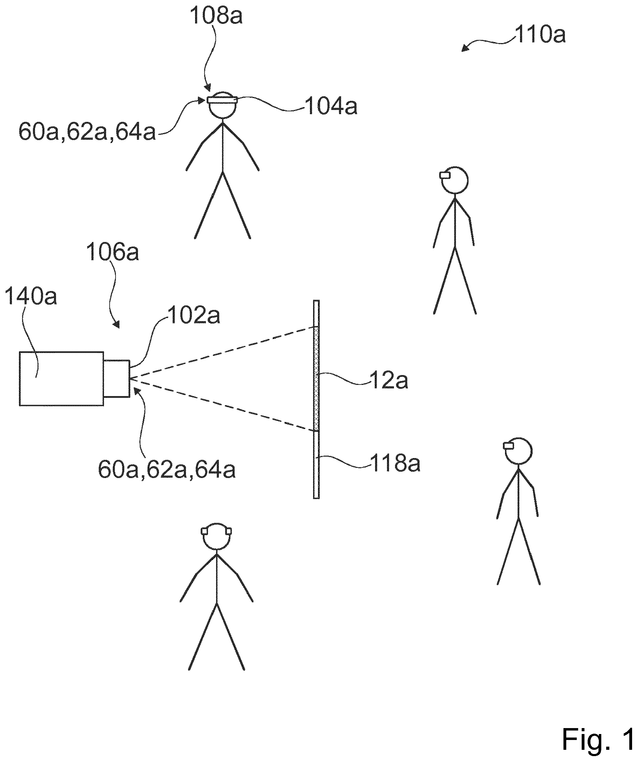

Die Figur 1 zeigt ein Bilderzeugungssystem 110a mit einer Enkodierungsvorrichtung 106a und einer Dekodierungsvorrichtung 108a in einer schematischen Darstellung.

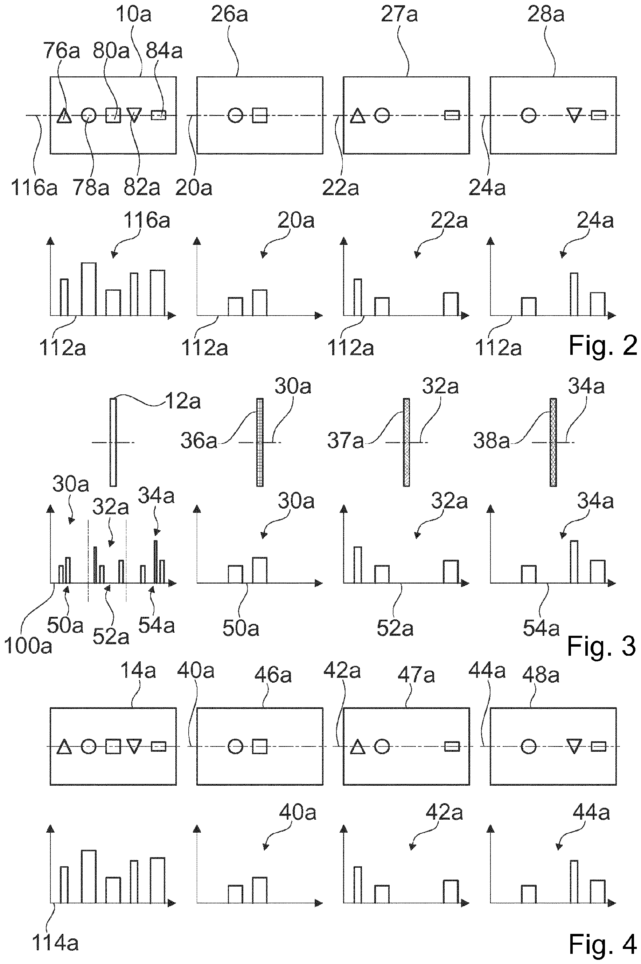

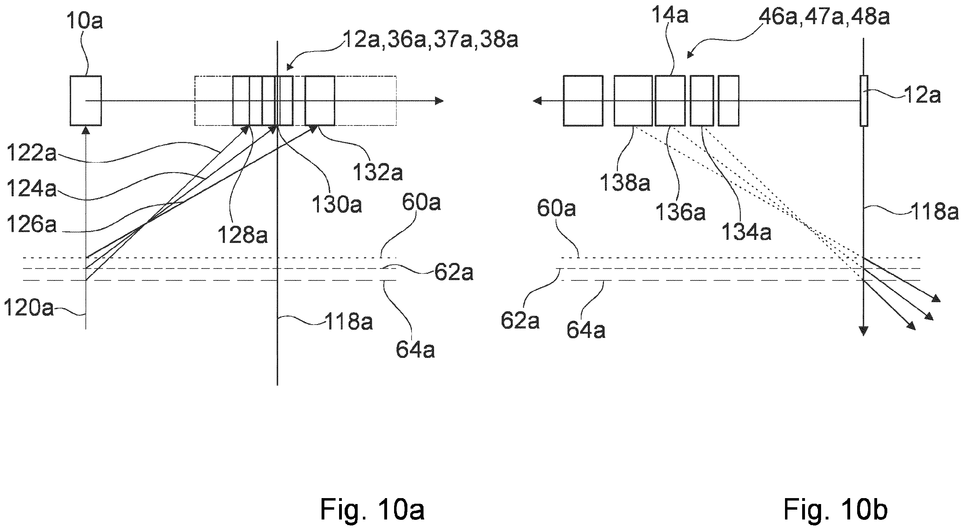

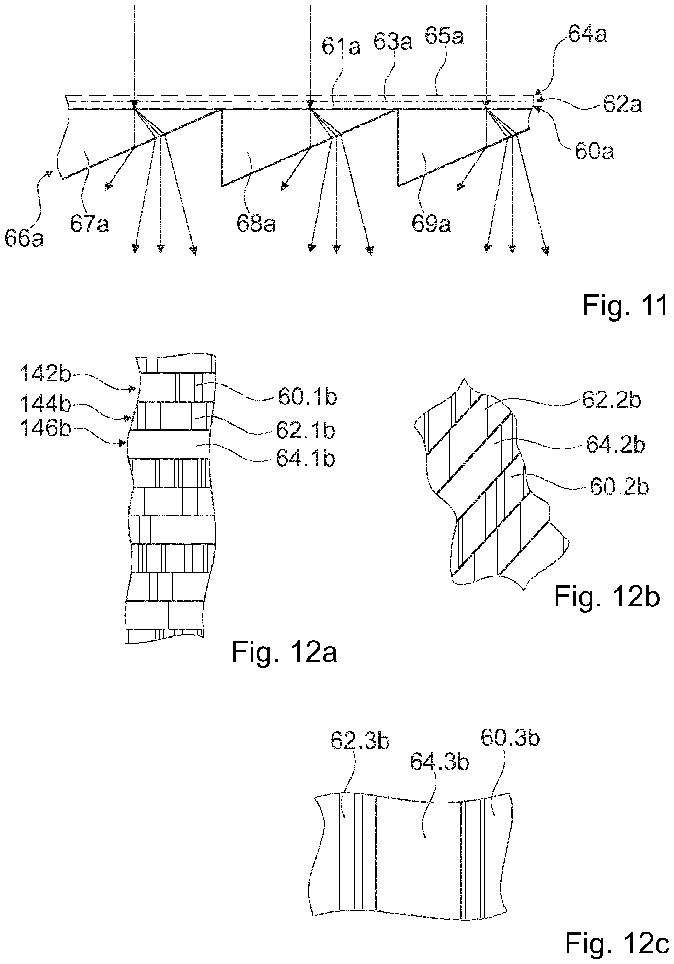

Die Enkodierungsvorrichtung 106a ist zur Erzeugung eines spektral enkodierten Bildes 12a aus einem Urbild 10a vorgesehen (vgl. Fig. 2 und 3). Die Enkodierungsvorrichtung 106a weist zumindest eine Enkodierungseinheit 102a auf, welche zu einer Enkodierung zumindest eines, insbesondere von zumindest einer Ortskoordinate 112a des Urbildes 10a abhängigen, ersten Urbildparameters 20a in zumindest einen von zumindest einer Spektralkoordinate 100a des spektral enkodierten Bildes 12a abhängigen ersten Bildparameter 30a vorgesehen ist. Die Enkodierungseinheit 102a ist zu einer Enkodierung eines, insbesondere von der Ortskoordinate 112a des Urbildes 10a abhängigen, zweiten Urbildparameters 22a in zumindest einen von der Spektralkoordinate 100a des spektral enkodierten Bildes 12a abhängigen zweiten Bildparameter 30a vorgesehen. Die Enkodierungseinheit 102a weist einen eindimensionalen Schirm 118a auf, auf welchen das spektral enkodierte Bild 12a projiziert wird. Die Enkodierungseinheit 102a weist dispersive Elemente 60a, 62a, 64a auf, die in den Figuren 10 und 11 näher gezeigt sind. Ferner weist die Enkodierungseinheit 102a im vorliegenden Fall einen Projektor 140a auf. Mittels des Projektors 140a wird das Urbild 10a durch die dispersiven Elemente 60a, 62a, 64a projiziert und das spektral enkodierte Bild 12a erzeugt. Für den Fall, dass anstelle des eindimensionalen Schirms 118a beispielsweise ein zweidimensionaler Schirm verwendet wird, ist denkbar, dass dieser vorzugsweise mittels Blenden an zumindest einer Seite, vorteilhaft links und rechts, abgeschattet wird, sodass ein zumindest im Wesentlichen eindimensionales Bild auf dem Schirm mittels Projektion erzeugt werden kann. Neben das eindimensionale Bild projiziertes Licht wird in diesem Fall beispielsweise absorbiert und/oder gestreut.

Im vorliegenden Fall wird ein Verfahren zur Erzeugung eines spektral enkodierten Bildes 12a aus einem Urbild 10a durchgeführt, mit zumindest einem ersten Transformationsschritt, insbesondere einem ersten Enkodierungsschritt, in welchem zumindest ein, insbesondere von zumindest einer Ortskoordinate 112a, vorteilhaft einer x-Koordinate, des Urbildes 10a abhängiger, erster Urbildparameter 20a in zumindest einen von zumindest einer Spektralkoordinate 100a des spektral enkodierten Bildes 12a abhängigen ersten Bildparameter 30a enkodiert wird, durchgeführt, wobei das Verfahren zumindest einen zweiten Transformationsschritt, insbesondere einen zweiten Enkodierungsschritt, umfasst, in welchem zumindest ein, insbesondere von der Ortskoordinate 112a des Urbildes 10a abhängiger, zweiter Urbildparameter 22a in zumindest einen von der Spektralkoordinate 100a des spektral enkodierten Bildes 12a abhängigen zweiten Bildparameter 32a enkodiert wird.

Die Dekodierungsvorrichtung 108a ist zur Erzeugung eines Abbildes 14a eines Urbildes 10a aus einem spektral enkodierten Bild 12a vorgesehen (vgl. Fig. 2, 3 und 4). Die Dekodierungsvorrichtung 108a weist zumindest eine Dekodierungseinheit 104a auf, welche zu einer Dekodierung zumindest eines, insbesondere von zumindest einer Ortskoordinate 114a des Abbildes 14a abhängigen, ersten Abbildparameters 40a aus zumindest einem von zumindest einer Spektralkoordinate 100a des spektral enkodierten Bildes 12a abhängigen ersten Bildparameter 30a vorgesehen ist. Die Dekodierungseinheit 104a ist zu einer Dekodierung zumindest eines zweiten Abbildparameters 42a aus zumindest einem von der Spektralkoordinate 100a des spektral enkodierten Bildes 12a abhängigen zweiten Bildparameter 32a vorgesehen. Die Dekodierungseinheit 104a ist im vorliegenden Fall als eine Brille ausgebildet. Die Dekodierungseinheit 104a kann aber auch als ein fest installiertes Betrachtungsfenster oder dergleichen ausgebildet sein. Die Dekodierungseinheit 104a umfasst drei dispersive Elemente 60a, 62a, 64a (vgl. auch Fig. 10 und 11). Zu einer Dekodierung des spektral enkodierten Bildes 12a wird dieses durch die dispersiven Elemente 60a, 62a, 64a betrachtet.

Im vorliegenden Fall wird ein Verfahren zur Dekodierung eines spektral enkodierten Bildes 12a zur Erzeugung eines Abbildes 14a eines Urbildes 10a, mit zumindest einem ersten Transformationsschritt, insbesondere einem ersten Dekodierungsschritt, in welchem zumindest ein, insbesondere von zumindest einer Ortskoordinate 114a, vorteilhaft einer x-Koordinate, des Abbildes 14a abhängiger, erster Abbildparameter 40a aus zumindest einem von zumindest einer Spektralkoordinate 100a des spektral enkodierten Bildes 12a abhängigen ersten Bildparameter 30a dekodiert wird, durchgeführt, wobei das Verfahren zumindest einen zweiten Transformationsschritt, insbesondere einen zweiten Dekodierungsschritt, umfasst, in welchem zumindest ein, insbesondere von der Ortskoordinate 114a des Abbildes 14a abhängiger, zweiter Abbildparameter 42a aus zumindest einem von der Spektralkoordinate 100a des spektral enkodierten Bildes 12a abhängigen zweiten Bildparameter 32a dekodiert wird.

Die Figur 2 zeigt das Urbild 10a sowie Teilbilder 26a, 27a, 28a des Urbildes 10a in einer schematischen Darstellung. Die Figur 3 zeigt das spektral enkodierte Bild 12a sowie Grundbilder 36a, 37a, 38a des spektral enkodierten Bildes 12a in einer schematischen Darstellung. Die Figur 4 zeigt das Abbild 14a des Urbildes 10a sowie Elementarbilder 46a, 47a, 48a des Abbildes 14a in einer schematischen Darstellung.

Das Urbild 10a weist im vorliegenden Fall (von links nach rechts) ein grünes Dreieck 76a, einen weißen Kreis 78a, ein blaues Quadrat 80a, ein rotes Dreieck 82a und ein gelbes Rechteck 84a auf. Um ein Verständnis zu erleichtern wurde ein einfach aufgebautes Urbild 10a gewählt, es sind aber beliebige Urbilder denkbar. Das Urbild 10a umfasst ein erstes Teilbild 26a, ein zweites Teilbild 27a und ein drittes Teilbild 28a. Das erste Teilbild 26a ist ein blaues Teilbild des Urbildes 10a. Das erste Teilbild 26a umfasst einen ersten Spektralbereich 50a. Der erste Spektralbereich 50a erstreckt sich im vorliegenden Fall von etwa 400 nm bis etwa 500 nm. Das zweite Teilbild 27a ist ein grünes Teilbild des Urbildes 10a. Das zweite Teilbild 27a umfasst einen zweiten Spektralbereich 52a. Der zweite Spektralbereich 52a erstreckt sich im vorliegenden Fall von etwa 500 nm bis etwa 600 nm. Das dritte Teilbild 28a ist ein rotes Teilbild des Urbildes 10a. Das dritte Teilbild 28a umfasst einen dritten Spektralbereich 54a. Der dritte Spektralbereich 54a erstreckt sich im vorliegenden Fall von etwa 600 nm bis etwa 700 nm.

Das erste Teilbild 26a weist einen ersten Urbildparameter 20a auf. Der erste Urbildparameter 20a ist eine von der Ortskoordinate 112a des Urbildes 10a abhängige Lichtintensitätsverteilung, die sich insbesondere über den ersten Spektralbereich 50a erstreckt. Die Ortskoordinate 112a ist im vorliegenden Fall eine x-Koordinate des Urbildes 10a. Der erste Urbildparameter 20a bildet eine Bildzeile des ersten Teilbildes 26a. Das erste Teilbild 26a weist eine Vielzahl unterschiedlicher erster Urbildparameter 20a auf, welche das erste Teilbild 26a zeilenweise ausbilden.

Das zweite Teilbild 27a weist einen zweiten Urbildparameter 22a auf. Der zweite Urbildparameter 22a ist eine von der Ortskoordinate 112a des Urbildes 10a abhängige Lichtintensitätsverteilung, die sich insbesondere über den zweiten Spektralbereich 52a erstreckt. Die Ortskoordinate 112a ist im vorliegenden Fall eine x-Koordinate des Urbildes 10a. Der zweite Urbildparameter 22a bildet eine Bildzeile des zweiten Teilbildes 27a. Das zweite Teilbild 27a weist eine Vielzahl unterschiedlicher zweiter Urbildparameter 22a auf, welche das zweite Teilbild 27a zeilenweise ausbilden.

Das dritte Teilbild 28a weist einen dritten Urbildparameter 24a auf. Der dritte Urbildparameter 24a ist eine von der Ortskoordinate 112a des Urbildes 10a abhängige Lichtintensitätsverteilung, die sich insbesondere über den dritten Spektralbereich 54a erstreckt. Die Ortskoordinate 112a ist im vorliegenden Fall eine x-Koordinate des Urbildes 10a. Der dritte Urbildparameter 24a bildet eine Bildzeile des dritten Teilbildes 28a. Das dritte Teilbild 28a weist eine Vielzahl unterschiedlicher dritter Urbildparameter 24a auf, welche das dritte Teilbild 28a zeilenweise ausbilden.

Eine Überlagerung des ersten Urbildparameters 20a, des zweiten Urbildparameters 22a und des dritten Urbildparameters 24a ist eine Lichtintensitätsverteilung 116a. Die Lichtintensitätsverteilung 116a ist von der Ortskoordinate 112a des Urbildes 10a abhängig. Die Lichtintensitätsverteilung 116a bildet eine Bildzeile des Urbildes 10a. Eine Überlagerung der Vielzahl unterschiedlicher erster Urbildparameter 20a, der Vielzahl unterschiedlicher zweiter Urbildparameter 22a und der Vielzahl unterschiedlicher dritter Urbildparameter 24a bildet das Urbild zeilenweise aus.

Zusätzlich zu einer Abhängigkeit von der Ortskoordinate 112a des Urbildes 10a können der erste Urbildparameter 20a und/oder der zweite Urbildparameter 22a und/oder der dritte Urbildparameter 24a zusätzlich eine spektrale Abhängigkeit, insbesondere innerhalb des entsprechenden Spektralbereichs 50a, 52a, 54a aufweisen.

Das spektral enkodierte Bild 12a umfasst ein erstes Grundbild 36a, ein zweites Grundbild 37a und ein drittes Grundbild 38a. Das erste Grundbild 36a ist ein blaues Teilbild des spektral enkodierten Bildes 12a. Das zweite Grundbild 37a ist ein grünes Teilbild des spektral enkodierten Bildes 12a. Das dritte Grundbild 38a ist ein rotes Teilbild des spektral enkodierten Bildes 12a. Das erste Grundbild 36a umfasst den ersten Spektralbereich 50a. Das zweite Grundbild 37a umfasst den zweiten Spektralbereich 52a. Das dritte Grundbild 38a umfasst den dritten Spektralbereich 54a.

Das erste Grundbild 36a weist zumindest einen ersten Bildparameter 30a auf. Der erste Bildparameter 30a ist eine von der Spektralkoordinate 100a des spektral enkodierten Bildes 12a, insbesondere in dem ersten Spektralbereich 50a, abhängige Lichtintensitätsverteilung. Der erste Bildparameter 30a enkodiert dabei spektral den ersten Urbildparameter 20a des Urbildes 10a. Das spektral enkodierte Bild 12a weist eine Vielzahl unterschiedlicher erster Bildparameter 30a auf, welche das erste Grundbild 36a punktweise ausbilden.

Das zweite Grundbild 37a weist einen zweiten Bildparameter 32a auf. Der zweite Bildparameter 32a ist eine von der Spektralkoordinate 100a des spektral enkodierten Bildes 12a, insbesondere in dem zweiten Spektralbereich 52a, abhängige Lichtintensitätsverteilung. Der zweite Bildparameter 32a enkodiert dabei spektral den zweiten Urbildparameter 22a des Urbildes 10a. Das spektral enkodierte Bild 12a weist eine Vielzahl unterschiedlicher zweiter Bildparameter 32a auf, welche das zweite Grundbild 37a punktweise ausbilden.

Das dritte Grundbild 38a weist zumindest einen dritten Bildparameter 34a auf. Der dritte Bildparameter 34a ist eine von der Spektralkoordinate 100a des spektral enkodierten Bildes 12a, insbesondere in dem dritten Spektralbereich 54a, abhängige Lichtintensitätsverteilung. Der dritte Bildparameter 34a enkodiert dabei spektral den dritten Urbildparameter 24a des Urbildes 10a. Das spektral enkodierte Bild 12a weist eine Vielzahl unterschiedlicher dritter Bildparameter 34a auf, welche das dritte Grundbild 38a punktweise ausbilden.

Im vorliegenden Fall erstreckt sich die Spektralkoordinate 100a des spektral enkodierten Bildes 12a über den ersten Spektralbereich 50a, den zweiten Spektralbereich 52a und den dritten Spektralbereich 54a.

Das Abbild 14a des Urbildes 10a umfasst ein erstes Elementarbild 46a, ein zweites Elementarbild 47a und ein drittes Elementarbild 48a. Das erste Elementarbild 46a ist ein blaues Elementarbild des Abbildes 14a. Das zweite Elementarbild 47a ist ein grünes Elementarbild des Abbildes 14a. Das dritte Elementarbild 48a ist ein rotes Elementarbild des Abbildes 14a. Das erste Elementarbild 46a umfasst den ersten Spektralbereich 50a. Das zweite Elementarbild 47a umfasst den zweiten Spektralbereich 52a. Das dritte Elementarbild 48a umfasst den dritten Spektralbereich 54a.

Das erste Elementarbild 46a weist zumindest einen ersten Abbildparameter 40a auf. Der erste Abbildparameter 40a ist eine von der Ortskoordinate 114a des Abbildes 14a abhängige Lichtintensitätsverteilung, die sich insbesondere über den ersten Spektralbereich 50a erstreckt. Die Ortskoordinate 114a ist im vorliegenden Fall eine x-Koordinate des Abbildes 14a. Der erste Abbildparameter 40a bildet eine Bildzeile des ersten Elementarbildes 46a. Der erste Abbildparameter 40a ist eine Repräsentation des ersten Urbildparameters 20a. Der erste Abbildparameter 40a wird aus dem ersten Bildparameter 30a dekodiert. Das erste Elementarbild 46a weist eine Vielzahl unterschiedlicher erster Abbildparameter 40a auf, welche das erste Elementarbild 46a zeilenweise ausbilden.

Das zweite Elementarbild 47a weist zumindest einen zweiten Abbildparameter 42a auf. Der zweite Abbildparameter 42a ist eine von der Ortskoordinate 114a des Abbildes 14a abhängige Lichtintensitätsverteilung, die sich insbesondere über den zweiten Spektralbereich 52a erstreckt. Die Ortskoordinate 114a ist im vorliegenden Fall eine x-Koordinate des Abbildes 14a. Der zweite Abbildparameter 42a bildet eine Bildzeile des zweiten Elementarbildes 47a. Der zweite Abbildparameter 42a ist eine Repräsentation des zweiten Urbildparameters 22a. Der zweite Abbildparameter 42a wird aus dem zweiten Bildparameter 32a dekodiert. Das zweite Elementarbild 47a weist eine Vielzahl unterschiedlicher zweiter Abbildparameter 42a auf, welche das zweite Elementarbild 47a zeilenweise ausbilden.

Das dritte Elementarbild 48a weist einen dritten Abbildparameter 44a auf. Der dritte Abbildparameter 44a ist eine von der Ortskoordinate 114a des Abbildes 14a abhängige Lichtintensitätsverteilung, die sich insbesondere über den dritten Spektralbereich 54a erstreckt. Die Ortskoordinate 114a ist im vorliegenden Fall eine x-Koordinate des Abbildes 14a. Der dritte Abbildparameter 44a bildet eine Bildzeile des dritten Elementarbildes 48a. Der dritte Abbildparameter 44a ist eine Repräsentation des dritten Urbildparameters 24a. Der dritte Abbildparameter 44a wird aus dem dritten Bildparameter 34 dekodiert. Das dritte Elementarbild 48a weist eine Vielzahl unterschiedlicher dritter Abbildparameter 44a auf, welche das dritte Elementarbild 48a zeilenweise ausbilden.

Im vorliegenden Fall kann die Situation bei der Enkodierung und bei der Dekodierung durch nachfolgende Schreibweise ausgedrückt werden:

$$I_{Urbild}(x,y,\lambda) \rightarrow I_{Bild}(y`,\lambda(x)) \rightarrow I_{Abbild}(x``,y``,\lambda)$$

wobei x, x'', y, y' und y'' räumliche Koordinaten und $\lambda$ eine Wellenlänge ist. $I_{Urbild}$ ist dabei eine Intensitätsverteilung eines Urbildes, $I_{Bild}$ eine Intensitätsverteilung eines Bildes und $I_{Abbild}$ eine Intensitätsverteilung eines Abbildes des Urbildes.

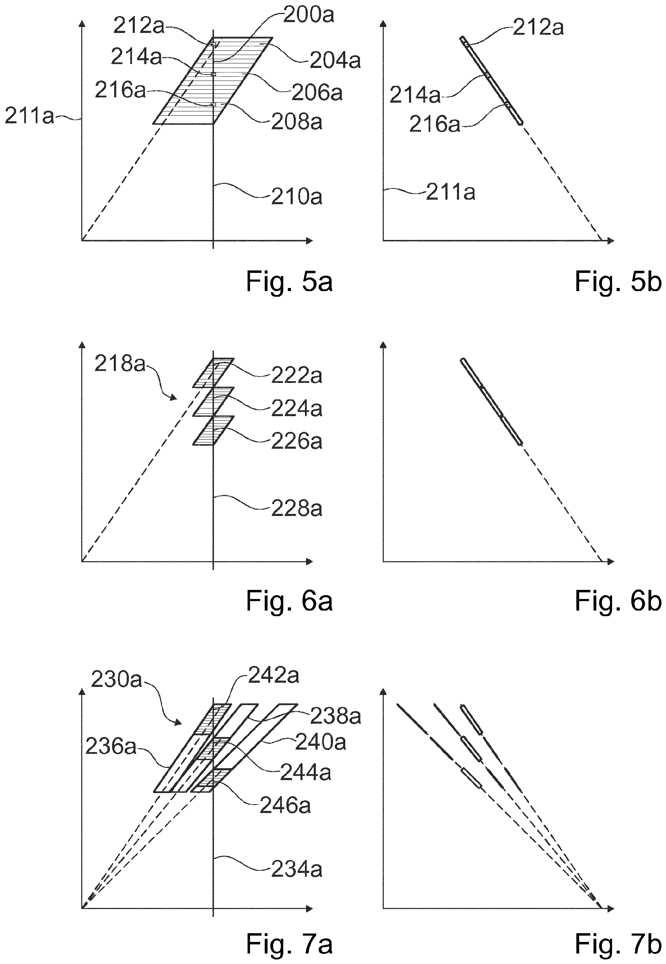

Die Figur 5 zeigt ein Dispersionsdiagramm für eine Erzeugung eines ersten beispielhaften spektral enkodierten Bildes 200a aus einem ersten beispielhaften Graustufen-Urbild zur Illustration einer Funktionsweise gemäß Stand der Technik einer spektralen Enkodierung/Dekodierung. In Figur 5a ist ein Enkodierungsschritt im Dispersionsdiagramm dargestellt. Breitbandiges weißes Licht entspricht einer Komposition von Licht aller sichtbaren Wellenlängen beziehungsweise einer Überlagerung verschiedener Spektralfarben. Folglich entspricht das Graustufen-Urbild einem Stapel von deckungsgleichen, gleichartig helligkeitsmodulierten (monochromatischen) Einzelbildern 204a, 206a, 208a unterschiedlicher Spektralfarbe beziehungsweise Lichtwellenlänge. Aus Gründen einer Anschaulichkeit sind die Einzelbilder 204a, 206a, 208a querschnittsartig und diskret in Form von Balken eingezeichnet. Tatsächlich umfasst das Graustufen-Urbild selbstverständlich virtuell unendlich viele monochromatische Einzelbilder, die jeweils einer bestimmten Wellenlänge aus einem kontinuierlichen Wellenlängenbereich entsprechen, welcher durch die Wellenlängenachse 211a repräsentiert wird. Bei einer Projektion durch ein nicht dargestelltes Dispersionselement, beispielsweise ein optisches Prisma oder ein Beugungsgitter, wird der Stapel von Einzelbildern geschert, weil die Einzelbilder unterschiedlicher Spektralfarbe beziehungsweise Lichtwellenlänge unterschiedlich stark versetzt werden. Dadurch gelangen von unterschiedlichen Einzelbildern 204a, 206a, 208a. etc. unterschiedliche Bildstreifen 212a, 214a, 216a an einen vorgesehenen Ort eines eindimensionalen Schirms, der durch eine Kodierungslinie 210a repräsentiert wird. Somit werden unterschiedliche Bildstreifen 212a, 214a, 216a, etc. des Graustufen-Urbildes in unterschiedlichen Spektralfarben repräsentiert und auf der Kodierungslinie 210a überlagert. Unter "Bildstreifen" eines Bildes sollen in diesem Zusammenhang Bildspalten verstanden werden, welche das Bild spaltenweise aufbauen, ähnlich zu Pixelspalten eines Digitalbildes, wobei ein Bild selbstverständlich kontinuierlich aus virtuell unendlich vielen Bildstreifen aufgebaut ist. "Bildstreifen" sind daher entsprechend analog zu "Bildparametern" im vorliegenden Fall zu verstehen, bauen das Bild aber relativ zu Bildparametern in einer um etwa 90° gedrehten Richtung auf. In Figur 5b ist ein Dekodierungsschritt im Dispersionsdiagramm dargestellt. Licht des spektral enkodierten Bildes 200a entspricht einem Stapel unterschiedlicher Bildstreifen unterschiedlicher Spektralfarbe. Bei einer Betrachtung durch ein nicht gezeigtes Dispersionselement wird das spektral enkodierte Bild 200a geschert, weil die Bildstreifen je nach Spektralfarbe beziehungsweise Lichtwellenlänge unterschiedlich stark versetzt werden. Dadurch werden die unterschiedlichen Bildstreifen farblich sortiert beziehungsweise der Wellenlänge nach aufgefächert. Somit entsteht eine regenbogenfarbige Version des Graustufen-Urbildes.

Die Figur 6 zeigt, als Fortschritt gegenüber dem Stand der Technik, ein Dispersionsdiagramm für eine Erzeugung eines zweiten beispielhaften spektral enkodierten Bildes 218a aus einem zweiten beispielhaften Urbild. Das zweite beispielhafte Urbild ist im vorliegenden Fall ein Farbbild, bestehend aus einer Reihe von einem roten, einem grünen und einem blauen Teilbild. Wie in der Figur 6a gezeigt werden RGB-Teilbilder des zweiten beispielhaften Urbildes durch ein nicht gezeigtes Dispersionselement projiziert, sodass drei RGB-Grundbilder 222a, 224a, 226a des spektral enkodierten Bildes 218a auf einem Schirm entstehen, der durch eine Kodierungslinie 228a repräsentiert ist. Ein rotes Teilbild des zweiten beispielhaften Urbildes entspricht einem Stapel von roten, langwelligen Einzelbildern. Ein grünes Teilbild des zweiten beispielhaften Urbildes entspricht einem Stapel von grünen, mittelwelligen Einzelbildern. Ein blaues Teilbild des zweiten beispielhaften Urbildes entspricht einem Stapel von blauen, kurzwelligen Einzelbildern. Bei einer Projektion durch das Dispersionselement, beispielsweise ein optisches Prisma oder Beugungsgitter, wird jedes der Teilbilder geschert, weil die Einzelbilder der Teilbilder unterschiedlicher Lichtwellenlänge unterschiedlich stark versetzt werden. Dadurch gelangen vom roten Teilbild des zweiten beispielhaften Urbildes unterschiedliche langwellige, also rote Bildstreifen, vom grünen Teilbild des zweiten beispielhaften Urbildes unterschiedliche mittelwellige, also grüne Bildstreifen, und vom blauen Teilbild des beispielhaften zweiten Urbildes unterschiedliche kurzwellige, also blaue Bildstreifen auf einen Schirm. Somit werden unterschiedliche Bildstreifen des zweiten beispielhaften Urbildes in unterschiedlichen, aber farblich ähnlichen Lichtwellenlängen repräsentiert und auf der Kodierungslinie 228a überlagert.

In der Figur 6b ist ein Dekodierungsschritt im Dispersionsdiagramm dargestellt. Das Licht des spektral enkodierten Bildes 218a auf der Kodierungslinie 228a entspricht einem Stapel von unterschiedlichen Bildstreifen unterschiedlicher Spektralfarbe. Bei einer Betrachtung durch ein Dispersionselement wird dieser Stapel geschert, weil die Bildstreifen je nach Spektralfarbe beziehungsweise Lichtwellenlänge unterschiedlich stark versetzt werden. Dadurch werden die unterschiedlichen Bildstreifen farblich sortiert beziehungsweise der Wellenlänge nach aufgereiht. Somit entstehen Elementarbilder des Abbildes, die im Vergleich zu den RGB-Teilbildern des zweiten beispielhaften Urbildes spektral reduziert, aber farblich ähnlich sind. Diese nebeneinander liegenden Elementarbilder müssen anschließend zur Überlagerung gebracht werden. Dies kann optisch, beispielsweise durch Reflektion an spiegelnden Oberflächen, computertechnisch oder durch eine Kombination von beidem geschehen. Es kann aufgrund, insbesondere dreier, unterschiedlich starker Dispersionsvorgänge vorkommen, dass die relative Helligkeit der Elementarbilder nicht der relativen Helligkeit der entsprechenden Teilbilder gleicht (im Dispersionsdiagramm sind die zugehörigen Stapel beispielsweise unterschiedlich dick). Durch geeignete Anpassung der Helligkeit der Teilbilder kann jedoch das gewünschte RGB-Abbild erzeugt werden.

Ein weiteres mögliches Verfahren besteht darin, das Urbild durch ein Beugungsgitter zu projizieren und hierbei die 4., 5. sowie 6. Beugungsordnung zu nutzen. Gemäß der allgemeinen Gitterformel

$$m\lambda = d\cdot\cos(\varepsilon)\cdot(\sin(\alpha)+\sin(\beta)),$$

wobei m eine Beugungsordnung, $\lambda$ eine Wellenlänge, d ein Abstand benachbarter Gitterlinien eines Gitters, $\varepsilon$ ein Winkel zwischen einer Ebene senkrecht zu den Gitterlinien und dem einfallenden beziehungsweise gebeugten Strahl, $\alpha$ ein Einfallswinkel und $\beta$ ein Beugungswinkel ist, überlagern sich Spektren der 4., 5. und 6. Beugungsordnung derart, dass die roten, grünen und blauen Spektralbereiche aufeinanderfallen. Umgekehrt kann das enkodierte Licht durch ein Beugungsgitter in den 4., 5. und 6. Beugungsordnungen dekodiert werden.

Die Figur 7 zeigt ein Dispersionsdiagramm für eine Erzeugung eines dritten beispielhaften spektral enkodierten Bildes 230a aus einem dritten beispielhaften Urbild mittels dreier dispersiver Elemente (nicht gezeigt). Das dritte beispielhafte Urbild ist ein Farbbild. In Figur 7a ist ein Enkodierungsschritt im Dispersionsdiagramm dargestellt. Das dritte beispielhafte Urbild entspricht einem Stapel von (monochromatischen) Einzelbildern unterschiedlicher Lichtwellenlänge, wobei sich langwellige, mittelwellige und kurzwellige Einzelbilder des dritten beispielhafte Urbildes im Allgemeinen in ihrer Helligkeitsmodulierung unterscheiden, da die drei Spektralbereiche drei unterschiedliche RGB-Teilbilder darstellen. Bei einer Projektion durch drei verschiedene Dispersionselemente entstehen drei unterschiedlich stark gescherte Stapel 236a, 238a, 240a, weil die Einzelbilder je nach Lichtwellenlänge und je nach Ausprägung der Dispersion unterschiedlich stark versetzt werden. Dadurch gelangen vom ersten Stapel 236a unterschiedliche langwellige, also rote Bildstreifen, vom zweiten Stapel 238a unterschiedliche mittelwellige, also grüne Bildstreifen, und vom dritten Stapel 240a unterschiedliche kurzwellige, also blaue Bildstreifen auf eine Kodierungslinie 234a und bilden dort ein rotes Grundbild 242a, ein grünes Grundbild 244a und ein blaues Grundbild 246a. Somit werden unterschiedliche Bildstreifen des dritten beispielhaften Urbildes jeweils in roten, grünen und blauen Spektralfarben repräsentiert und auf der Kodierungslinie 234a überlagert.

In der Figur 7b ist ein Dekodierungsschritt im Dispersionsdiagramm dargestellt. Das Licht auf dem Schirm entspricht einem Stapel von unterschiedlichen Bildstreifen in roten, grünen und blauen Spektralfarben. Bei einer Betrachtung durch drei unterschiedliche Dispersionselemente entstehen wiederum drei unterschiedlich stark gescherte Stapel, weil die Bildstreifen je nach Spektralfarbe und je nach Ausprägung der Dispersion unterschiedlich stark versetzt werden. Dadurch, dass sich die gescherten Stapel teilweise überlagern, überlagern sich die aufgereihten Bildstreifen zu Elementarbildern eines Abbildes des Urbildes gemäß den RGB-Farbmischgesetzen. Durch die Überlagerung von roten, grünen und blauen Elementarbildern ist das Abbild des dritten beispielhaften Urbildes eine spektral reduzierte aber farblich ähnliche Version des farbigen dritten beispielhaften Urbildes, ein so genanntes RGB-Abbild. Zudem entstehen im Allgemeinen mehrere Neben-Abbilder, nämlich zwei Neben-Abbilder mit roter Bildkomponente, zwei Neben-Abbilder mit grüner Komponente, sowie zwei Neben-Abbilder mit blauer Komponente. Je nach konkreter Umsetzung können sich einzelne Neben-Abbilder wiederum überlagern.

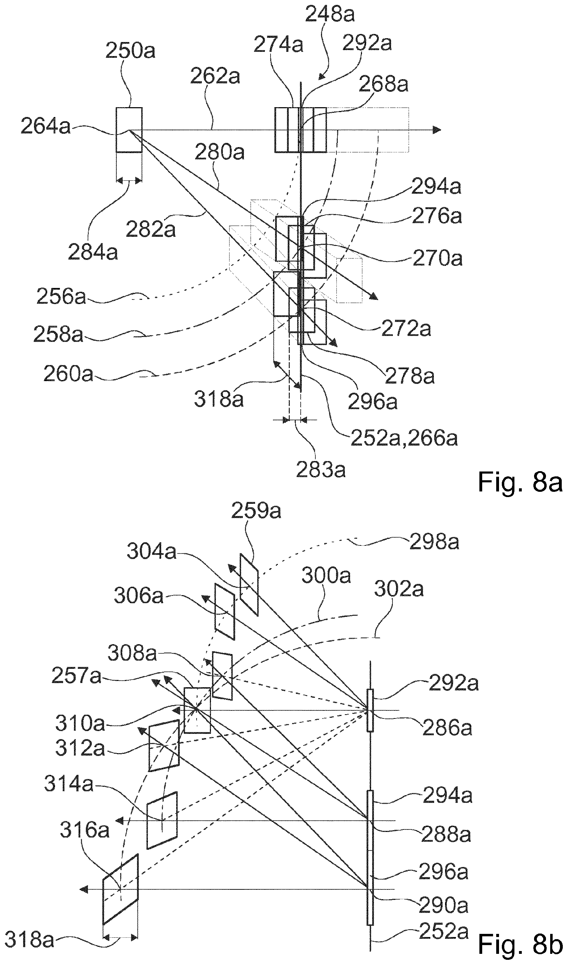

Die Figur 8 zeigt eine bildbasierte Konstruktionsmethode für eine Erzeugung eines beispielhaften vierten spektral enkodierten Bildes 248a und dessen Dekodierung. Das spektral enkodierte Bild 248a wird mittels Projektion eines vierten beispielhaften Urbildes 250a mit einem nicht gezeigten Projektor auf einen eindimensionalen Schirm 252a erzeugt. Das Urbild 250a wird dabei durch drei identische, hintereinander angeordnete und gegeneinander rotierte Beugungsgitter (nicht gezeigt) projiziert, um das spektral enkodierte Bild 248a zu erzeugen. Der Schirm 252a ist im vorliegenden Fall derart angeordnet, dass eine erste Beugungsordnung der Beugungsgitter auf den Schirm 252a projiziert wird. Das auf dem Schirm 252a erzeugte spektral enkodierte Bild 248a wird von einer geeigneten Position aus durch identische, in gleicher Weise gegeneinander rotierte Beugungsgitter betrachtet. Ein Betrachter sieht dann ein dem Urbild 250a farblich entsprechendes Abbild 257a sowie einige Neben-Abbilder 259a, die aus Gründen einer Übersichtlichkeit nicht alle mit Bezugszeichen versehen sind. Die Neben-Abbilder 259a und insbesondere das Abbild 257a erscheinen als virtuelle Bilder mitten im Raum neben dem Schirm.

Ausgehend von zwei Grundannahmen kann eine Bildverschiebung und eine Bildüberlagerung bei der spektralen Enkodierung und Dekodierung konstruiert werden.

1. Rotationsinvarianz

Ein dispersiver Versatz zwischen zwei Einzelbildern ist konstant, wenn das Beugungsgitter gedreht wird, solange dessen Abstand zum Schirm beibehalten wird. Diese Rotationsinvarianz basiert auf den Beugungeigenschaften des Beugungsgitters. Wenn das Beugungsgitter gedreht wird, bewegen sich die Mittelpunkte der Einzelbilder auf konzentrischen Kreisbahnen, deren gemeinsames Zentrum mit dem Mittelpunkt des Urbildes zusammenfällt.

2. Kongruenz

Die Bildverschiebung bei der Dekodierung ist entgegengesetzt gleich groß wie die Bildverschiebung bei der Enkodierung, solange die Beugungsgitter für die Dekodierung und das Auge rotationssymmetrisch zu den Beugungsgittern für die Enkodierung und dem Projektor angeordnet sind, wobei die Rotationsachse der eindimensionale Schirm ist. Unter dieser Bedingung sind das Urbild und das RGB-Abbild kongruent. Diese Kongruenz basiert auf der Umkehrbarkeit der Lichtwege und der Äquivalenz von Projektor und Auge.

In der Figur 8a ist eine bildbasierte Konstruktion zu einem Enkodierungsschritt dargestellt. Sie gibt das Abbildungsverfahren in Frontalansicht wieder. Aus Gründen einer Übersichtlichkeit sind in der Figur 8 drei Einzelbilder pro Spektralbereich hervorgehoben dargestellt. Tatsächlich treten selbstverständlich virtuell unendlich viele Einzelbilder auf.

1. Spektralbereiche

Zeichne um den Mittelpunkt 264a des Urbildes 250a konzentrische Kreise 256a, 258a, 260a mit Radien im Verhältnis 9:11:13 (450 nm:550 nm:650 nm). Sie stellen die ersten Beugungsordnungen von kurzwelligem, mittelwelligem und langwelligem Licht dar.

2. Horizontale Dispersion

Zeichne eine horizontale Linie 262a durch den Mittelpunkt 264a der konzentrischen Kreise 256a, 258a, 260a. Sie stellt die benötigte Dispersionsrichtung für die Enkodierung der blauen Einzelbilder dar.

3. Kodierungslinie

Zeichne eine vertikale Linie 266a durch den Schnittpunkt 268a von dieser horizontalen Linie 262a und dem Kreis 256a für kurzwelliges Licht. Sie stellt die Kodierungslinie 252a, also den Ort des eindimensionalen Schirms dar.

4. Bildmitten

Markiere drei Punkte 268a, 270a, 272a, in denen die vertikale Linie 266a die unterschiedlichen Kreise 256a, 258a, 260a schneidet. Diese Punkte 268a, 270a, 272a stellen die Mittelpunkte eines blauen, grünen beziehungsweise roten Einzelbildes 274a, 276a, 278a dar, die bei der Projektion des Urbildes 250a durch die dispersiven Elemente erzeugt werden.

5. Dispersionsrichtungen

Verbinde die drei Punkte 268a, 270a, 272a jeweils mit dem Mittelpunkt 264a des Urbildes 250a. Die drei entstehenden Verbindungslinien 262a, 280a, 282a stellen die drei benötigten Dispersionsrichtungen für die Enkodierung der blauen, grünen, beziehungsweise roten Bildstreifen des Urbildes 250a dar.

6. Bildbreite

Miss den horizontalen Abstand 283a zwischen dem Mittelpunkt des an die Kodierungslinie angrenzenden roten Einzelbildes kürzester Wellenlänge und der vertikalen Linie, also der Kodierungslinie 266a. Das Doppelte dieses Abstandes 283a entspricht der maximalen Breite 284a des Urbildes 250a und somit der maximalen Breite der Einzelbilder.

7. Spektren

Trage entlang der drei Dispersionsrichtungen 262a, 280a, 282a jeweils ein komplettes Spektrum aus mehreren Einzelbildern ein. Der Versatz zwischen zwei Einzelbildern ist für eine Spektralfolie mit einer gegebenen Gitterkonstante entlang der Dispersionsrichtung konstant. Einzelbilder gleicher Wellenlänge liegen also auf konzentrischen Kreisen.
Durch die Überlagerung verschiedener Bildstreifen auf dem Schirm 252a entstehen ein blaues Grundbild 292a, ein grünes Grundbild 294a und ein rotes Grundbild 296a auf dem Schirm, die gemeinsam das Bild 248a ausbilden.
In der Figur 8b ist eine bildbasierte Konstruktion zu einem Dekodierungsschritt dargestellt. Sie gibt das Abbildungsverfahren in Frontalansicht wieder.

1. Spektralbereiche

Zeichne um die Mittelpunkte 286a, 288a, 290a eines blauen Grundbildes 292a, eines grünen Grundbildes 294a und eines roten Grundbildes 296a des spektral enkodierten Bildes 248a auf dem Schirm 252a konzentrische Kreise 298a, 300a, 302a mit Radien im Verhältnis 9:11:13. Sie stellen die ersten Beugungsordnungen von kurzwelligem, mittelwelligem und langwelligem Licht dar.

2. RGB-Abbild

Zeichne den Ort des Urbildes in Bezug zur Kodierungslinie ein. Dieser Ort entspricht dem Ort des Abbildes 257a.

3. Dispersionsrichtungen

Übertrage die Dispersionsrichtungen aus dem Schema für die Enkodierung in das Schema für die Dekodierung.

4. Streifenmitten

Markiere jene sieben Punkte 304a, 306a, 308a, 310a, 312a, 314a, 316a, in denen die Linien für die Dispersionsrichtungen die linke Hälfte der zugehörigen Kreise schneiden. Diese Schnittpunkte stellen die Mittelpunkte von blauen, grünen, beziehungsweise roten Bildstreifen aus der Mitte des Urbildes 250a dar.

5. Platzierungslinien

Verbinde die sieben Schnittpunkte 304a, 306a, 308a, 310a, 312a, 314a, 316a jeweils mit dem Mittelpunkt des blauen Grundbildes 292a auf dem Schirm. Die entstehenden sieben Verbindungslinien nennen wir Platzierungslinien (aus Gründen einer Übersichtlichkeit nicht mit Bezugszeichen versehen), denn auf ihnen sind die Mittelpunkte der Bildstreifen platziert.

6. Dispersiver Versatz

Miss entlang der jeweiligen Dispersionsrichtung für die Enkodierung den Versatz 318a zwischen den äußeren enkodierten Einzelbildern. Dieser Versatz 318a bei der Enkodierung entspricht dem Versatz bei der Dekodierung.

7. Neben-Abbilder

Trage entlang der sieben Platzierungslinien jeweils die beiden äußeren Bildstreifen der Neben-Abbilder 259a ein. Übertrage hierbei den eben gemessenen Versatz entlang der jeweiligen Dispersionsrichtung, nicht entlang der Platzierungslinie.

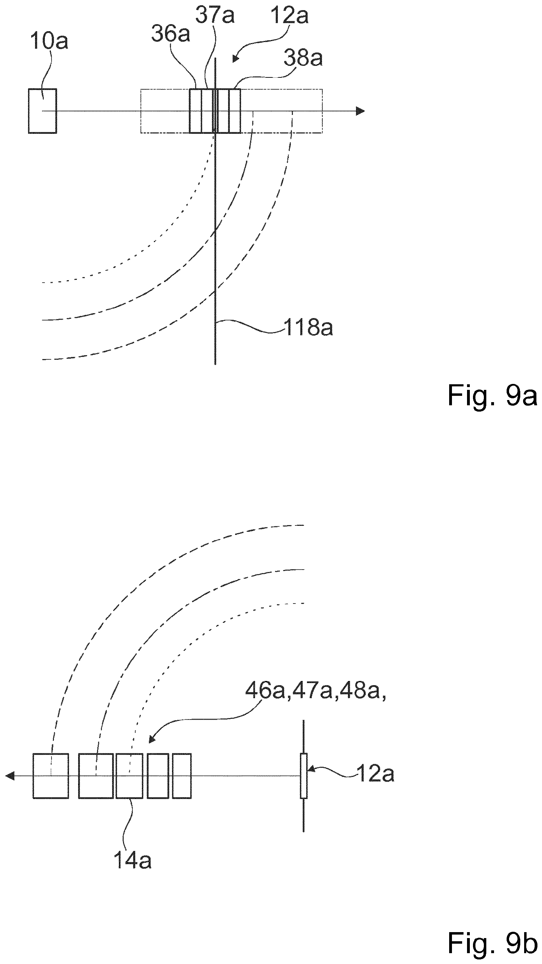

Analog hierzu können die spektrale Enkodierung und Dekodierung bei Verwendung paralleler Beugungsgitter unterschiedlicher Liniendichte dargestellt werden (vgl. Figur 9). Die Liniendichten der unterschiedlichen parallelen Beugungsgitter entsprechen hierbei der geometrischen Projektion der Liniendichten der gegeneinander rotierten Beugungsgitter. Sie lassen sich also berechnen als Produkt von der Liniendichte $g_r$ der rotierten Beugungsgitter und dem Cosinus des Winkels $\alpha$ des jeweiligen rotierten Gitters bezogen auf die Dispersionsrichtung für die blaue Bildkomponente:

$$g_p = g_r \cos(\alpha).$$

Wie ausgeführt kann bei Verwendung dreier rotierter dispersiver Elemente ein spektral enkodiertes Bild nur von einer bestimmten Position aus zu einer Dekodierung betrachtet werden, um ein insbesondere deutliches Abbild eines Urbildes zu erzeugen. Hingegen ergibt sich vorteilhaft eine Unabhängigkeit der erfindungsgemäßen Verfahren von Betrachterpositionen, falls dispersive Elemente mit parallelen Dispersionsrichtungen verwendet werden, welche insbesondere hintereinander und/oder vorteilhaft feinmaschig nebeneinander angeordnet sind.

Die Figur 9 zeigt, analog zu der Figur 8, eine schematische Darstellung einer Erzeugung des spektral enkodierten Bildes 12a (vgl. Fig. 9a) und dessen Dekodierung (vgl. Figur 9b) mittels der Enkodierungsvorrichtung 106a und der Dekodierungsvorrichtung 108a (vgl. Figur 1), die aus Gründen einer Übersichtlichkeit in der Figur 9 nicht dargestellt sind. Das spektral enkodierte Bild 12a wird in dem Verfahren zur Erzeugung eines spektral enkodierten Bildes 12a aus dem Urbild 10a erzeugt. Das Abbild 14a des Urbildes 10a wird in dem Verfahren zur Dekodierung eines spektral enkodierten Bildes 12a aus dem spektral enkodierten Bild 12a erzeugt.

Der erste Transformationsschritt und/oder der zweite Transformationsschritt werden mit zumindest einem dispersiven Element 60a, 62a (vgl. Fig. 10 und 11) durchgeführt. Der erste und der zweite Transformationsschritt werden mit unterschiedlichen dispersiven Elementen 60a, 62a durchgeführt. Im vorliegenden Fall wird der erste Transformationsschritt mit einem ersten dispersiven Element 60a durchgeführt. Ferner wird im vorliegenden Fall der zweite Transformationsschritt mit einem zweiten dispersiven Element 62a durchgeführt. Der erste Transformationsschritt und der zweite Transformationsschritt werden in unterschiedlichen Spektralbereichen 50a, 52a durchgeführt. Ferner wird zumindest ein dritter Transformationsschritt in einem dritten Spektralbereich 54a durchgeführt. Der dritte Transformationsschritt wird mittels eines dritten dispersiven Elements 64a durchgeführt (vgl. Fig. 10 und 11). Die verschiedenen Spektralbereiche 50a, 52a, 54a entsprechen dabei jeweils einer Grundfarbe, im vorliegenden Fall Blau, Grün und Rot. Wie insbesondere in den Figuren 3 bis 5 gezeigt, weist das spektral enkodierte Bild 12a die Grundbilder 36a, 37a, 38a verschiedener Grundfarben auf, die gemeinsam das Urbild 10a zumindest annähernd echtfarbig enkodieren. Ferner ist insbesondere den Figuren 1 sowie 3 bis 5 zu entnehmen, dass das spektral enkodierte Bild 12a räumlich zumindest im Wesentlichen eindimensional ist.

Unter Verwendung einer Definition eines Richtungsparameters

$$\Omega = \Omega(\varepsilon,\alpha,\beta) = \cos(\varepsilon)\cdot(\sin(\alpha)+\sin(\beta))$$

gilt für eine erste Beugungsordnung (m=1)

$$\lambda_i = \Omega d_i, \qquad i=1,2,3.$$

Für einen beliebigen Richtungsparameter $\Omega$ folgt dann

$$\lambda_1/\lambda_2/\lambda_3 = d_1/d_2/d_3.$$

Unabhängig von einem Richtungsparameter besteht, bei der Verwendung unterschiedlicher Beugungsgitter, demnach ein festes Verhältnis zwischen drei Wellenlängen $\lambda_1$, $\lambda_2$ und $\lambda_3$, beispielsweise Wellenlängen eines blauen, eines grünen und eines roten Bildstreifens. Für parallele Beugungsgitter tritt demnach ein bestimmter Bildstreifen eines bestimmten Spektralbereichs stets in Überlagerung mit bestimmten Bildstreifen anderer Spektralbereiche auf.

Grundsätzlich kann eine beliebige Anzahl von Transformationsschritten durchgeführt werden, indem eine entsprechende Anzahl von dispersiven Elementen verwendet wird. Auf diese Weise können beispielsweise andere Farbmischungen als eine RGB-Farbmischung realisiert werden. Insbesondere können zumindest zwei, vorteilhaft alle Enkodierungsschritte zumindest im Wesentlichen zeitgleich durchgeführt werden. Insbesondere können zumindest zwei, vorteilhaft alle Dekodierungsschritte zumindest im Wesentlichen zeitgleich durchgeführt werden. Insbesondere können zumindest ein Enkodierungsschritt und zumindest ein Dekodierungsschritt zumindest im Wesentlichen zeitgleich durchgeführt werden.

Wie in den Figuren 10 und 11 gezeigt, weisen die dispersiven Elemente 60a, 62a, 64a parallele Beugungsgitter 61a, 63a, 65a auf. Ferner sind die dispersiven Elemente 60a, 62a, 64a unmittelbar hintereinander angeordnet. Aufgrund dieser Anordnung treten jeweils dieselben drei Wellenlängen (beispielsweise 450 nm, 550 nm und 650 nm) entlang einer gemeinsamen Blickrichtung eines Betrachters auf das spektral enkodierte Bild 12a auf. Insbesondere erscheinen aus einer beliebigen Blickrichtung das erste Grundbild 36a, das zweite Grundbild 37a und das dritte Grundbild 38a beziehungsweise nach Betrachtung durch die dispersiven Elemente 60a, 62a, 64a das erste Elementarbild 46a, das zweite Elementarbild 47a und das dritte Elementarbild 48a des Abbildes 14a überlagert. Hierbei ist zu beachten, dass für die Enkodierung und die Dekodierung optisch identische erste dispersive Elemente 60a, optisch identische zweite dispersive Elemente 62a und optisch identische dritte dispersive Elemente 64a verwendet werden, die folgerichtig mit denselben Bezugszeichen versehen sind, obwohl sie selbstverständlich im einen Fall in der Enkodierungsvorrichtung 106a und im anderen Fall in der Dekodierungsvorrichtung 108a verbaut sind. "Optisch identisch" soll in diesem Fall insbesondere identisch bezüglich eines Dispersionsverhaltens bedeuten und vorteilhaft Beugungsgitter mit identischen Gitterkonstanten umfassend. Grundsätzlich ist aber selbstverständlich denkbar, verwendete Abstände zwischen dispersiven Elementen und deren dispersive Eigenschaften derart aufeinander abzustimmen, dass auch optisch verschiedene dispersive Elemente für die Enkodierung und die Dekodierung verwendet werden können. Ferner ist denkbar, bei einer Projektion eines Urbildes eine Vorverzerrung des Urbildes vorzunehmen, wodurch sich entsprechende Anpassungen der dispersiven Elemente und/oder deren Anordnung ergeben.

Ein Konstruktionsprinzip für das spektral enkodierte Bild 12a, welches aus dem Urbild 10a erzeugt wird (vgl. Fig. 9a), sowie ein Konstruktionsprinzip für das Abbild 14a des Urbildes 10a, welches aus dem spektral enkodierten Bild 12a erzeugt wird (vgl. Fig. 9b), basieren auf dem oben skizzierten Konstruktionsprinzip für den Fall gegeneinander rotierter Beugungsgitter (vgl. Fig. 8). In praktischer Hinsicht sind parallele Beugungsgitter zu bevorzugen, insbesondere aufgrund der genannten Unabhängigkeit von einer Betrachterposition. Rotierte Beugungsgitter erleichtern es jedoch, den Abbildungsvorgang im Sinne der bildbasierten Konstruktionsmethode theoretisch zu analysieren.

Zur weiteren Erläuterung zeigt die Figur 10 eine Frontalansicht dreier überlagerter Grundbilder 36a, 37a, 38a des spektral enkodierten Bildes 12a sowie Elementarbilder 46a, 47a, 48a eines Abbildes 14a des Urbildes 10a. Der Übersichtlichkeit halber sind in der Figur 10a drei monochromatische Einzelbilder einer bestimmten Wellenlänge von etwa 550 nm aus dem mittleren Spektralbereich 52a hervorgehoben. Die Situation für andere Wellenlängen wird sich einem Fachmann aber naheliegend erschließen. Die gestrichelte Linie deutet eine Gesamtheit aller Einzelbilder an, also ein Spektrum von Einzelbildern, beziehungsweise einen Bereich in welchen diese projiziert werden. Ein entsprechender monochromatischer Strahl 120a wird an dem ersten dispersiven Element 60a mit hoher Liniendichte stark abgelenkt, an dem zweiten dispersiven Element 62a mit mittelgroßer Liniendichte mittelmäßig abgelenkt, und an dem dritten dispersiven Element 64a mit kleiner Liniendichte schwach abgelenkt (vgl. Fig. 10a). Gemäß der oben angegebenen Gitterformel werden Strahlen größerer Wellenlänge jeweils stärker und Strahlen kleinerer Wellenlänge jeweils schwächer abgelenkt. Entsprechend gebeugte Strahlen 122a, 124a, 126a werden zu unterschiedlichen Orten 128a, 130a, 132a hin abgelenkt. Somit wird ein entsprechendes monochromatisches Einzelbild, mithin das ganze Spektrum des projizierten Urbildes 10a, je nach Liniendichte an einem anderen Ort erscheinen (siehe die drei eingezeichneten Einzelbilder an den Orten 128a, 130a, 132a). Insbesondere ergeben drei Beugungsgitter mit verschiedenen Liniendichten drei gegeneinander versetzte Spektren unterschiedlicher Länge. Diese Spektren von diversen Einzelbildern überlagern sich derart, dass auf dem Schirm 118a unterschiedliche Bildstreifen jeweils in Blau, Grün und Rot zusammenfallen.

Bei einer Dekodierung des spektral enkodierten Bildes 12a (vgl. Fig. 10b) wird ein Strahl mit einer gegebenen Wellenlänge von dem spektral enkodierten Bild je nach Liniendichte des Beugungsgitters des entsprechenden dispersiven Elements 60a, 62a, 64a unterschiedlich abgelenkt, sodass er jeweils von einem anderen Ort 138a, 136a, 134a zu kommen scheint. Die versetzten Bildstreifen unterschiedlicher Wellenlänge reihen sich zu Elementarbildern auf, wovon sich die drei Elementarbilder 46a, 47a, 48a zu dem RGB-Abbild 14a überlagern. Zusätzlich entstehen weitere Elementarbilder, die sich je zu zweit zu RG- und GB-Nebenabbildern überlagern beziehungsweise einzeln als R- und B-Nebenabbilder auftreten. Ferner sind einzeln noch ‚R- und B-Neben-Abbilder zu sehen. Die Elementarbilder 46a, 47a, 48a weisen dabei jeweils entlang ihrer x-Koordinaten einen Wellenlängengradienten auf, der sich von einem rechten Bildrand zu einem linken Bildrand über den entsprechenden Spektralbereich 50a, 52a, 54a erstreckt. Beispielsweise weist der rechte Bildrand des ersten Elementarbildes 46a im vorliegenden Fall eine Wellenlänge von etwa 400 nm und der linke Bildrand des ersten Elementarbildes 46a eine Wellenlänge von etwa 500 nm auf.

Die Figur 11 zeigt eine Anordnung der dispersiven Elemente 60a, 62a, 64a der Vorrichtung in einer schematischen Darstellung. Die dispersiven Elemente 60a, 62a, 64a sind unmittelbar hintereinander angeordnet. Die dispersiven Elemente 60a, 62a, 64a weisen jeweils ein Beugungsgitter 61a, 63a, 65a auf. Das erste dispersive Element 60a weist ferner eine Prismenanordnung 66a auf, welche mehrere Prismen 67a, 68a, 69a, etc. umfasst. Die gezeigte Anordnung der dispersiven Elemente 60a, 62a, 64a erlaubt eine Betrachtung einer ersten Beugungsordnung in einer zumindest im Wesentlichen geraden Richtung.

In den Figuren 12 bis 17 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 11 verwiesen werden kann. Zur Unterscheidung der Ausführungsbeispiele ist der Buchstabe a den Bezugszeichen des Ausführungsbeispiels in den Figuren 1 bis 11 nachgestellt. In den Ausführungsbeispielen der Figuren 12 bis 17 ist der Buchstabe a durch die Buchstaben b bis g ersetzt.

Für die meisten praktischen Anwendungen sind Neben-Abbilder überflüssig oder sogar störend. Zunächst ist zu beachten, dass bei der Bildbetrachtung ein dispersives Element wie ein Fenster wirkt, durch welches das spektral enkodierte Bild betrachtet wird. Ist das Fenster klein genug, sind auftretende Neben-Abbilder unsichtbar, so lange sie perspektivisch außerhalb eines gedachten Fensterrahmens liegen. Möchte man bei beliebiger Größe des Fensters eine Betrachtung von Neben-Abbildern umgehen, ordnet man die dispersiven Elemente für die Betrachtung nicht hintereinander, sondern kleinteilig und periodisch abwechselnd nebeneinander an, beispielsweise in Form von Streifen. Verschiedene alternative Anordnungen dispersiver Elemente 60.1b, 62.1b, 64.1b, 60.2b, 62.2b, 64.2b, 60.3b, 62.3b, 64.3b sind in der Figur 12 gezeigt. Durch zusätzliche unterschiedliche Farbfilter auf den unterschiedlichen Dispersionselementen beziehungsweise durch eine bestimmte Profilform des jeweiligen Beugungsgitters können Dispersionsstreifen 142b, 144b, 146b mit bestimmten dispersiven Eigenschaften so in ihrer jeweiligen spektralen Charakteristik optimiert werden, dass jeweils nur der relevante Spektralbereich transmittiert und andere Spektralbereiche absorbiert beziehungsweise durch destruktive Interferenz ausgelöscht werden. Jeder dieser Dispersionsstreifen 142b, 144b, 146b sollte einerseits schmal genug sein, damit er vom menschlichen beziehungsweise technischen Auge kaum noch räumlich aufgelöst werden kann, andererseits breit genug, damit unerwünschte Beugungseffekte vermieden werden. Insofern sollte jeder Dispersionsstreifen 142b, 144b, 146b etwa 0,5 mm bis 20 mm breit sein, je nach konkreter Anwendung.

Die Dispersionsstreifen 142b, 144b, 146b können parallel, senkrecht oder quer zu einer Dispersionsrichtung verlaufen. Streifenförmig zusammengesetzte Dispersionsanordnungen sollten entweder weit genug vom Auge entfernt sein, damit die einzelnen Dispersionsstreifen 142b, 144b, 146b kaum zu erkennen sind, oder nah genug am Auge sein, damit der Strahlenkegel von einem gegebenen Bildpunkt zur Pupille mindestens drei unterschiedliche Dispersionsstreifen 142b, 144b, 146b gleichzeitig durchstößt. Dadurch wird gewährleistet, dass das Abbild des Urbildes selbst streifenfrei erscheint. Anstelle von Dispersionsstreifen 142b, 144b, 146b können auch anders geformte Segmente, beispielsweise Dreiecke, Fünfecke, Sechsecke und/oder andere Vielecke oder Formen, verwendet werden.

Je nach Anwendungsgebiet kann anstelle von dispersiven Elementen auch eine spektral scannende Vorrichtung verwendet werden, die beispielsweise durch schmalbandige Farbfilter einzelne Teile eines spektral enkodierten Bildes nacheinander sendet beziehungsweise empfängt und diese optisch (beispielsweise mittels beweglicher Spiegel) oder computertechnisch nebeneinander beziehungsweise aufeinander legt. Hierbei kann bei Bedarf eine Trägheit eines menschlichen Sehsinns ausgenutzt werden, indem eine hochfrequente Sequenzierung (f > 25 Hz) als Gleichzeitigkeit wahrgenommen wird.

Die beschriebenen Verfahren und Vorrichtungen können zumindest teilweise als Displaytechnologien eingesetzt werden. Insbesondere können hierbei die Vorteile einer Rundumsichtbarkeit und/oder einer Spiegelimmunität ausgenutzt werden. Beispielsweise kann ein erfindungsgemäßes Bilderzeugungssystem in einem Head-up-Display oder als ein Konferenzsaal-Bilderzeugungssystem oder als ein Home-Cinema-System oder dergleichen verwendet werden. Insbesondere da ein spektral enkodiertes Bild lediglich durch zumindest ein entsprechendes dispersives Element betrachtet als Abbild eines Urbildes erscheint, können quasiprivate und/oder persönliche Displays realisiert werden. Insbesondere können verschiedene spektral enkodierte Bilder für verschiedene Betrachter mittels verschiedener Betrachtungselemente auf einem gemeinsamen Schirm bereitgestellt werden.

Werden die beschriebenen Verfahren als Alternative zu einer spektral kodierten Bilderfassung eingesetzt, ist vorteilhaft keine aufwändige Farbfilterung notwendig. Ferner kann auf zusätzliche Spiegel verzichtet werden. Außerdem ist keine Berechnung zu einer Bildüberlagerung notwendig. Ferner kann eine notwendige Scanbewegung vorteilhaft reduziert werden.

Ferner ist eine projektorunabhängige Umsetzung der beschriebenen Verfahren und Vorrichtungen denkbar. Dabei kann insbesondere ein aktiver Schirm beziehungsweise eine direkte Lichtquelle verwendet werden, wofür vorteilhaft durchstimmbare Laser oder LED-Lichtquellen mit willkürlich einstellbarem Spektrum infrage kommen. Ein derartiger Schirm könnte beispielsweise als dünner vertikaler Stab ausgebildet sein, welcher eine Vielzahl von Punkten eines spektral enkodierten Bildes übereinander erzeugt, welches wiederum von einem Betrachter durch eine geeignete Dekodierungsvorrichtung betrachtet werden könnte. Auch ist denkbar, einen solchen Schirm derart auszubilden, dass ein Licht eines spektral enkodierten Bildes von unten in den Schirm eingekoppelt und an geeigneter Stelle seitlich aus dem Schirm ausgekoppelt wird. Um das Licht gezielt an bestimmten Positionen auszukoppeln, könnte ein derartiger Schirm beispielsweise zumindest einen optischen Wellenleiter und/oder zumindest einen bewegten Spiegel umfassen. Hierdurch wäre eine gesteigerte Helligkeit und/oder eine Projektorunabhängigkeit und/oder eine verbesserte Lichtausbeute realisierbar. Insbesondere könnte eine entsprechende Vorrichtung als mobile Vorrichtung ausgebildet sein und/oder eine Verwendung bei störenden Lichtverhältnissen ermöglichen.

Es ist auch denkbar, ein weißes Spaltbild zu erzeugen und in geeigneter Weise zu einem Spaltspektrum zu dispergieren. Beispielsweise in drei insbesondere disjunkten, vorteilhaft gemäß einer RGB-Farbmischung ausgewählten Spektralbereichen kann anschließend eine Helligkeitsmodulation durchgeführt werden, mittels derer gemäß beispielsweise dreier Teilbilder eines Urbildes beispielsweise drei Proto-Elementarbilder mit einem Informationsgehalt erzeugt werden können, der jeweils einem Informationsgehalt beispielsweise dreier Grundbilder eines spektral enkodierten Bildes entspricht. Nach Helligkeitsmodulation werden die Proto-Elementarbilder zu einem Spaltbild rekombiniert um ein spektral enkodiertes Bild zu erzeugen.

Außerdem könnten in angepassten Verfahren mehrere spektral enkodierte Bilder gleichzeitig erzeugt und/oder betrachtet werden. Somit könnten Hologramm-ähnliche Abbilder und/oder unterschiedliche Abbilder und/oder scheinbar schwebende Abbilder, welche insbesondere von unterschiedlichen Betrachterpositionen sichtbar wären, erzeugt werden. Ferner wären 3D-Objekte abbildbar. Außerdem sind insbesondere in diesem Zusammenhang Anwendungen im Bereich semi-augmented-reality (SAR), augmented-reality (AR), virtual-reality (VR) und/oder mixed-reality (MR) denkbar.

Weiterhin ist es denkbar, die beschriebenen Verfahren und/oder Vorrichtungen in angepasster Weise in Computerbrillen/augmented reality glasses und/oder in einer Computerkontaktlinse/smart contact lens zu verwenden. Beispielsweise könnte ein entsprechendes Brillenglas oder eine entsprechende Kontaktlinse, insbesondere aktiv angesteuerte, dispersive Elemente aufweisen und/oder entsprechende Sensoren, die beispielsweise eine Positionsinformation eines Benutzers, Umgebungslicht-Parameter oder andere Umgebungsparameter erfassen können.

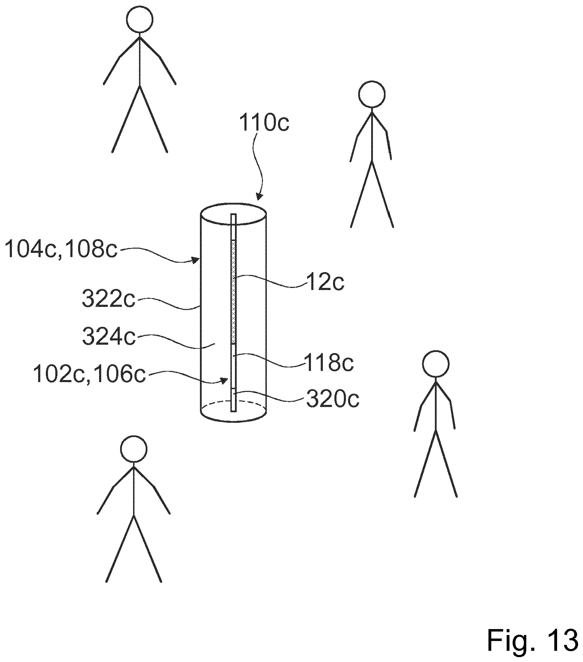

Die Figur 13 zeigt ein weiteres Bilderzeugungssystem 110c mit einer Enkodierungsvorrichtung 106c und einer Dekodierungsvorrichtung 108c in einer schematischen Darstellung.

Die Enkodierungsvorrichtung 106c weist zumindest eine Enkodierungseinheit 102c auf, welche zu einer Enkodierung zumindest eines ersten Urbildparameters in zumindest einen von zumindest einer Spektralkoordinate des spektral enkodierten Bildes 12c abhängigen ersten Bildparameter vorgesehen ist. Die Enkodierungseinheit 102c ist zu einer Enkodierung eines zweiten Urbildparameters in zumindest einen von der Spektralkoordinate des spektral enkodierten Bildes 12c abhängigen zweiten Bildparameter vorgesehen. Die Enkodierungseinheit 102c weist einen Schirm 118c auf. Der Schirm 118c ist als ein zumindest im Wesentlichen eindimensionaler aktiver Schirm ausgebildet. Der Schirm 118c ist dazu vorgesehen, das spektral enkodierte Bild 12c direkt mittels geeigneter, übereinander angeordneter zumindest im Wesentlichen punktförmiger Lichtquellen zu erzeugen, deren Spektren jeweils willkürlich einstellbar sind. Grundsätzlich sind selbstverständlich auch andere Geometrien für insbesondere aktive Schirme denkbar. Beispielsweise können vorteilhaft punktförmige Lichtquellen auch nebeneinander oder in bestimmten Mustern flächig angeordnet sein, um ein spektral enkodiertes Bild insbesondere direkt darzustellen. Die Enkodierungseinheit 102c weist eine Recheneinheit 320c auf, welche eine digitale Repräsentation des spektral enkodierten Bildes 12c aus dem Urbild errechnet und den Schirm 118c entsprechend ansteuert, um das spektral enkodierte Bild mittels des Schirms 118c darzustellen.

Die Dekodierungsvorrichtung 108c ist zur Erzeugung eines Abbildes eines Urbildes aus einem spektral enkodierten Bild 12c vorgesehen. Die Dekodierungsvorrichtung 108c weist zumindest eine Dekodierungseinheit 104c auf, welche zu einer Dekodierung zumindest eines ersten Abbildparameters aus zumindest einem von zumindest einer Spektralkoordinate des spektral enkodierten Bildes 12c abhängigen ersten Bildparameter vorgesehen ist. Die Dekodierungseinheit 104c ist zu einer Dekodierung zumindest eines zweiten Abbildparameters aus zumindest einem von der Spektralkoordinate des spektral enkodierten Bildes 12c abhängigen zweiten Bildparameter vorgesehen.

Die Dekodierungseinheit 104c weist ein Betrachtungselement 322c auf. Das Betrachtungselement 322c ist im vorliegenden Fall als ein den Schirm 118c umgebender Zylinder ausgebildet. Das Betrachtungselement 322c weist mehrere Lagen dispersiver Folien auf, die eine Oberfläche 324c des Betrachtungselements 322c ausbilden. Selbstverständlich ist aber auch denkbar, dass ein entsprechendes Betrachtungselement alternativ oder zusätzlich benachbart angeordnete Dispersionssegmente aufweist. Die dispersiven Folien sind analog zu den dispersiven Elementen aus dem Ausführungsbeispiel der Figuren 1 bis 11 angeordnet und ermöglichen insbesondere eine Durchführung von zumindest drei Dekodierungsschritten. Bei einer Betrachtung des spektral enkodierten Bildes 12c durch das Betrachtungselement 322c hindurch erscheint von verschiedenen Betrachtungspositionen aus das Abbild des Urbildes. Insbesondere ist das Abbild des Urbildes sowohl von Betrachtungspositionen um das Betrachtungselement 322c herum betrachtbar, als auch von Positionen innerhalb eines von dem Betrachtungselement 322c umschlossenen Raums. In letzterem Fall kann mittels des Betrachtungselements 322c ein Spiegelbild des Schirms 118c betrachtet werden. Je nach Ausgestaltung des Betrachtungselements 322c können ferner Neben-Abbilder sichtbar werden.

Grundsätzlich ist eine Anordnung denkbar, welche wie im Ausführungsbeispiel der Figuren 1 bis 11 einen Projektor und insbesondere einen passiven Schirm umfasst. Ein entsprechendes Betrachtungselement weist dann beispielsweise zumindest ein Loch und/oder einen Schlitz auf, durch welchen ein spektral enkodiertes Bild mittels Projektion auf dem Schirm erzeugbar ist. Alternativ ist auch denkbar, dass ein Projektor das Bild von einer Position schräg unterhalb oder oberhalb eines Schirms auf den Schirm projiziert, beispielsweise von einer Position innerhalb oder außerhalb eines durch ein Betrachtungselement definierten Raums.

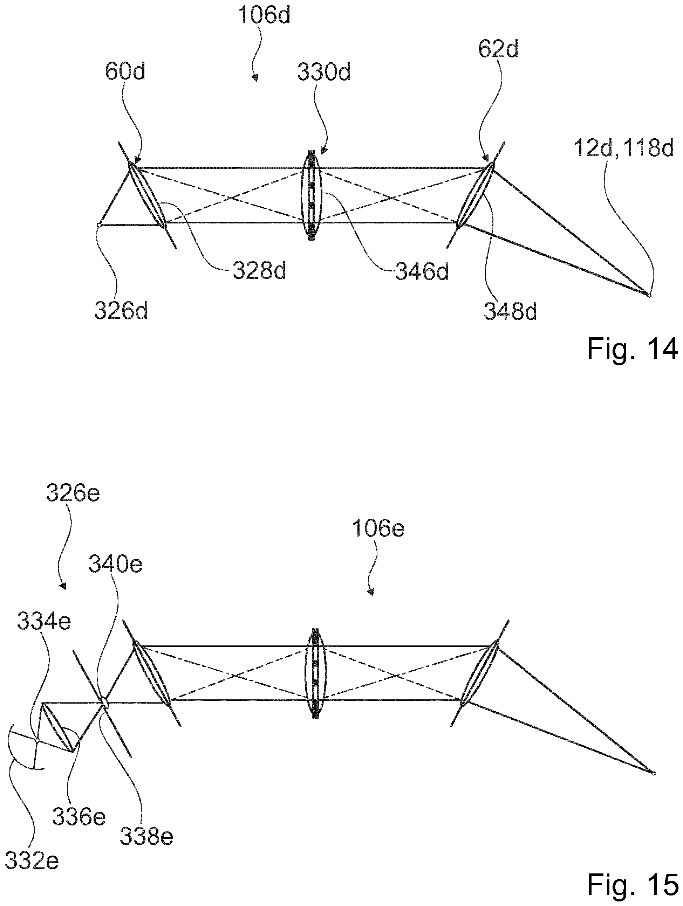

Die Figur 14 zeigt eine erste alternative Enkodierungsvorrichtung 106d in einer schematischen Darstellung. Die Figur 14 illustriert eine mögliche Anordnung zur Erzeugung eines spektral enkodierten Bildes 12d. Das spektral enkodierte Bild 12d kann beispielsweise auf einem Schirm 118d mittels Projektion erzeugt werden. Die erste alternative Enkodierungsvorrichtung 106d umfasst eine Lichtquelle 326d. Im vorliegenden Fall ist die Lichtquelle 326d eine linienartige und/oder linienförmige Lichtquelle. Die Lichtquelle 326d kann beispielsweise eine Xenon-Hochdrucklampe, oder auch deren, insbesondere scharfes oder unscharfes, Abbild, beispielsweise auf einer Spaltblende, insbesondere mit Konvexlinse, sein. Die erste alternative Enkodierungsvorrichtung 106d umfasst zumindest ein dispersives Element 60d, welches im vorliegenden Fall beispielhaft mit einer Abbildungsoptik 328d wie beispielsweise einer Linse und/oder einem Hohlspiegel oder dergleichen kombiniert ist. Mittels des dispersiven Elements 60d wird hierbei, vorzugsweise weißes, Licht der Lichtquelle 326d spektral aufgespalten. Dispergiertes Licht wird im vorliegenden Fall auf einen Spatial Light Modulator 330d projiziert. Unterschiedliche spektrale Komponenten der Lichtquelle 326d erscheinen somit an unterschiedlichen Orten des Spatial Light Modulators 330d. Vorteilhaft kann somit deren Intensität gezielt angepasst werden. Der Spatial Light Modulator 330d kann wiederum mit einer geeigneten Abbildungsoptik 346d kombiniert sein. Mittels des Spatial Light Modulators 330d werden, beispielsweise gemäß einer Grundfarbenmischung, Grundbilder erzeugt. Der Spatial Light Modulator 330d kann dabei beispielsweise mittels einer geeigneten Steuereinheit ansteuerbar sein, wobei die Steuereinheit vorzugsweise das enkodierte Bild mittels zumindest einer Enkodierungsroutine aus einem Urbild ermittelt, insbesondere errechnet. Insbesondere durch zeitlich veränderliche Ansteuerung des Spatial Light Modulators 330d können auf diese Weise auch spektral enkodierte Videos erzeugt werden. Mittels des Spatial Light Modulators 330d können zudem gezielte Verzerrungen und/oder Intentitätsmodulationen vorgenommen werden, beispielsweise um eine möglichst genaue Übereinstimmung zwischen dem Urbild und einem Abbild des Urbilds, welches aus dem enkodierten Bild 12d dekodiert wird, zu erzielen. Insbesondere kann somit eine Anpassung an dispersive Elemente, Abbildungsoptiken, geometrische Anordnungen und dergleichen einer Dekodierungsvorrichtung erfolgen. Licht, das durch den Spatial Light Modulator 330d tritt und moduliert ist, wird mittels eines weiteren dispersiven Elements 62d der ersten alternativen Enkodierungsvorrichtung 106d, insbesondere in Kombination mit einer geeigneten Abbildungsoptik 348d, auf den Schirm 118d projiziert. Insbesondere wird das Licht hierbei fokussiert, sodass eine hohe Lichtausbeute erzielt werden kann. Auf dem Schirm 118d kann somit beispielsweise ein zumindest im Wesentlichen eindimensionales enkodiertes Bild 12d erzeugt werden.

Die Figur 15 zeigt eine zweite alternative Enkodierungsvorrichtung 106e in einer schematischen Darstellung. Die zweite alternative Enkodierungsvorrichtung 106e ist grundsätzlich analog zu der ersten alternativen Enkodierungsvorrichtung 106d der Figur 14 ausgebildet. Eine Lichtquelle 326e der zweiten alternativen Enkodierungsvorrichtung 106e umfasst jedoch zusätzlich zumindest einen Hohlspiegel 332e, der in Projektionsrichtung hinter einem Leuchtmittel 334e, beispielsweise einer Xenon-Hochdrucklampe, der Lichtquelle 326e angeordnet ist. Zudem umfasst die Lichtquelle 326e zumindest eine Kondensorlinse 336e. Die Kondensorlinse 336e fokussiert Licht des Leuchtmittels 334e auf einen Spalt 338e mit zumindest einer Konvexlinse 340e. Vorteilhaft kann durch eine solche oder eine ähnliche Anordnung optischer Komponenten die Lichtausbeute weiter erhöht werden, insbesondere aufgrund des Hohlspiegels 332e. Zudem kann eine Abbildungsqualität nochmals gesteigert werden, insbesondere im Vergleich zu einer Anordnung gemäß der Figur 14.

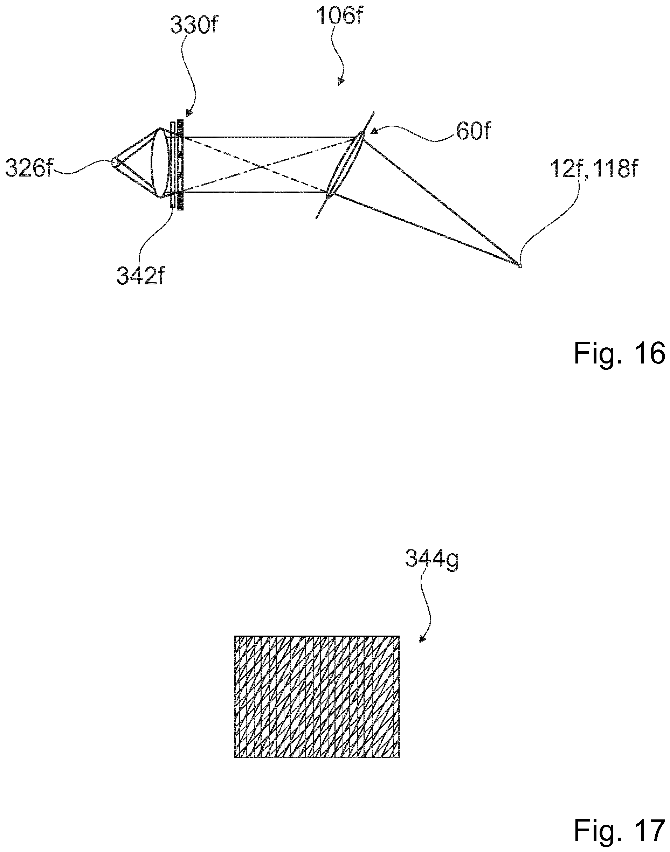

Die Figur 16 zeigt eine dritte alternative Enkodierungsvorrichtung 106f in einer schematischen Darstellung. Die dritte alternative Enkodierungsvorrichtung 106f weist zumindest eine Lichtquelle 326f auf. Zudem weist die dritte alternative Enkodierungsvorrichtung 106f wiederum einen Spatial Light Modulator 330f auf. Anstelle eines dispersiven Elements zwischen Lichtquelle und Spatial Light Modulator 330f weist die dritte alternative Enkodierungsvorrichtung 106f zumindest einen Regenbogenfilter 342f auf. Mittels des Regenbogenfilters 342f kann ein räumlich aufgespaltetes Spektrum eines weißen Lichts der Lichtquelle 326f erzeugt und auf den Spatial Light Modulator 330f zur weiteren Modulation gemäß eines zu erzeugenden spektral enkodierten Bilds 12f abgebildet werden. Der Regenbogenfilter 342f kann beispielsweise einen linear variablen Filter umfassen. Vorzugsweise umfasst der Regenbogenfilter 342f zumindest zwei, insbesondere aufeinandergelegte und/oder hintereinander angeordnete, linear variable Filter auf, die bevorzugt leicht gegeneinander verschoben sind. Vorteilhaft trifft Licht dabei möglichst parallel und/oder senkrecht auf die linear variablen Filter des Regenbogenfilters 342f, insbesondere um eine unerwünschte Verbreiterung einzelner Spektralbereiche zu vermeiden und/oder eine präzise Zuordnung zwischen Spektralfarbe und Ort zu erzielen. Die dritte alternative Enkodierungsvorrichtung 106f umfasst zudem zumindest ein dispersives Element 60f, insbesondere in Kombination mit einer Abbildungsoptik, mittels welcher moduliertes Licht auf einen Schirm 118f abgebildet werden kann. Hierbei sind vorteilhaft der Regenbogenfilter 342f und das dispersive Element 60f derart aufeinander abgestimmt, dass mittels des Spatial Light Modulators 330f erzeugte Grundbilder und/oder Bildstreifen für das spektral enkodierte Bild 12f auf dem Schirm 118f überlagert werden, sodass vorteilhaft eine hohe Lichtausbeute und/oder eine hohe Auflösung erzielt werden kann.

Selbstverständlich sind beliebige Kombinationen der in den Figuren 14 bis 16 gezeigten Ausführungsbeispiele denkbar. Grundsätzlich kann mittels eines Spatial Light Modulators ein spektral enkodiertes Bild analog zu dem insbesondere in der Figur 6 gezeigten Verfahren erzeugt werden, wobei Grundbilder beispielsweise übereinander auf einen Schirm abgebildet werden. Es sind aber auch andere Varianten für spektral enkodierte Bilder denkbar. Beispielsweise können spektral enkodierte Bilder mosaikartig erzeugt werden, wobei etwa ein mosaikartig aufgebautes Urbild (etwa analog zu einem Display-Bild mit mosaikartigen Pixeln, beispielsweise RGB-Pixeln, RGBW-Pixeln oder anderen Farbmischungen) spektral enkodiert wird. Ein Abbild des Urbilds hätte dann wiederum mosaikartig aufgebaute Pixel.

Die Figur 17 zeigt ein alternatives dispersives Element 344g. Das alternative dispersive Element 344g ist als ein Mehrfachstrichgitter ausgebildet. Das alternative dispersive Element 344g kann beispielsweise mehrere dispersive Elemente ausbilden. Insbesondere kann das alternative dispersive Element 344g alternativ zu einer Hintereinanderanordnung und/oder eine Nebeneinanderanordnung unterschiedlicher dispersiver Elemente, wie etwa in anderen Ausführungsbeispielen, verwendet werden. Hierbei kann beispielsweise ein Verrutschen und/oder eine fehlerhafte Anordnung dispersiver Elemente vermieden werden. Im vorliegenden Fall ist das dispersive Element 344g als ein Dreifachstrichgitter ausgebildet. Das dispersive Element 344g weist mehrere gegeneinander verdrehte optische Gitter mit unterschiedlichen Gitterkonstanten auf. Rotationswinkel zwischen diesen verdrehten optischen Gittern sind dabei, zumindest im Rahmen der zu erzielenden Überlagerung von Elementarbildern, beliebig anpassbar, etwa um einen Ort von auftretenden Nebenabbildern zu beeinflussen. Zudem ist denkbar, dass zumindest zwei der optischen Gitter und/oder einige der optischen Gitter oder auch alle optischen Gitter parallel angeordnet sind. Insbesondere können parallele Linien auch unmittelbar aufeinanderliegen und/oder zusammenfallen. Zudem kann das dispersive Element 344g mehrere optische Gitter mit identischer Gitterkonstante umfassen, die ebenfalls zueinander rotiert oder auch parallel sein können. Grundsätzlich können Parameter des dispersiven Elements 344g wie etwa Rotationswinkel, Gitterkonstanten, eine Anzahl an optischen Gittern und/oder deren Position zueinander beliebig angepasst sein.

Im Folgenden sollen noch beispielhaft mögliche Anordnungen von optischen Elementen, Projektionseinheit, Schirm, Betrachter und dergleichen beschrieben werden. Grundsätzlich sind jedoch beliebige andere Anordnungen denkbar. Die genannten Werte sind hierbei rein exemplarisch zu verstehen.

Beispielsweise ist denkbar, dass eine Projektionseinheit ein Urbild, insbesondere dessen überlagerte RGB-Teilbilder, durch zwei hintereinander angeordnete Geradsichtprismen projiziert. In etwa 3 m Abstand hinter den Geradsichtprismen könnte ein Schirm in Form einer matt polierten, vorzugsweise transluzenten Stange, beispielsweise einer Plexiglasstange, angeordnet sein. Ein Durchmesser der Stange kann beispielsweise 3 mm oder 5 mm oder vorzugsweise 7 mm, aber auch beispielsweise 10 mm oder dazwischenliegende Werte betragen. Auch noch schmalere Schirme sind denkbar, beispielsweise mit einem Durchmesser von 1 mm oder 2 mm. Eine Länge der Stange könnte etwa 0,7 m betragen. Zur Dekodierung könnten etwa Spektralbrillen verwendet werden, insbesondere mit drei unterschiedlichen dispersiven Elementen. Hierbei ist beispielsweise eine Verwendung eines Gitters mit etwa 450 Linien/mm, insbesondere für ein rotes Grundbild, eines Gitters mit etwa 550 Linien/mm, insbesondere für ein grünes Grundbild, und eines Gitters mit etwa 650 Linien/mm, beispielsweise für ein blaues Grundbild, denkbar. Vorzugsweise erfolgt eine Betrachtung in einem Abstand von beispielsweise 1 m von dem Schirm. Zur Optimierung einer Überlagerung spektral enkodierter Grundbilder ist eine, insbesondere computergenerierte, Vorverzerrung und/oder Helligkeitsmodulation des projizierten Urbilds und/oder seiner Teilbilder denkbar.

Ebenso ist eine Anordnung wie folgt denkbar: eine Projektion eines Urbilds könnte beispielsweise mittels einer geeigneten Projektionseinheit durch drei Beugungsfolien erfolgen. Eine erste Beugungsfolie kann beispielsweise etwa 1020 Linien/mm aufweisen. Eine zweite Beugungsfolie kann beispielsweise etwa 1200 Linien/mm aufweisen. Eine dritte Beugungsfolie kann beispielsweise 1380 Linien/mm aufweisen. Selbstverständlich ist auch ein Mehrfachstrichgitter anstelle mehrerer Beugungsfolien denkbar. In etwa 1,4 m Abstand von den Beugungsfolien könnte eine transluzente Stange, insbesondere eine matt polierte Stange, vorzugsweise aus Plexiglas, als Schirm angeordnet sein. Eine Länge der Stange könnte beispielsweise 0,5 m betragen, ein Durchmesser beispielsweise 1 mm. Zur Dekodierung könnten wiederum Spektralbrillen verwendet werden, insbesondere mit Beugungsfolien und/oder optischen Gittern mit identischer Linienzahl pro mm wie im Fall der ersten, zweiten und dritten Beugungsfolie. Dispersive Elemente zur Enkodierung und Dekodierung sind in diesem Fall optisch identisch. Im Abstand von etwa 1,4 m von dem Schirm ist in diesem Fall ein, insbesondere realfarbiges, Abbild eines Urbilds mit einer Breite von etwa 10 cm sichtbar. Ein roter Spektralbereich des Abbilds des Urbilds umfasst dabei beispielsweise einen Wellenlängenbereich von etwa 600 nm bis etwa 670 nm und/oder ein grünes einen Wellenlängenbereich von etwa 515 nm bis etwa 585 nm und/oder ein blaues einen Wellenlängenbereich von etwa 430 nm bis etwa 500 nm. Alternativ oder zusätzlich ist eine Verwendung eines, insbesondere ebenen, gekrümmten und/oder zylindrischen, Betrachtungsfensters mit entsprechenden Beugungsfolien denkbar. Hierbei ist denkbar, dass auf eine Vorverzerrung verzichtet wird, insbesondere aufgrund einer präzisen Abstimmung der verwendeten Komponenten und Abstände aufeinander.

Denkbar ist auch eine Verwendung dispersiver Elemente mit deutlich höheren Liniendichten, beispielsweise mit etwa 4200 Linien/mm für blaues Licht, mit etwa 3600 Linien/mm für grünes Licht und mit etwa 3060 Linien/mm für rotes Licht. Hierbei kann eine starke Ablenkung von projiziertem Licht erzielt werden, wodurch beispielsweise Licht seitlich relativ zu einer Projektionsrichtung einer Lichtquelle aus einer Projektionseinheit ausgekoppelt werden kann. Bei einer minimalen Ablenkung von etwa 152° und insbesondere bei Projektion auf einen zumindest im Wesentlichen eindimensionalen Schirm erscheint insbesondere in diesem Fall beispielsweise ein Abbild eines Urbilds in einem Abstand von etwa 1,4 m in einem Winkelbereich von etwa 12°, was einer Breite des Abbilds des Urbilds von etwa 30 cm entspricht. Es kann hierdurch vorteilhaft eine kompakte Bauweise erzielt werden. Zudem kann auf kurzem Abstand ein breites Abbild realisiert werden.

Selbstverständlich sind beliebige weitere Anordnungen, insbesondere auch in Kombination mit anders ausgebildeten Schirmen, denkbar. Zudem ist eine andere Farbmischung als eine RGB-Farbmischung denkbar.

**Patentansprüche**

1. Verfahren zur Erzeugung eines spektral enkodierten Bildes (12a-g) aus einem Urbild (10a-g), mit zumindest einem ersten Transformationsschritt, in welchem zumindest ein erster Urbildparameter (20a-g) in zumindest einen von zumindest einer Spektralkoordinate (100a-g) des spektral enkodierten Bildes (12a-g) abhängigen ersten Bildparameter (30a-g) enkodiert wird,

   wobei das Urbild (10a-g) zumindest ein erstes Teilbild (26a-g) aufweist, welches in ein erstes Grundbild (36a-g) enkodiert wird und einen ersten Spektralbereich (50a-g) umfasst,
   wobei der erste Urbildparameter (20a-g) eine von einer Ortskoordinate (112a-g) des Urbilds (10a-g) abhängige Lichtintensitätsverteilung ist, die sich über den ersten Spektralbereich (50a-g) erstreckt,
   wobei der erste Urbildparameter (20a-g) eine Bildzeile des ersten Teilbilds (26a-g) des Urbilds (10a-g) bildet und wobei der erste Bildparameter (30a-g) eine von der Spektralkoordinate (100a-g) des spektral enkodierten Bildes (12a-g) in dem ersten Spektralbereich (50a-g) abhängige Lichtintensitätsverteilung ist,
   wobei das spektral enkodierte Bild (12a-g) auf einem Schirm (118a-g) durch Projektion auf den Schirm (118a; 118b; 118d-g) erzeugt wird und/oder seitlich und/oder von unten in den Schirm eingekoppelt wird,
   und wobei das spektral enkodierte Bild (12a-g) räumlich zumindest im Wesentlichen eindimensional ist,
   **gekennzeichnet durch**
   zumindest einen zweiten Transformationsschritt, in welchem zumindest ein zweiter Urbildparameter (22a-g) in zumindest einen von der Spektralkoordinate (100a-g) des spektral enkodierten Bildes (12a-g) abhängigen zweiten Bildparameter (32a-g) enkodiert wird,
   wobei das Urbild (10a-g) zumindest ein zweites Teilbild (27a-g) aufweist, welches in ein zweites Grundbild (37a-g) enkodiert wird und welches einen zweiten Spektralbereich (52a-g) umfasst,
   wobei der zweite Urbildparameter (22a-g) eine von der Ortskoordinate (112a-g) des Urbildes (10a-g) abhängige Lichtintensitätsverteilung ist, die sich über den zweiten Spektralbereich (52a-g) erstreckt,
   wobei der zweite Urbildparameter (22a-g) eine Bildzeile des zweiten Teilbilds (27a-g) des Urbilds (10a-g) bildet,
   wobei der zweite Bildparameter (32a-g) eine von der Spektralkoordinate (100a-g) des spektral enkodierten Bildes (12a-g) in dem zweiten Spektralbereich (52a-g) abhängige Lichtintensitätsverteilung ist,
   wobei in zumindest dem ersten Transformationsschritt und in zumindest dem zweiten Transformationsschritt mittels Dispersion der Urbildparameter (22a; 22b; 22d-g) in den Bildparameter (32a; 32b; 32d-g) übersetzt wird,
   wobei der erste Transformationsschritt und der zweite Transformationsschritt mit unterschiedlichen dispersiven Elementen (60a, 62a, 64a; 60b, 62b, 64b; 60d-g, 62d-g, 64d-g), welche zumindest ein optisches Gitter und/oder zumindest ein Prisma umfassen, durchgeführt wird, so dass das spektral enkodierte Bild (12a; 12b; 12d-g) als Überlagerung unterschiedlicher Grundbilder (36a; 36b; 36d-g, 37a; 37b; 37d-g) erzeugt wird.

2. Verfahren zur Erzeugung eines spektral enkodierten Bildes (12a-g) aus einem Urbild (10a-g), mit zumindest einem ersten Transformationsschritt, in welchem zumindest ein erster Urbildparameter (20a-g) in zumindest einen von zumindest einer Spektralkoordinate (Lichtwellenlänge, 100a-g) des spektral enkodierten Bildes (12a-g) abhängigen ersten Bildparameter (30a-g) enkodiert wird,

   wobei das Urbild (10a-g) zumindest ein erstes Teilbild (26a-g) aufweist, welches in ein erstes Grundbild (36a-g) enkodiert wird und einen ersten Spektralbereich (50a-g) umfasst,
   wobei der erste Urbildparameter (20a-g) eine von einer Ortskoordinate (112a-g) des Urbilds (10a-g) abhängige Lichtintensitätsverteilung ist, die sich über den ersten Spektralbereich (50a-g) erstreckt,

wobei der erste Urbildparameter (20a-g) eine Bildzeile des ersten Teilbilds (26a-g) des Urbilds (10a-g) bildet und wobei der erste Bildparameter (30a-g) eine von der Spektralkoordinate (100a-g) des spektral enkodierten Bildes (12a-g) in dem ersten Spektralbereich (50a-g) abhängige Lichtintensitätsverteilung ist,

wobei das spektral enkodierte Bild (12a-g) auf einem Schirm (118a-g) durch Projektion auf den Schirm (118a; 118b; 118d-g) erzeugt wird und/oder seitlich und/oder von unten in den Schirm eingekoppelt wird,

und wobei das spektral enkodierte Bild (12a-g) räumlich zumindest im Wesentlichen eindimensional ist,

**gekennzeichnet durch**

zumindest einen zweiten Transformationsschritt, in welchem zumindest ein zweiter Urbildparameter (22a-g) in zumindest einen von der Spektralkoordinate (100a-g) des spektral enkodierten Bildes (12a-g) abhängigen zweiten Bildparameter (32a-g) enkodiert wird,

wobei das Urbild (10a-g) zumindest ein zweites Teilbild (27a-g) aufweist, welches in ein zweites Grundbild (37a-g) enkodiert wird und welches einen zweiten Spektralbereich (52a-g) umfasst,

wobei der zweite Urbildparameter (22a-g) eine von der Ortskoordinate (112a-g) des Urbilds (10a-g) abhängige Lichtintensitätsverteilung ist, die sich über den zweiten Spektralbereich (52a-g) erstreckt,

wobei der zweite Urbildparameter (22a-g) eine Bildzeile des zweiten Teilbilds (27a-g) des Urbilds (10a-g) bildet,

wobei der zweite Bildparameter (32a-g) eine von der Spektralkoordinate (100a-g) des spektral enkodierten Bildes (12a-g) in dem zweiten Spektralbereich (52a-g) abhängige Lichtintensitätsverteilung ist,

wobei in zumindest dem ersten Transformationsschritt und in zumindest dem zweiten Transformationsschritt rechnerbasiert der Urbildparameter (22a; 22b; 22d-g) in den Bildparameter (32a; 32b; 32d-g) übersetzt wird,

wobei der erste Transformationsschritt und der zweite Transformationsschritt zumindest mit einem Spatial Light Modulator (330d-f) durchgeführt werden, wofür Licht einer Lichtquelle (326d-f) mittels zumindest eines dispersiven Elements (60d; 60e) spektral aufgespalten und/oder mittels eines Regenbogenfilters (342f) spektral gefiltert wird, dieses Licht auf den Spatial Light Modulator (330d-f) zur weiteren Modulation gemäß des zu erzeugenden spektral enkodierten Bilds (12a; 12b, 12d-g) abgebildet wird, so dass das spektral enkodierte Bild (12a; 12b; 12d-g) auf dem Schirm (118a-g) als Überlagerung unterschiedlicher Grundbilder (36a; 36b; 36d-g, 37a; 37b; 37d-g) erzeugt wird.

3. Verfahren zur Dekodierung eines spektral enkodierten Bildes (12a-g) zur Erzeugung eines Abbildes (14a-g) eines Urbildes (10a-g), mit zumindest einem ersten Transformationsschritt, in welchem zumindest ein erster Abbildparameter (40a-g) aus zumindest einem von zumindest einer Spektralkoordinate (100a-g) des spektral enkodierten Bildes (12a-g) abhängigen ersten Bildparameter (30a-g) dekodiert wird,

wobei das Abbild (14a-g) des Urbilds (10a-g) ein erstes Elementarbild (46a-g) umfasst, welches einen ersten Spektralbereich (50a-g) umfasst und zumindest den ersten Abbildparameter (40a-g) aufweist,

wobei der erste Abbildparameter (40a-g) eine von einer Ortskoordinate (114a-g) des Abbilds (14a-g) abhängige Lichtintensitätsverteilung ist, die sich über den ersten Spektralbereich (50a-g) erstreckt,

wobei der erste Abbildparameter (40a-g) eine Bildzeile des ersten Elementarbilds (46a-g) bildet

und wobei der erste Bildparameter (30a-g) eine von der Spektralkoordinate (100a-g) des spektral enkodierten Bildes (12a-g) in dem ersten Spektralbereich (50a-g) abhängige Lichtintensitätsverteilung ist,

wobei das spektral enkodierte Bild (12a-g) räumlich zumindest im Wesentlichen eindimensional ist,

**gekennzeichnet durch**

zumindest einen zweiten Transformationsschritt, in welchem zumindest ein zweiter Abbildparameter (42a-g) aus zumindest einem von der Spektralkoordinate (100a-g) des spektral enkodierten Bildes (12a-g) abhängigen zweiten Bildparameter (32a-g) dekodiert wird

wobei das Abbild (14a-g) des Urbilds (10a-g) ein zweites Elementarbild (47a-g) umfasst, welches einen zweiten Spektralbereich (52a-g) umfasst und zumindest den zweiten Abbildparameter (42a-g) aufweist,

wobei der zweite Abbildparameter (42a-g) eine von der Ortskoordinate (114a-g) des Abbilds (14a-g) abhängige Lichtintensitätsverteilung ist, die sich über den zweiten Spektralbereich (52a-g) erstreckt,

wobei der zweite Abbildparameter (42a-g) eine Bildzeile des zweiten Elementarbilds (47a-g) bildet

wobei der zweite Bildparameter (32a-g) eine von der Spektralkoordinate (100a-g) des spektral enkodierten Bildes (12a-g) in dem zweiten Spektralbereich (52a-g) abhängige Lichtintensitätsverteilung ist,

wobei in zumindest dem ersten Transformationsschritt und in zumindest dem zweiten Transformationsschritt mittels Dispersion der Bildparameter (32a-g) in den Abbildparameter (14a-g) übersetzt wird,

wobei der erste Transformationsschritt und/oder der zweite Transformationsschritt mit zumindest einem dispersiven Element (60a-g, 62a-g, 64a-g) durchgeführt wird

wobei der erste Transformationsschritt und der zweite Transformationsschritt mit unterschiedlichen dispersiven Elementen (60ag, 62a-g) durchgeführt werden

wobei die dispersiven Elemente (60a-g, 62a-g, 64a-g) zumindest ein optisches Gitter und/oder zumindest ein Prisma umfassen,

wobei die dispersiven Elemente (60a-g, 62a-g, 64a-g) verschiedene räumliche Orientierungen relativ zu dem Urbild (10a-g) und/oder dem spektral enkodierten Bild (12a-g) aufweisen und/oder wobei die dispersiven Elemente (60a-g, 62a-g, 64a-g) aus verschiedenen Materialien gefertigt sind und/oder verschiedene Geometrien aufweisen und/oder wobei eine Position der dispersiven Elemente (60a, 62a, 64a; 60b, 62b, 64b; 60d-g, 62d-g, 64d-g) zueinander beliebig angepasst ist,

wobei bei dem Verfahren zur Dekodierung des spektral enkodierten Bilds (12a-g) die dispersiven Elemente (60a-g, 62a-g, 64a-g) zwischen einem Schirm (118a-g), und einem Betrachter angeordnet werden,

wobei das Licht auf dem Schirm (118a-g) Stapeln von unterschiedlichen Bildstreifen unterschiedlicher Spektralfarben entspricht,

wobei bei einer Betrachtung durch die unterschiedlichen dispersiven Elemente (60a-g, 62a-g, 64a-g) gescherte Stapel entstehen,

wobei **dadurch, dass** sich die gescherten Stapel teilweise überlagern, sich die aufgereihten Bildstreifen zu den Elementarbildern (46a-g; 47a-g) des Abbilds (14a-g) des Urbilds (10a-g) überlagern, so dass durch die Überlagerung von Elementarbildern (46a-g, 47a-g) das Abbild (14a-g) des Urbilds (10a-g) erzeugt wird.

4. Verfahren nach Anspruch 1 oder 3, **dadurch gekennzeichnet, dass** die dispersiven Elemente (60a, 62a, 64a) zumindest teilweise unmittelbar hintereinander angeordnet sind.

5. Verfahren nach einem der Ansprüche 1, 3 oder 4, **dadurch gekennzeichnet, dass** die dispersiven Elemente (60b, 62b, 64b) zumindest teilweise nebeneinander angeordnet sind.

6. Verfahren nach einem der vorhergehenden Ansprüche, **dadurch gekennzeichnet, dass** der erste Transformationsschritt in einem anderen Spektralbereich (50a-g) durchgeführt wird als der zweite Transformationsschritt.

7. Verfahren nach Anspruch 6, **gekennzeichnet durch** zumindest einen dritten Transformationsschritt, welcher in einem anderen Spektralbereich (54a-g) durchgeführt wird als der erste und der zweite Transformationsschritt.

8. Verfahren nach einem der vorhergehenden Ansprüche, **dadurch gekennzeichnet, dass** die verschiedenen Spektralbereiche (50a-g, 52ag, 54a-g) jeweils einer Grundfarbe entsprechen.

9. Verfahren nach einem der vorhergehenden Ansprüche, **dadurch gekennzeichnet, dass** das spektral enkodierte Bild (12a) mehrere Grundbilder (36a, 37a, 38a) verschiedener Grundfarben aufweist, die gemeinsam das Urbild (10a) zumindest annähernd echtfarbig enkodieren.

10. Enkodierungsvorrichtung zur Erzeugung eines spektral enkodierten Bildes (12a-g) aus einem Urbild (10a-g) mittels eines Verfahrens zumindest nach Anspruch 1, mit zumindest einer Enkodierungseinheit (102a-g), welche zu einer Enkodierung zumindest eines ersten Urbildparameters (20a-g) in zumindest einen von zumindest einer Spektralkoordinate (100a-g) des spektral enkodierten Bildes (12a-g) abhängigen ersten Bildparameter (30a-g) vorgesehen ist,

wobei das Urbild (10a-g) zumindest ein erstes Teilbild (26a-g) aufweist, welches in ein erstes Grundbild (36a-g) enkodiert wird und einen ersten Spektralbereich (50a-g) umfasst, wobei der erste Urbildparameter (20a-g) eine von einer Ortskoordinate (112a-g) des Urbilds (10a-g) abhängige Lichtintensitätsverteilung ist, die sich über den ersten Spektralbereich (50a-g) erstreckt,

wobei der erste Urbildparameter (20a-g) eine Bildzeile des ersten Teilbilds (26a-g) des Urbilds (10a-g) bildet und wobei der erste Bildparameter (30a-g) eine von der Spektralkoordinate (100a-g) des spektral enkodierten Bildes (12a-g) in dem ersten Spektralbereich (50a-g) abhängige Lichtintensitätsverteilung ist,

**dadurch gekennzeichnet, dass**

die Enkodierungseinheit (102a-g) zu einer Enkodierung eines zweiten Urbildparameters (22a-g) in zumindest einen von der Spektralkoordinate (100a-g) des spektral enkodierten Bildes (12a-g) abhängigen zweiten Bildparameter (32a-g) vorgesehen ist,

wobei das Urbild (10a-g) zumindest ein zweites Teilbild (27a-g) aufweist, welches in ein zweites Grundbild (37a-g) enkodiert wird und welches einen zweiten Spektralbereich (52a-g) umfasst,

wobei der zweite Urbildparameter (22a-g) eine von der Ortskoordinate (112a-g) des Urbildes (10a-g) abhängige Lichtintensitätsverteilung ist, die sich über den zweiten Spektralbereich (52a-g) erstreckt,

wobei der zweite Urbildparameter (22a-g) eine Bildzeile des zweiten Teilbilds (27a-g) des Urbilds (10a-g) bildet und

wobei der zweite Bildparameter (32a-g) eine von der Spektralkoordinate (100a-g) des spektral enkodierten Bildes (12a-g) in dem zweiten Spektralbereich (52a-g) abhängige Lichtintensitätsverteilung ist,

wobei die Enkodierungsvorrichtung (106a-g) zumindest ein erstes dispersives Element (60a, 62a, 64a; 60b, 62b, 64b; 60d-g, 62d-g, 64d-g) mit zumindest einem optischen Gitter und/oder mit zumindest einem Prisma und zumindest ein zu dem ersten dispersiven Element (60a, 62a, 64a; 60b, 62b, 64b; 60d-g, 62d-g, 64d-g) unterschiedliches zweites dispersives Element (60a, 62a, 64a; 60b, 62b, 64b; 60d-g, 62d-g, 64d-g) mit zumindest einem optischen Gitter und/oder mit zumindest einem Prisma aufweist, so dass das spektral enkodierte Bild (12a; 12b; 12d-g) als Überlagerung unterschiedlicher Grundbilder (36a; 36b; 36d-g, 37a; 37b; 37d-g) erzeugt wird,

und wobei die Enkodierungseinheit (102a-g) einen Schirm (118a-g) aufweist, auf welchen das spektral enkodierte Bild (12a-g) projiziert wird und/oder in welchen das spektral enkodierte Bild (12a-g) seitlich und/oder von unten eingekoppelt wird.

11. Enkodierungsvorrichtung zur Erzeugung eines spektral enkodierten Bildes (12a-g) aus einem Urbild (10a-g) mittels eines Verfahrens zumindest nach Anspruch 2, mit zumindest einer Enkodierungseinheit (102a-g), welche zu einer Enkodierung zumindest eines ersten Urbildparameters (20a-g) in zumindest einen von zumindest einer Spektralkoordinate (Lichtwellenlänge, 100a-g) des spektral enkodierten Bildes (12a-g) abhängigen ersten Bildparameter (30a-g) vorgesehen ist,

wobei das Urbild (10a-g) zumindest ein erstes Teilbild (26a-g) aufweist, welches in ein erstes Grundbild (36a-g) enkodiert wird und einen ersten Spektralbereich (50a-g) umfasst,

wobei der erste Urbildparameter (20a-g) eine von einer Ortskoordinate (112a-g) des Urbilds (10a-g) abhängige Lichtintensitätsverteilung ist, die sich über den ersten Spektralbereich (50a-g) erstreckt,

wobei der erste Urbildparameter (20a-g) eine Bildzeile des ersten Teilbilds (26a-g) des Urbilds (10a-g) bildet und

wobei der erste Bildparameter (30a-g) eine von der Spektralkoordinate (100a-g) des spektral enkodierten Bildes (12a-g) in dem ersten Spektralbereich (50a-g) abhängige Lichtintensitätsverteilung ist,

**dadurch gekennzeichnet, dass**

die Enkodierungseinheit (102a-g) zu einer Enkodierung eines zweiten Urbildparameters (22a-g) in zumindest einen von der Spektralkoordinate (100a-g) des spektral enkodierten Bildes (12a-g) abhängigen zweiten Bildparameter (32a-g) vorgesehen ist,

wobei das Urbild (10a-g) zumindest ein zweites Teilbild (27a-g) aufweist, welches in ein zweites Grundbild (37a-g) enkodiert wird und welches einen zweiten Spektralbereich (52a-g) umfasst,

wobei der zweite Urbildparameter (22a-g) eine von der Ortskoordinate (112a-g) des Urbilds (10a-g) abhängige Lichtintensitätsverteilung ist, die sich über den zweiten Spektralbereich (52a-g) erstreckt,

wobei der zweite Urbildparameter (22a-g) eine Bildzeile des zweiten Teilbilds (27a-g) des Urbilds (10a-g) bildet und

wobei der zweite Bildparameter (32a-g) eine von der Spektralkoordinate (100a-g) des spektral enkodierten Bildes (12a-g) in dem zweiten Spektralbereich (52a-g) abhängige Lichtintensitätsverteilung ist,

wobei die Enkodierungsvorrichtung (106a-g) zumindest einen Spatial Light Modulator (330d-f), zumindest eine Lichtquelle (326d-f) und zumindest ein dispersives Element (60d; 60e) und/oder zumindest einen Regenbogenfilter (342f) aufweist,

wobei Licht der Lichtquelle (326d-f) mittels des dispersiven Elements (60d; 60e) spektral aufgespalten und/oder mittels des Regenbogenfilters (342f) spektral gefiltert wird,

wobei aus diesem Licht mittels des Spatial Light Modulators (330d-f) die Grundbilder (36a; 36b; 36d-g, 37a; 37b; 37d-g) erzeugt (330d-f) werden,

wobei das spektral enkodierte Bild (12a; 12b; 12d-g) als Überlagerung der unterschiedlichen Grundbilder (36a; 36b; 36d-g, 37a; 37b; 37d-g) erzeugt wird

und wobei die Enkodierungseinheit (102a-g) einen Schirm (118a-g) aufweist, auf welchen das spektral enkodierte Bild (12a-g) projiziert wird und/oder in welchen das spektral enkodierte Bild (12a-g) seitlich und/oder von unten eingekoppelt wird.

12. Dekodierungsvorrichtung zur Erzeugung eines Abbildes (14a-g) eines Urbildes (10a-g) aus einem spektral enkodierten Bild (12a-g) mittels eines Verfahrens zumindest nach den Ansprüchen 1 oder 2, mit zumindest einer Dekodierungseinheit (104a-g), welche zu einer Dekodierung zumindest eines ersten Abbildparameters (40a-g) aus zumindest einem von zumindest einer Spektralkoordinate (100a-g) des spektral enkodierten Bildes (12a-g) abhängigen ersten Bildparameter (30a-g) vorgesehen ist,

wobei das Abbild (14a-g) des Urbilds (10a-g) ein erstes Elementarbild (46a-g) umfasst, welches einen ersten Spektralbereich (50a-g) umfasst und zumindest den ersten Abbildparameter (40a-g) aufweist,

wobei der erste Abbildparameter (40a-g) eine von einer Ortskoordinate (114a-g) des Abbilds (14a-g) abhängige Lichtintensitätsverteilung ist, die sich über den ersten Spektralbereich (50a-g) erstreckt,

wobei der erste Abbildparameter (40a-g) eine Bildzeile des ersten Elementarbilds (46a-g) bildet

und wobei der erste Bildparameter (30a-g) eine von der Spektralkoordinate (100a-g) des spektral enkodierten Bildes (12a-g) in dem ersten Spektralbereich (50a-g) abhängige Lichtintensitätsverteilung ist,

**dadurch gekennzeichnet, dass**

die Dekodierungseinheit (104a-g) zu einer Dekodierung zumindest eines zweiten Abbildparameters (42a-g) aus zumindest einem von der Spektralkoordinate (100a-g) des spektral enkodierten Bildes (12a-g) abhängigen zweiten Bildparameter (32a-g) vorgesehen ist,

wobei das Abbild (14a-g) des Urbilds (10a-g) ein zweites Elementarbild (47a-g) umfasst, welches einen zweiten Spektralbereich (52a-g) umfasst und zumindest den zweiten Abbildparameter (42a-g) aufweist,

wobei der zweite Abbildparameter (42a-g) eine von der Ortskoordinate (114a-g) des Abbilds (14a-g) abhängige Lichtintensitätsverteilung ist, die sich über den zweiten Spektralbereich (52a-g) erstreckt,

wobei der zweite Abbildparameter (42a-g) eine Bildzeile des zweiten Elementarbilds (47a-g) bildet

und wobei der zweite Bildparameter (32a-g) eine von der Spektralkoordinate (100a-g) des spektral enkodierten Bildes (12a-g) in dem zweiten Spektralbereich (52a-g) abhängige Lichtintensitätsverteilung ist

wobei die Dekodierungsvorrichtung (108a-g) zumindest ein dispersives Element (60a-g, 62a-g, 64a-g) umfasst,

wobei die Dekodierungsvorrichtung (108a-g) zumindest ein von dem ersten dispersiven Element (60a-g, 62a-g, 64a-g) unterschiedliches zweites dispersives Element (60a-g, 62a-g, 64a-g) umfasst, so dass die Überlagerung von Elementarbildern (46a-g, 47a-g) das Abbild (14a-g) des Urbilds (10a-g) erzeugt,

wobei die dispersiven Elemente (60a-g, 62a-g, 64a-g) zumindest ein optisches Gitter und/oder zumindest ein Prisma umfassen,

wobei die dispersiven Elemente (60a-g, 62a-g, 64a-g) verschiedene räumliche Orientierungen relativ zu dem Urbild (10a-g) und/oder dem spektral enkodierten Bild (12a-g) aufweisen und/oder wobei die dispersiven Elemente (60a-g, 62a-g, 64a-g) aus verschiedenen Materialien gefertigt sind und/oder verschiedene Geometrien aufweisen und/oder wobei eine Position der dispersiven Elemente (60a, 62a, 64a; 60b, 62b, 64b; 60d-g, 62d-g, 64d-g) zueinander beliebig angepasst ist.

13. Bilderzeugungssystem, insbesondere Display, Head-up-Display oder Projektorsystem, mit zumindest einer Enkodierungsvorrichtung (106a-g) nach Anspruch 10 oder 11 und mit zumindest einer Dekodierungsvorrichtung (108a-g) nach Anspruch 12.

## Claims

1. A method for generating a spectrally encoded image (12a-g) from an original image (10a-g), with at least one first transformation step, in which at least one first original image parameter (20a-g) is encoded into at least one first image parameter (30a-g), which is dependent on at least one spectral coordinate (100a-g) of the spectrally encoded image (12a-g), wherein the original image (10a-g) comprises at least one first component image (26a-g), which is encoded into a first basic image (36a-g) and comprises a first spectral band (50a-g),

wherein the first original image parameter (20a-g) is a light intensity distribution that is dependent on a spatial coordinate (112a-g) of the original image (10a-g) and extends over the first spectral band (50a-g), wherein the first original image parameter (20a-g) forms an image line of the first component image (26a-g) of the original image (10a-g),

and wherein the first image parameter (30a-g) is a light intensity distribution that is dependent on the spectral coordinate (100a-g) of the spectrally encoded image (12a-g) in the first spectral band (50a-g), wherein the spectrally encoded image (12a-g) is generated on a screen (118a-g) via projection onto the screen (118a; 118b; 118d-g) and/or is coupled into the screen (118a-g) sidewise and/or from below,

and wherein the spectrally encoded image (12a-g) is spatially at least substantially one-dimensional,

**characterized by** at least one second transformation step, in which at least one second original image parameter (22a-g) is encoded into at least one second image parameter (32a-g) that is dependent on the spectral coordinate (100a-g) of the spectrally encoded image (12a-g),

wherein the original image (10a-g) comprises at least one second component image (27a-g), which is encoded into a second basic image (37a-g) and which comprises a second spectral band (52a-g),

wherein the second original image parameter (22a-g) is a light intensity distribution that is dependent on the spatial coordinate (112a-g) of the original image (10a-g) and extends over the second spectral band (52a-g),

wherein the second original image parameter (22a-g) forms an image line of the second component image (27a-g) of the original image (10a-g),

wherein the second image parameter (32a-g) is a light intensity distribution that is dependent on the spectral coordinate (100a-g) of the spectrally encoded image (12a-g) in the second spectral band (52a-g),

wherein, at least in the first transformation step and/or at least in the second transformation step, the original image parameter (22a; 22b; 22d-g) is translated into the image parameter (32a; 32b; 32d-g) via dispersion,

wherein the first transformation step and the second transformation step are carried out with different dispersive elements (60a, 62a, 64a; 60b, 62b, 64b; 60d-g, 62d-g, 64d-g), which comprise at least one optical grating and/or at least one prism,

and thus the spectrally encoded image (12a; 12b; 12d-g) is generated as a superposition of different basic images (36a; 36b; 36d-g; 37a; 37b; 37d-g).

2. A method for generating a spectrally encoded image (12a-g) from an original image (10a-g), with at least one first transformation step, in which at least one first original image parameter (20a-g) is encoded into at least one first image parameter (20a-g), which is dependent on at least one spectral coordinate (light wave length, 100a-g) of the spectrally encoded image (12a-g),

wherein the original image (10a-g) comprises at least one first component image (26a-g), which is encoded into a first basic image (36a-g) and comprises a first spectral band (50a-g),

wherein the first original image parameter (20a-g) is a light intensity distribution that is dependent on a spatial coordinate (112a-g) of the original image (10a-g) and extends over the first spectral band (50a-g), wherein the first original image parameter (forms an image line of the first component image (26a-g) of the original image (10a-g),

and wherein the first image parameter (30a-g) is a light intensity distribution that is dependent on the spectral coordinate (100a-g) of the spectrally encoded image (12a-g) in the first spectral band (50a-g), wherein the spectrally encoded image (12a-g) is generated on a screen (118a-g) via projection onto the screen (118a; 118b; 118d-g) and/or is coupled into the screen (118a-g) sidewise and/or from below,

and wherein the spectrally encoded image (12a-g) is spatially at least substantially one-dimensional,

**characterized by** at least one second transformation step, in which at least one second original image parameter (22a-g) is encoded into at least one second image parameter (32a-g) that is dependent on the spectral coordinate (100a-g) of the spectrally encoded image (12a-g),

wherein the original image (10a-g) comprises at least one second component image (27a-g), which is encoded into a second basic image (37a-g) and comprises a second spectral band (52a-g),

wherein the second original image parameter (22a-g) is a light intensity distribution that is dependent on the spatial coordinate (112a-g) of the original image (10a-g) and extends over the second spectral band (52a-g), wherein the second original image parameter (22a-g) forms an image line of the second component image (27a-g) of the original image (10a-g),

wherein the second image parameter (32a-g) is a light intensity distribution that is dependent on the spectral coordinate (100a-g) of the spectrally encoded image (12a-g) in the second spectral band (52a-g),

wherein, at least in the first transformation step and/or at least in the second transformation step, the original image parameter (22a; 22b; 22d-g) is translated into the image parameter (32a; 32b; 32d-g) in a computer-based fashion,

wherein the first transformation step and the second transformation step are/is carried out at least with a spatial light modulator (330d-f), for which purpose light from a light source (326d-f) is split up spectrally by at least one dispersive element (60d; 60e) and/or is filtered spectrally by a rainbow filter (342f),

said light being imaged onto the spatial light modulator (330d-f) for a further modulation according to the spectrally encoded image (12a; 12b; 12d-g) that is to be generated,

and thus the spectrally encoded image (12a; 12b; 12d-g) is generated on the screen (118a-g) as a superposition of different basic images (36a; 36b; 36d-g; 37a; 37b; 37d-g).

3. A method for decoding a spectrally encoded image (12a-g) for the purpose of generating a copy image (14a-g) of an original image (10a-g), with at least one first transformation step, in which at least one first copy image parameter (40a-g) is decoded from at least one first image parameter (30a-g) which is dependent on at least one spectral coordinate (100a-g) of the spectrally encoded image (12a-g),

wherein the copy image (14a-g) of the original image (10a-g) comprises a first elementary image (46a-g) comprising a first spectral band (50a-g) and comprising at least the first copy image parameter (40a-g),

wherein the first copy image parameter (40a-g) is a light intensity distribution that is dependent on a spatial coordinate (114a-g) of the copy image (14a-g) and extends over the first spectral band (50a-g),

wherein the first copy image parameter (40a-g) forms an image line of the first elementary image (46a-g),

and wherein the first image parameter (30a-g) is a light intensity distribution that is dependent on the spectral coordinate (100a-g) of the spectrally encoded image (12a-g) in the first spectral band (50a-g),

and thus the spectrally encoded image (12a-g) is spatially at least substantially one-dimensional,

**characterized by** at least one second transformation step, in which at least one second copy image parameter (42a-g) is decoded from at least one second image parameter (32a-g) that is dependent on the spectral coordinate (100a-g) of the spectrally encoded image (12a-g),

wherein the copy image (14a-g) of the original image (10a-g) comprises a second elementary image (47a-g) comprising a second spectral band (52a-g) and comprising at least the second copy image parameter (42a-g),

wherein the second copy image parameter (42a-g) is a light intensity distribution that is dependent on the spatial coordinate (114a-g) of the copy image (14a-g) and extends over the second spectral band (52a-g),

wherein the second copy image parameter (42a-g) forms an image line of the second elementary image (47a-g),

wherein the second image parameter (32a-g) is a light intensity distribution that is dependent on the spectral coordinate (100a-g) of the spectrally encoded image (12a-g) in the second spectral band (52a-g),

wherein, at least in the first transformation step and/or at least in the second transformation step, the image parameter (32a-g) is translated into the copy image parameter (14a-g) via dispersion,

wherein the first transformation step and/or the second transformation step are/is carried out with at least one dispersive element (60a-g, 62a-g, 64a-g),

wherein the first transformation step and the second transformation step are carried out with different dispersive elements (60a-g, 62a-g),

wherein the dispersive elements (60a-g, 62a-g, 64a-g) comprise at least one optical grating and/or at least one prism,

wherein the dispersive elements (60a-g, 62a-g, 64a-g) have different spatial orientations relative to the original image (10a-g) and/or to the spectrally encoded image (12a-g), and/or wherein the dispersive elements (60a-g, 62a-g, 64a-g) are made of different materials and/or have different geometries, and/or wherein positions of the dispersive elements (60a, 62a, 64a; 60b, 62b, 64b; 60d-g, 62d-g, 64d-g) relative to each other are adapted in any required fashion,

wherein, in the method for decoding the spectrally encoded image (12a-g), the dispersive elements (60a-g, 62a-g, 64a-g) are arranged between a screen (118a-g) and a viewer,

wherein the light on the screen (118a-g) corresponds to stacks of different image strips having different spectral colors;

wherein, upon viewing through the different dispersive elements (60a-g, 62a-g, 64a-g), sheared stacks result,

wherein, due to a partial superposition of the sheared stacks, the lined-up image strips are superposed to form elementary images (46a-g, 47a-g) of the copy image (14a-g) of the original image (10a-g),

and thus the copy image (14a-g) of the original image (10a-g) is generated via a superposition of elementary images (46a-g, 47a-g).

4. The method according to claim 1 or 3, **characterized in that** the dispersive elements (60a, 62a, 64a) are arranged at least partially immediately one behind the other one.

5. The method according to one of claims 1, 3 or 4, **characterized in that** the dispersive elements (60b, 62b, 64b) are arranged at least partially side by side.

6. The method according to one of the preceding claims, **characterized in that** the first transformation step is carried out in a different spectral band (50a-g) than the second transformation step.

7. The method according to claim 6, **characterized by** at least one third transformation step, which is carried out in a different spectral band (54a-g) than the first and second transformation steps.

8. The method according to one of the preceding claims, **characterized in that** the different spectral bands (50a-g, 52a-g, 54a-g) each correspond to a respective basic color.

9. The method according to one of the preceding claims, **characterized in that** the spectrally encoded image (12a) comprises a plurality of basic images (36a, 37a, 38a) with different basic colors, which together encode the original image (10a) at least approximately in a true-color fashion.

10. An encoding device for the purpose of generating a spectrally encoded image (12a-g) from an original image (10a-g) by a method at least according to claim 1, with at least one encoding unit (102a-g) designed for an encoding of at least one first original image parameter (20a-g) into at least one first image parameter (30a-g) that is dependent on at least one spectral coordinate (100a-g) of the spectrally encoded image (12a-g), wherein the original image (10a-g) comprises at least one first component image (26a-g), which is encoded into a first basic image (36a-g) and comprises a first spectral band (50a-g),

wherein the first original image parameter (20a-g) is a light intensity distribution that is dependent on a spatial coordinate (112a-g) of the original image (10a-g) and extends over the first spectral band (50a-g),

wherein the first original image parameter (20a-g) forms an image line of the first component image (26a-g) of the original image (10a-g), and

wherein the first image parameter (30a-g) is a light intensity distribution that is dependent on the spectral coordinate (100a-g) of the spectrally encoded image (12a-g) in the first spectral band (50a-g),

**characterized in that** the encoding unit (102a-g) is designed for an encoding of a second original image parameter (22a-g) into at least one second image parameter (32a-g) which is dependent on the spectral coordinate (100a-g) of the spectrally encoded image (12a-g),

wherein the original image (10a-g) comprises at least one second component image (27a-g), which is encoded into a second basic image (37a-g) and comprises a second spectral band (52a-g),

wherein the second original image parameter (22a-g) is a light intensity distribution that is dependent on the spatial coordinate (112a-g) of the original image (10a-g) and extends over the second spectral band (52a-g),

wherein the second original image parameter (22a-g) forms an image line of the second component image (27a-g) of the original image (10a-g), and

wherein the second image parameter (32a-g) is a light intensity distribution that is dependent on the spectral coordinate (100a-g) of the spectrally encoded image (12a-g) in the second spectral band (52a-g),

wherein the encoding device (106a-g) comprises at least one first dispersive element (60a, 62a, 64a; 60b, 62b, 64b; 60d-g, 62d-g, 64d-g) with at least one optical grating and/or with at least one prism, and comprises at least one second dispersive element (60a, 62a, 64a; 60b, 62b, 64b; 60d-g, 62d-g, 64d-g) differing from the first dispersive element (60a, 62a, 64a; 60b, 62b, 64b; 60d-g, 62d-g, 64d-g), as a result of which the spectrally encoded image (12a; 12b; 12d-g) is generated as a superposition of different basic images (36a; 36b; 36d-g, 37a; 37b; 37d-g), and wherein the encoding unit (102a-g) comprises a screen (118a-g), onto which the spectrally encoded image (12a-g) is projected and/or into which the spectrally encoded image (12a-g) is coupled sidewise and/or from below.

11. An encoding device for the purpose of generating a spectrally encoded image (12a-g) from an original image (10a-g) by a method at least according to claim 2, with at least one encoding unit (102a-g) designed for an encoding of at least one first original image parameter (20a-g) into at least one first image parameter (30a-g) that is dependent on at least one spectral coordinate (light wavelength, 100a-g) of the spectrally encoded image (12a-g),

wherein the original image (10a-g) comprises at least one first component image (26a-g), which is encoded into a first basic image (36a-g) and comprises a first spectral band (50a-g),

wherein the first original image parameter (20a-g) is a light intensity distribution that is dependent on a spatial coordinate (112a-g) of the original image (10a-g) and extends over the first spectral band (50a-g),

wherein the first original image parameter (20a-g) forms an image line of the first component image (26a-g) of the original image (10a-g), and

wherein the first image parameter (30a-g) is a light intensity distribution that is dependent on the spectral coordinate (100a-g) of the spectrally encoded image (12a-g) in the first spectral band (50a-g),

**characterized in that** the encoding unit (102a-g) is designed for an encoding of a second original image parameter (22a-g) into at least one second image parameter (32a-g) which is dependent on the spectral coordinate (100a-g) of the spectrally encoded image (12a-g),

wherein the original image (10a-g) comprises at least one second component image (27a-g), which is encoded into a second basic image (37a-g) and which comprises a second spectral band (52a-g),

wherein the second original image parameter (22a-g) is a light intensity distribution that is dependent on the spatial coordinate (112a-g) of the original image (10a-g) and extends over the second spectral band (52a-g),

wherein the second original image parameter (22a-g) forms an image line of the second component image (27a-g) of the original image (10a-g), and wherein the second image parameter (32a-g) is a light intensity distribution that is dependent on the spectral coordinate (100a-g) of the spectrally encoded image (12a-g) in the second spectral band (52a-g),

wherein the encoding device (106a-g) comprises at least one spatial light modulator (330d-f), at least one light source (326d-f) and at least one dispersive element (60d; 60e) and/or at least one rainbow filter (342f),

wherein light from the light source (326d-f) is spectrally split up by means of the dispersive element (60d; 60e) and/or is spectrally filtered by means of the rainbow filter (342f),

wherein from this light the basic images (36a; 36b; 36d-g, 37a; 37b; 37d-g) are generated by means of the spatial light modulator (330d-f),

wherein the spectrally encoded image (12a; 12b; 12d-g) is generated as a superposition of the different basic images (36a; 36b; 36d-g, 37a; 37b; 37d-g),

and wherein the encoding unit (102a-g) comprises a screen (118a-g), onto which the spectrally encoded image (12a-g) is projected and/or into which the spectrally encoded image (12a-g) is coupled sidewise and/or from below.

12. A decoding device for the purpose of generating a copy image (14a-g) of an original image (10a-g) from a spectrally encoded image (12a-g) by a method at least according to claim 1 or 2, with at least one decoding unit (104a-g) designed for a decoding of at least one first copy image parameter (40a-g) from at least one first image parameter (30a-g) that is dependent on at least one spectral coordinate (100a-g) of the spectrally encoded image (12a-g), wherein the copy image (14a-g) of the original image (10a-g) comprises a first elementary image (46a-g) comprising a first spectral band (50a-g) and comprising at least the first copy image parameter (40a-g),

wherein the first copy image parameter (40a-g) is a light intensity distribution that is dependent on a spatial coordinate (114a-g) of the copy image (14a-g) and extends over the first spectral band (50a-g),

wherein the first copy image parameter (40a-g) forms an image line of the first elementary image (46a-g),

and wherein the first image parameter (30a-g) is a light intensity distribution that is dependent on the spectral coordinate (100a-g) of the spectrally encoded image (12a-g) in the first spectral band (50a-g), **characterized in that** the decoding unit (104a-g) is designed for a decoding of at least one second copy image parameter (42a-g) from at least one second image parameter (32a-g) that is dependent on the spectral coordinate (100a-g) of the spectrally encoded image (12a-g), wherein the copy image (14a-g) of the original image (10a-g) comprises a second elementary image (47a-g) comprising a second spectral band (52a-g) and comprising at least the second copy image parameter (42a-g), wherein the second copy image parameter (42a-g) is a light intensity distribution that is dependent on the spatial coordinate (114a-g) of the copy image (14a-g) and extends over the second spectral band (52a-g), wherein the second copy image parameter (42a-g) forms an image line of the second elementary image (47a-g),

and wherein the second image parameter (32a-g) is a light intensity distribution that is dependent on the spectral coordinate (100a-g) of the spectrally encoded image (12a-g) in the second spectral band (52a-g), wherein the decoding device (108a-g) comprises at least one dispersive element (60a-g, 62a-g, 64a-g),

wherein the decoding device (108a-g) comprises at least one second dispersive element (60a-g, 62a-g, 64a-g) differing from the first dispersive element (60a-g, 62a-g, 64a-g), as a result of which the superposition of elementary images (46a-g, 47a-g) generates the copy image (14a-g) of the original image (10a-g),

wherein the dispersive elements (60a-g, 62a-g, 64a-g) comprise at least one optical grating and/or at least one prism,

wherein the dispersive elements (60a-g, 62a-g, 64a-g) have different spatial orientations relative to the original image (10a-g) and/or to the spectrally encoded image (12a-g), and/or wherein the dispersive elements (60a-g, 62a-g, 64a-g) are made of different materials and/or have different geometries, and/or wherein positions of the dispersive elements (60a, 62a, 64a; 60b, 62b, 64b; 60d-g, 62d-g, 64d-g) relative to each other are adaptable as required.

13. An image-generating system, in particular a display, a head-up display, or a projector system, with at least one encoding device (106a-g) according to claim 10 or 11 and with at least one decoding device (108a-g) according to claim 12.


**Revendications**

1. Procédé pour la génération d'une image en codage spectral (12a-g) à partir d'une image originale (10a-g), avec au moins une première étape de transformation, dans laquelle au moins un premier paramètre d'image originale (20a-g) est encodé dans au moins un premier paramètre d'image (30a-g) qui est dépendant d'au moins une coordonnée spectrale (100a-g) de l'image en codage spectral (12a-g),

l'image originale (10a-g) comprenant au moins une première image composante (26a-g) qui est encodée dans une première image basique (36a-g) et qui comporte une première bande spectrale (50a-g),

le premier paramètre d'image originale (20a-g) étant une distribution d'intensité lumineuse qui est dépendante d'une coordonnée de position (112a-g) de l'image originale (10a-g) et qui s'étend à travers la première bande spectrale (50a-g),

le premier paramètre d'image originale (20a-g) formant une ligne d'image de la première image composante (26a-g) de l'image originale (10a-g),

et le premier paramètre d'image (30a-g) étant une distribution d'intensité lumineuse qui est dépendante de la coordonnée spectrale (100a-g) de l'image en codage spectral (12a-g) dans la première bande spectrale (50a-g),

l'image en codage spectral (12a-g) étant générée sur un écran (118a-g) par le biais d'une projection sur l'écran (118a ; 118b ; 118d-g) et/ou étant couplée dans l'écran latéralement et/ou d'en bas,

et l'image en codage spectral (12a-g) étant spatialement au moins sensiblement unidimensionnelle,

**caractérisé par**

au moins une deuxième étape de transformation, dans laquelle au moins un deuxième paramètre d'image originale (22a-g) est encodé dans au moins un deuxième paramètre d'image (32a-g) qui est dépendant de la coordonnée spectrale (100a-g) de l'image en codage spectral (12a-g), l'image originale (10a-g) comprenant au moins une deuxième image composante (27a-g), qui est encodée dans une deuxième image basique (37a-g) et qui comporte une deuxième bande spectrale (52a-g),

le deuxième paramètre d'image originale (22a-g) étant une distribution d'intensité lumineuse s'étendant à travers la deuxième bande spectrale (52a-g),

le deuxième paramètre d'image originale (22a-g) formant une ligne d'image de la deuxième image composante (27a-g) de l'image originale (10a-g),

le deuxième paramètre d'image (32a-g) étant une distribution d'intensité lumineuse qui est dépendante de la coordonnée spectrale (100a-g) de l'image en codage spectral (12a-g) dans la deuxième bande spectrale (52a-g),

où au moins dans la première étape de transformation et au moins dans la deuxième étape de transformation le paramètre d'image originale (22a ; 22b ; 22d-g) est traduit dans le paramètre d'image (32a ; 32b ; 32d-g) via dispersion,

où la première étape de transformation et la deuxième étape de transformation sont implémentées avec des éléments dispersifs différents (60a, 62a, 64a ; 60b, 62b, 64b ; 60d-g, 62d-g, 64d-g) qui comprennent au moins un réseau optique et/ou au moins un prisme,

en sorte que l'image en codage spectral (12a ; 12b ; 12d-g) soit générée comme superposition d'images basiques différentes (36a ; 36b ; 36d-g, 37a ; 37b ; 37d-g).

**2.** Procédé pour la génération d'une image en codage spectral (12a-g) à partir d'une image originale (10a-g), avec au moins une première étape de transformation, dans laquelle au moins un premier paramètre d'image originale (20a-g) est encodé dans au moins un premier paramètre d'image (30a-g) qui est dépendant d'au moins une coordonnée spectrale (longueur d'onde lumineuse, 100a-g) de l'image en codage spectral (12a-g), l'image originale (10a-g) comprenant au moins une première image composante (26a-g) qui est encodée dans une première image basique (36a-g) et comporte une première bande spectrale (50a-g),

le premier paramètre d'image originale (20a-g) étant une distribution d'intensité lumineuse qui est dépendante d'une coordonnée de position (112a-g) de l'image originale (10a-g) et qui s'étend à travers la première bande spectrale (50a-g),

le premier paramètre d'image originale (20a-g) formant une ligne d'image de la première image composante (26a-g) de l'image originale (10a-g),

et le premier paramètre d'image (30a-g) étant une distribution d'intensité lumineuse qui est dépendante de la coordonnée spectrale (100a-g) de l'image en codage spectral (12a-g) dans la première bande spectrale (50a-g),

l'image en codage spectral (12a-g) étant générée sur un écran (118a-g) par le biais d'une projection sur l'écran (118a ; 118b ; 118d-g) et/ou étant couplée dans l'écran latéralement et/ou d'en bas,

et l'image en codage spectral (12a-g) étant spatialement au moins sensiblement unidimensionnelle,

**caractérisé par**

au moins une deuxième étape de transformation, dans laquelle au moins un deuxième paramètre d'image originale (22a-g) est encodé dans au moins un deuxième paramètre d'image (32a-g) qui est dépendant de la coordonnée spectrale (100a-g) de l'image en codage spectral (12a-g), l'image originale (10a-g) comprenant au moins une deuxième image composante (27a-g), qui est encodée dans une deuxième image basique (37a-g) et qui comporte une deuxième bande spectrale (52a-g),

le deuxième paramètre d'image originale (22a-g) étant une distribution d'intensité lumineuse qui est dépendante de la coordonnée de position (112a-g) de l'image originale (10a-g) et qui s'étend à travers la deuxième bande spectrale (52a-g),

le deuxième paramètre d'image originale (22a-g) formant une ligne d'image de la deuxième image composante (27a-g) de l'image originale (10a-g),

le deuxième paramètre d'image (32a-g) étant une distribution d'intensité lumineuse qui est dépendante de la coordonnée spectrale (100a-g) de l'image en codage spectral (12a-g) dans la deuxième bande spectrale (52a-g),

où au moins dans la première étape de transformation et au moins dans la deuxième étape de transformation le paramètre d'image originale (22a ; 22b ; 22d-g) est traduit dans le paramètre d'image (32a ; 32b ; 32d-g) par support informatique,

où la première étape de transformation et la deuxième étape de transformation sont implémentées au moins avec un Spatial Light Modulator [modulateur spatial de lumière] (330d-f),

de la lumière d'une source de lumière (326d-f) étant soumise à une répartition spectrale moyennant au moins un élément dispersif (60d ; 60e) et/ou à une filtration spectrale moyennant un filtre arc-en-ciel (342f),

ladite lumière étant imagée sur le Spatial Light Modulator (330d-f) pour une modulation de plus selon l'image en codage spectral (12a ; 12b ; 12d-g) qui est à générer,

en sorte que l'image en codage spectral (12a ; 12b ; 12d-g) soit générée sur l'écran (118a-g) comme superposition d'images basiques différentes (36a ; 36b ; 36d-g, 37a ; 37b ; 37d-g).

**3.** Procédé pour le décodage d'une image en codage spectral (12a-g) pour la génération d'une image copiée (14a-g) d'une image originale (10a-g), avec au moins une première étape de transformation, dans laquelle au moins un premier paramètre d'image copiée (40a-g) est décodé d'au moins un premier paramètre d'image (30a-g) qui est dépendant d'au moins une coordonnée spectrale (100a-g) de l'image en codage spectral (12a-g),

l'image copiée (14a-g) de l'image originale (10a-g) comprenant une première image élémentaire (46a-g) qui comporte une première bande spectrale (50a-g) et comporte au moins le premier paramètre d'image copiée (40a-g),

le premier paramètre d'image copiée (40a-g) étant une distribution d'intensité lumineuse qui est dépendante d'une coordonnée de position (114a-g) de l'image copiée (14a-g) et qui s'étend à travers la première bande spectrale (50a-g),

le premier paramètre d'image copiée (40a-g) formant une ligne d'image de la première image élémentaire (46a-g), et le premier paramètre d'image (30a-g) étant une distribution d'intensité lumineuse qui est dépendante de la coordonnée spectrale (100a-g) de l'image en codage spectral (12a-g) dans la première bande spectrale (50a-g),

et l'image en codage spectral (12a-g) étant spatialement au moins sensiblement unidimensionnelle,

**caractérisé par**

au moins une deuxième étape de transformation, dans laquelle au moins un deuxième paramètre d'image copiée (42a-g) est décodé d'au moins un deuxième paramètre d'image (32a-g) qui est dépendant de la coordonnée spectrale (100a-g) de l'image en codage spectral (12a-g),

l'image copiée (14a-g) de l'image originale (10a-g) comprenant une deuxième image élémentaire (47a-g), qui comporte une deuxième bande spectrale (52a-g) et qui comporte au moins le deuxième paramètre d'image copiée (42a-g),

le deuxième paramètre d'image copiée (42a-g) étant une distribution d'intensité lumineuse qui est dépendante de la coordonnée de position (114a-g) de l'image copiée (14a-g) et qui s'étend à travers la deuxième bande spectrale (52a-g),

le deuxième paramètre d'image copiée (42a-g) formant une ligne d'image de la deuxième image élémentaire (47a-g), le deuxième paramètre d'image (32a-g) étant une distribution d'intensité lumineuse qui est dépendante de la coordonnée spectrale (100a-g) de l'image en codage spectral (12a-g) dans la deuxième bande spectrale (52a-g),

où au moins dans la première étape de transformation et au moins dans la deuxième étape de transformation le paramètre d'image (32a-g) est traduit dans le paramètre d'image copiée (40a-g) via dispersion,

où la première étape de transformation et la deuxième étape de transformation sont implémentées avec des éléments dispersifs différents (60a-g, 62a-g),

où les éléments dispersifs (60a-g, 62a-g, 64a-g) comprennent au moins un réseau optique et/ou au moins un prisme,

où les éléments dispersifs (60a-g, 62a-g, 64a-g) présentent des orientations spatiales différentes par rapport à l'image originale (10a-g) et/ou à l'image en codage spectral (12a-g) et/ou

où les éléments dispersifs (60a-g, 62a-g, 64a-g) sont produits de matériaux différents et/ou présentent des géométries différentes et/ou où des positions des éléments dispersifs (60a, 62a, 64a ; 60b, 62b, 64b ; 60d-g, 62d-g, 64d-g) l'une par rapport à l'autre sont adaptées au choix,

où dans le procédé pour le décodage de l'image en codage spectral (12a-g) les éléments dispersifs (60a-g, 62a-g, 64a-g) sont disposés entre un écran (118a-g) et un observateur,

où la lumière sur l'écran (118a-g) correspond aux piles des bandes d'image différentes ayant des couleurs spectrales différentes,

où en visionnant à travers des éléments dispersifs différents (60a-g, 62a-g, 64a-g) se produisent des piles transformées par transvection,

où en raison d'une superposition partielle des piles transformées par transvection les bandes d'image mises en rang se superposent pour former les images élémentaires (46a-g ; 47a-g) de l'image copiée (14a-g) de l'image originale (10a-g),

en sorte que l'image copiée (14a-g) de l'image originale (10a-g) soit générée par la superposition des images élémentaires (46a-g, 47a-g).

4. Procédé selon la revendication 1 ou 3, **caractérisé en ce que** les éléments dispersifs (60a, 62a, 64a) sont disposés au moins en partie l'un directement derrière l'autre.

5. Procédé selon l'une quelconque des revendications 1, 3 ou 4, **caractérisé en ce que** les éléments dispersifs (60b, 62b, 64b) sont disposés au moins en partie l'un à côté de l'autre.

6. Procédé selon l'une quelconque des revendications précédentes, **caractérisé en ce que** la première étape de transformation est implémentée dans une autre bande spectrale (50a-g) que la deuxième étape de transformation.

7. Procédé selon la revendication 6, **caractérisé par** au moins une troisième étape de transformation implémentée dans une autre bande spectrale (54a-g) que la première étape et la deuxième étape de transformation.

8. Procédé selon l'une quelconque des revendications précédentes, **caractérisé en ce que** chacune des bandes spectrales différentes (50a-g, 52a-g, 54a-g) corresponde à une couleur basique.

9. Procédé selon l'une quelconque des revendications précédentes, **caractérisé en ce que** l'image en codage spectral (12a) comporte plusieurs images basiques (36a, 37a, 38a) ayant des couleurs basiques différentes, qui ensemble encodent l'image originale (10a) au moins approximativement en couleurs vraies.

10. Dispositif de codage pour la génération d'une image en codage spectral (12a-g) à partir d'une image originale (10a-g) par un procédé au moins selon la revendication 1, avec au moins une unité de codage (102a-g) configurée pour un codage d'au moins un premier paramètre d'image originale (20a-g) dans au moins un premier paramètre d'image (30a-g) qui est dépendant d'au moins une coordonnée spectrale (100a-g) de l'image en codage spectral (12a-g), l'image originale (10a-g) comprenant au moins une première image composante (26a-g) qui est encodée dans une première image basique (36a-g) et qui comporte une première bande spectrale (50a-g), le premier paramètre d'image originale (20a-g) étant une distribution d'intensité lumineuse qui est dépendante d'une coordonnée de position (112a-g) de l'image originale (10a-g) et qui s'étend à travers la première bande spectrale (50a-g), le premier paramètre d'image originale (20a-g) formant une ligne d'image de la première image composante (26a-g) de l'image originale (10a-g) et le premier paramètre d'image (30a-g) étant une distribution d'intensité lumineuse qui est dépendante de la coordonnée spectrale (100a-g) de l'image en codage spectral (12a-g) dans la première bande spectrale (50a-g),
**caractérisé en ce que**
l'unité de codage (102a-g) est configurée pour un codage d'un deuxième paramètre d'image originale (22a-g) dans au moins un deuxième paramètre d'image (32a-g) qui est dépendant de la coordonnée spectrale (100a-g) de l'image en codage spectral (12a-g),
l'image originale (10a-g) comprenant au moins une deuxième image composante (27a-g), qui est encodée dans une deuxième image basique (37a-g) et qui comporte une deuxième bande spectrale (52a-g), le deuxième paramètre d'image originale (22a-g) étant une distribution d'intensité lumineuse qui est dépendante de la coordonnée spectrale (100a-g) de l'image en codage spectral (12a-g) et qui s'étend à travers la deuxième bande spectrale (52a-g), le deuxième paramètre d'image originale (22a-g) formant une ligne d'image de la deuxième image composante (27a-g) de l'image originale (10a-g) et le deuxième paramètre d'image (32a-g) étant une distribution d'intensité lumineuse qui est dépendante de la coordonnée spectrale (100a-g) de l'image en codage spectral (12a-g) dans la deuxième bande spectrale (52a-g), où le dispositif de codage (106a-g) comporte au moins un premier élément dispersif (60a, 62a, 64a ; 60b, 62b, 64b ; 60d-g, 62d-g, 64d-g) avec au moins un réseau optique et/ou avec au moins un prisme et/ou au moins un deuxième élément dispersif (60a, 62a, 64a ; 60b, 62b, 64b ; 60d-g, 62d-g, 64d-g) différant du premier élément dispersif (60a, 62a, 64a ; 60b, 62b, 64b ; 60d-g, 62d-g, 64d-g) avec au moins un réseau optique et/ou avec au moins un prisme, en sorte que l'image en codage spectral (12a ; 12b ; 12d-g) soit générée comme superposition d'images basiques différentes (36a ; 36b ; 36d-g, 37a ; 37b ; 37d-g), et où l'unité de codage (102a-g) comporte un écran (118a-g) sur lequel l'image en codage spectral (12a-g) est projetée et/ou dans lequel l'image en codage spectral (12a-g) est couplée latéralement et/ou d'en bas.

11. Dispositif de codage pour la génération d'une image en codage spectral (12a-g) à partir d'une image originale (10a-g) par un procédé au moins selon la revendication 2, avec au moins une unité de codage (102a-g) configurée pour un codage d'au moins un premier paramètre d'image originale (20a-g) dans au moins un premier paramètre d'image (30a-g) qui est dépendant d'au moins une coordonnée spectrale (longueur d'onde de lumière, 100a-g) de l'image en codage spectral (12a-g), l'image originale (10a-g) comprenant au moins une première image composante (26a-g) qui est encodée dans une première image basique (36a-g) et comporte une première bande spectrale (50a-g), le premier paramètre d'image originale (20a-g) étant une distribution d'intensité lumineuse qui est dépendante d'une coordonnée de position (112a-g) de l'image originale (10a-g) et qui s'étend à travers la première bande spectrale (50a-g), le premier paramètre d'image originale (20a-g) formant une ligne d'image de la première image composante (26a-g) de l'image originale (10a-g) et le premier paramètre d'image (30a-g) étant une distribution d'intensité lumineuse qui est dépendante de la coordonnée spectrale (100a-g) de l'image en codage spectral (12a-g) dans la première bande spectrale (50a-g),
**caractérisé en ce que**
l'unité de codage (102a-g) est configurée pour un codage d'un deuxième paramètre d'image originale (22a-g) dans au moins un deuxième paramètre d'image (32a-g) qui est dépendant de la coordonnée spectrale (100a-g) de l'image en codage spectral (12a-g),

l'image originale (10a-g) comprenant au moins une deuxième image composante (27a-g), qui est encodée dans une deuxième image basique (37a-g) et qui comporte une deuxième bande spectrale (52a-g),

le deuxième paramètre d'image originale (22a-g) étant une distribution d'intensité lumineuse qui est dépendante de la coordonnée de position (112a-g) de l'image originale (10a-g) et qui s'étend à travers la deuxième bande spectrale (52a-g),

le deuxième paramètre d'image originale (22a-g) formant une ligne d'image de la deuxième image composante (27a-g) de l'image originale (10a-g),

le deuxième paramètre d'image (32a-g) étant une distribution d'intensité lumineuse qui est dépendante de la coordonnée spectrale (100a-g) de l'image en codage spectral (12a-g) dans la deuxième bande spectrale (52a-g),

où le dispositif de codage (106a-g) comporte au moins un Spatial Light Modulator [modulateur spatial de lumière] (330d-f), au moins une source de lumière (326d-f) et au moins un élément dispersif (60d ; 60e) et/ou au moins un filtre arc-en-ciel (342f),

de la lumière de la source de lumière (326d-f) étant soumise à une répartition spectrale moyennant l'élément dispersif (60d ; 60e) et/ou à une filtration spectrale moyennant le filtre arc-en-ciel (342f),

où les images basiques (36a ; 36b ; 36d-g, 37a ; 37b ; 37d-g) sont générées de ladite lumière par le Spatial Light Modulator (330d-f),

où l'image en codage spectral (12a ; 12b ; 12d-g) est générée comme superposition des images basiques différentes (36a ; 36b ; 36d-g, 37a ; 37b ; 37d-g) et

où l'unité de codage (102a-g) comporte un écran (118a-g), sur lequel l'image en codage spectral (12a-g) est projetée et/ou dans lequel l'image en codage spectral (12a-g) est couplée latéralement et/ou d'en bas.

12. Dispositif de décodage pour la génération d'une image copiée (14a-g) d'une image originale (10a-g) à partir d'une image en codage spectral (12a-g) par un procédé au moins selon la revendication 1 ou 2,

avec au moins une unité de décodage (104a-g) configurée pour un décodage d'au moins un premier paramètre d'image copiée (40a-g) d'au moins un premier paramètre d'image (30a-g) qui est dépendant d'au moins une coordonnée spectrale (100a-g) de l'image en codage spectral (12a-g),

l'image copiée (14a-g) de l'image originale (10a-g) comprenant au moins une première image élémentaire (46a-g) qui comporte une première bande spectrale (50a-g) et comporte au moins le premier paramètre d'image copiée (40a-g),

le premier paramètre d'image copiée (40a-g) étant une distribution d'intensité lumineuse qui est dépendante d'une coordonnée de position (114a-g) de l'image copiée (14a-g) et qui s'étend à travers la première bande spectrale (50a-g),

le premier paramètre d'image copiée (40a-g) formant une ligne d'image de la première image élémentaire (46a-g), et le premier paramètre d'image (30a-g) étant une distribution d'intensité lumineuse qui est dépendante de la coordonnée spectrale (100a-g) de l'image en codage spectral (12a-g) dans la première bande spectrale (50a-g),

**caractérisé en ce que**

l'unité de décodage (104a-g) est configurée pour un décodage d'au moins un deuxième paramètre d'image copiée (42a-g) d'au moins un deuxième paramètre d'image (32a-g) qui est dépendant de la coordonnée spectrale (100a-g) de l'image en codage spectral (12a-g),

l'image copiée (14a-g) de l'image originale (10a-g) comprenant une deuxième image élémentaire (47a-g), qui comporte une deuxième bande spectrale (52a-g) et qui comporte au moins le deuxième paramètre d'image copiée (42a-g),

le deuxième paramètre d'image copiée (42a-g) étant une distribution d'intensité lumineuse qui est dépendante de la coordonnée de position (114a-g) de l'image copiée (14a-g) et qui s'étend à travers la deuxième bande spectrale (52a-g),

le deuxième paramètre d'image copiée (42a-g) formant une ligne d'image de la deuxième image élémentaire (47a-g) et

le deuxième paramètre d'image (32a-g) étant une distribution d'intensité lumineuse qui est dépendante de la coordonnée spectrale (100a-g) de l'image en codage spectral (12a-g) dans la deuxième bande spectrale (52a-g),

où l'unité de décodage (108a-g) comporte au moins un élément dispersif (60a-g, 62a-g, 64a-g),

où l'unité de décodage (108a-g) comporte au moins un deuxième élément dispersif (60a-g, 62a-g, 64a-g) différant du premier élément dispersif (60a-g, 62a-g, 64a-g), en sorte que la superposition d'images élémentaires (46a-g, 47a-g) génère l'image copiée (14a-g) de l'image originale (10a-g), où les éléments dispersifs (60a-g, 62a-g, 64a-g) comprennent au moins un réseau optique et/ou au moins un prisme,

où les éléments dispersifs (60a-g, 62a-g, 64a-g) présentent des orientations spatiales différentes par rapport à l'image originale (10a-g) et/ou à l'image en codage spectral (12a-g) et/ou

où les éléments dispersifs (60a-g, 62a-g, 64a-g) sont produits de matériaux différents et/ou présentent des géométries différentes et/ou où des positions des éléments dispersifs (60a, 62a, 64a ; 60b, 62b, 64b ; 60d-g, 62d-g, 64d-g) l'un par rapport à l'autre sont adaptées au choix.

13. Système de génération d'images, en particulier affichage, affichage tête haute ou système de projecteur, avec au moins un dispositif de codage (106a-g) selon la revendication 10 ou 11 et avec au moins un dispositif de décodage (108a-g) selon la revendication 12.

108a

110a

60a,62a,64a — 104a

106a

140a

102a

60a,62a,64a

12a

118a

Fig. 1

Fig. 2

Fig. 3

Fig. 4

Fig. 5a

Fig. 5b

Fig. 6a

Fig. 6b

Fig. 7a

Fig. 7b

Fig. 8a

Fig. 8b

Fig. 9a

Fig. 9b

Fig. 10a                                    Fig. 10b

61a 63a 65a 64a

62a

60a

66a 67a 68a 69a

Fig. 11

142b 60.1b
144b 62.1b
146b 64.1b

62.2b
64.2b
60.2b

Fig. 12a

Fig. 12b

62.3b 60.3b
64.3b

Fig. 12c

110c

104c,108c

322c

324c

102c,106c

12c

118c

320c

Fig. 13

106d

60d          330d          62d

12d,118d

328d          346d

326d          348d

Fig. 14

326e

340e

334e          106e

336e

338e

332e

Fig. 15

330f

106f

326f

60f

12f,118f

342f

Fig. 16

344g

Fig. 17

**IN DER BESCHREIBUNG AUFGEFÜHRTE DOKUMENTE**

**In der Beschreibung aufgeführte Patentdokumente**

- DE 102013022156 A1

**In der Beschreibung aufgeführte Nicht-Patentliteratur**

- **S. GRUSCHE.** Spectral synthesis provides two-dimensional videos on a one-dimensional screen with 360°-visibility and mirror-immunity. *Appl. Opt.,* 2014, vol. 53 (4), 674-84